# EUROPEAN PATENT SPECIFICATION

(11) **EP 4 590 959 B1**
(45) Date of publication and mention of the grant of the patent: **09.12.2026**
(21) Application number: 23790486.7
(22) Date of filing: 25.09.2023
(51) Int. Cl.: F03D 1/06, F03D 7/02

(54) **TURBINE BLADE WITH AUXILIARY DEFLECTOR**
TURBINENSCHAUFEL MIT HILFSDEFLEKTOR
AUBE DE TURBINE À DÉFLECTEUR AUXILIAIRE

(30) Priority: 23.09.2022 US 202263409479 P
(43) Date of publication of application: 30.07.2025
(73) Proprietor: SJK Energy Solutions, LLC, Ashton MD 20861 (US)
(72) Inventor: KANSTOROOM, Steven J., Ashton, Maryland 20861 (US); DE ARRIZ, Maximilian, Chestertown, Maryland 21620 (US); GALLIERA, Joseph M., Stamford, Vermont 05352 (US)
(74) Representative: Script Intellectual Property LLP
(86) International application number: PCT/US2023/033640
(87) International publication number: WO 2024/064411

(56) References cited:
- EP-A1- 2 757 258
- EP-A2- 2 589 797
- CN-A- 113 090 442
- US-A1- 2011 142 681

## Description

### CROSS REFERENCE TO RELATED APPLICATION

This application claims the benefit under 35 U.S.C. § 119(e) of the filing date of United States provisional patent application Serial No. 63/409,479 filed September 23, 2022.

### FIELD OF DISCLOSURE

This disclosure relates to improvements in performance in turbine blades for wind turbines and water turbines. In particular, this disclosure relates to turbine blade assemblies including one or more deflectors, which may be arranged as a single or multi-deflector assembly, either fixedly linked or operably (adjustably) coupled to an associated turbine blade and configured to increase the volume of fluid that passes over pressure and suction sides of the associated turbine blade and/or alter the fluid flow and resulting pressure distributions adjacent to the surfaces. An upstream, or pressure, surface of the deflector includes a concavity beginning at a trailing edge of the deflector and transitions to a convexity or straight section ending at a leading edge of the deflector. The deflector may be of a uniform thickness or variable thickness between its leading and trailing edges. Each deflector is arranged with its leading edge aft of the leading edge of the associated turbine blade relative to a direction of movement of the blade, and the trailing edge of at least a portion of the deflector may be positioned closer to the oncoming fluid flow (wind or water) than the trailing edge of the blade. One or more deflectors may be arranged on the pressure side, suction side, or both sides of each blade. One or more deflectors may span the entire length of the associated blade, or any portion thereof.

### BACKGROUND

Wind and water turbine blade designs are relatively unchanged over the recent past, with only fractional performance improvements over the past several decades. Consequently, the industry has resorted to making turbine blades larger to increase output. This causes manufacturing, shipping and installation problems with wind turbine blades weighing upwards of 40 tons each, and, in many cases, the blades require months to transport from their place of manufacture to their installation site. Up to a year of logistical planning for the transport of a single 32-ton blade is not uncommon. Moreover, the logistical complexities of transporting such blades from the point of manufacture to installation may in some cases result in wind turbine projects becoming economically unviable. In addition, despite enormous research and design efforts, the turbine industry has made only fractional improvements in blade performance over decades. Consequently, manufacturers have resorted to designing and producing ever larger rotor diameters with taller towers, thus exacerbating transportation, assembly, and public resistance to industrial scale wind turbine installation. Water turbine blade design has also been hampered by the lack of substantive performance improvements, thus limiting the locations for economically viable projects that could otherwise be reliably powered via continuous water flow. Documents considered during the patent prosecution are i.a.: CN 113 090 442 A, EP 2 589 797 A2, EP 2 757 258 A1 and US 2011/142681 A1.

### SUMMARY

The following presents a simplified summary in order to provide a basic understanding of some aspects described herein. This summary is not an extensive overview of the claimed subject matter. It is intended to neither identify key or critical elements of the claimed subject matter nor delineate the scope thereof. Its sole purpose is to present some concepts in a simplified form as a prelude to the more detailed description that is presented later.

Aspects of the disclosure are embodied in a rotor that may be part of a wind driven or water driven turbine and include a deflector that is located nearer the oncoming flow than the turbine blade to which it is attached, and which deflects additional fluid flow over such turbine blade.

According to other aspects, the deflector may be configured with wind turbines, water turbines, including without limitation, hydrokinetic axial flow turbines, of differing axial arrangements, including without limitation, horizontal axis, inclined axis and vertical axis.

According to other aspects, the deflector may be configured to span the entire length of an associated rotor blade, including the blade root.

According to other aspects, the deflector may be configured to affect the entire airfoil or hydrofoil portion of an associated wind or water rotor blade.

According to other aspects, the deflector may be configured to affect a portion of the airfoil or hydrofoil portion of a wind or water rotor blade.

According to other aspects, the deflector may be fixedly linked to a wind or water rotor blade.

According to other aspects, the deflector may be adjustably connected to a wind or water turbine blade whereby the deflector's angle of attack may be varied.

According to other aspects, the deflector may include leading edges, trailing edges, tip-end edges, and root-end edges, each of the edges having differing geometries or similar geometries.

According to other aspects, the shape of the deflector's perimeter around its leading edge, tip end, trailing edge, and hub end may be generally quadrilateral or trapezoidal.

According to other aspects, the deflector's thickness may be generally uniform.

According to other aspects, the deflector may have a varying thickness.

According to other aspects, the deflector may include an integral airfoil portion.

According to other aspects, the deflector may include an integral hydrofoil portion.

According to other aspects, the deflector may twist along its spanwise length.

According to other aspects, the deflector may have a trailing concavity, on the pressure surface, and may have a corresponding convexity on the suction surface, near its trailing edge.

According to other aspects, the geometry, such as the radius of curvature and/or arc-length, of the trailing concavity may vary from the tip-end of the deflector to the hub-end of the deflector.

According to other aspects, the deflector may have a leading convexity, on the pressure surface, and may have a corresponding concavity on the suction surface, near its leading edge.

According to other aspects, the deflector may have a leading convexity near its leading edge.

According to other aspects, the deflector may have a reflexed mean camber line.

According to other aspects, the geometry, such as the radius of curvature and/or arc-length, of the leading convexity may vary from the tip-end of the deflector to the hub-end of the deflector.

According to other aspects, the deflector leading edge may have a geometry that generally follows the trailing edge of the respective blade.

According to other aspects, the deflector may have a chord that lies external to a profile of the deflector.

According to other aspects, the deflector may have a curved tip-end.

According to other aspects, the deflector may be positioned in the wake of the associated blade.

According to other aspects, the deflector may be positioned with its leading edge aft of the leading edge of the associated blade.

According to other aspects, the deflector may be skewed whereby the tip-end of the deflector is nearer the respective blade and the hub-end of the deflector is further from the respective blade.

According to other aspects, more than one deflector may be positioned nearer the flow than the respective blade.

According to other aspects, a deflector may be positioned further from the flow than the respective blade.

According to other aspects, a deflector may have fluid walls projecting from its pressure or suction surfaces.

According to other aspects, a deflector may be comprised of multiple sections that when assembled mirror a deflector that is manufactured as a monolithic structure.

According to other aspects, a deflector may be connected by a multi-part connector.

According to other aspects, a deflector may have a fixed angle of attack.

Other features and characteristics of the subject matter of this disclosure, as well as the methods of operation, functions of related elements of structure and the combination of parts, and economies of manufacture, will become more apparent upon consideration of the following description and the appended claims with reference to the accompanying drawings, all of which form a part of this specification, wherein like reference numerals designate corresponding parts in the various figures.

### BRIEF DESCRIPTION OF THE DRAWINGS

The accompanying drawings, which are incorporated herein and form part of the specification, illustrate various embodiments of the subject matter of this disclosure. In the drawings, like reference numbers indicate identical or functionally similar elements.
FIG. **1A** is an isometric view of a three bladed wind turbine.
FIG. **1B** is a cropped side isometric view of a wind turbine nacelle, with a broken-out section revealing a gearbox and a generator.
FIG. **2A** is a front isometric view of a wind turbine blade with detail views of the blade profile near the tip, center, and hub end of the blade.
FIG. **2B** is a rear isometric view of a wind turbine blade.
FIG. **2C** is a cross-sectional view of a typical wind turbine blade, near the hub end, revealing internal components.
FIG. **2D** is a schematic profile view of a typical wind turbine blade showing relative air flows and lift and drag forces on the blade.
FIG. **2E** is a profile view of a section of a typical wind turbine blade near the tip end showing beneficial areas on pressure and suction sides of the blade.
FIG. **2F** is a profile view of a section of a typical wind turbine blade near the hub end showing the beneficial areas on the pressure and suction sides of the blade, with a magnified detail view of the trailing edge with a greater angle of attack that has created an additional beneficial area.
FIG. **2G** is a schematic profile view of a section of a typical wind turbine blade showing the slope angles and types of forces on the beneficial areas on the pressure and suction sides of the blade, with a magnified detail view of a suction side slope angle.
FIG. **3** is an isometric view of three bladed water turbine with a broken-out section of the nacelle revealing a gearbox and generator assembly.
FIG. **4A** is a front isometric view of a typical water turbine blade with detail views of the blade profile near the tip, center, and hub end of the blade.
FIG. **4B** is a rear isometric view of a water turbine blade.
FIG. **5A** is a front view of a wind turbine with deflectors coupled to the turbine blades and positioned to affect an entire airfoil section of each blade.
FIG. **5B** is a front view of a rotor comprised of deflector/blade assemblies with dashed lines depicting the boundaries of an outer swept volume, a transitional swept volume, and a common swept volume, with a magnified side detail schematic broken view depicting the volumes relative to the oncoming fluid flow, and space between the areas. For clarity, the detail view is not drawn to scale and the blade and deflector are not shown within their respective 3-dimensional spaces.
FIG. **6** is a front view of a wind turbine with partial-span deflectors coupled to the turbine blades and positioned to affect a portion of the airfoil section of each blade.
FIG. **7** is a front view of a water turbine with deflectors coupled to the turbine blades and positioned to affect an entire hydrofoil section of each blade.
FIG. **8** is a front view of a water turbine with partial-span deflectors coupled to the turbine blades and positioned to affect a portion of the hydrofoil section of each blade.
FIG. **9A** is front isometric view of a deflector, excluding any structure(s) connecting the deflector to the blade, with magnified (i) cross-sectional views of the tip end and center section, (ii) end view of the hub end, and (iii) front cropped detail view of tip end.
FIG. **9B** is a rear view of a deflector/blade assembly, showing the deflector leading edge curvature matching the blade trailing edge curvature, excluding any structure(s) connecting the deflector to the blade.
FIG. **9C** is a cross-sectional view of the tip end of an alternate embodiment of a deflector, with an exaggerated convexity to more easily show the convexed geometry.
FIG. **9D** is a hub end view of an alternate embodiment of a deflector with an exaggerated convexity to more easily show the convexed geometry.
FIG. **9E** is a front view of a deflector/blade assembly with five detail profile views starting at the deflector tip end and ending at the deflector hub end.
FIG. **9F** is a side view of deflector and blade profiles, at the deflector tip end, that shows deflector angle of attack and position relative to the blade.
FIG. **9G** is a side view of deflector and blade profiles, at twenty-five percent of the distance from the deflector tip end, that shows deflector angle of attack and position relative to the blade.
FIG. **9H** is a side view of deflector and blade profiles, at the midway point between the deflector tip end and hub end, that shows deflector angle of attack and position relative to the blade.
FIG. **9I** is a side view of deflector and blade profiles, at twenty-five percent of the distance from the deflector hub end, that shows deflector angle of attack and position relative to the blade.
FIG. **9J** is a side view of deflector and blade profiles at the deflector hub end, that shows deflector angle of attack and position relative to the blade.
FIG. **9K** is a rear view of an embodiment of a deflector/blade assembly with fixedly linked connector assemblies and related rotational paths of travel about a rotor axis of rotation.
FIG. **9L** is a rear cropped magnified view of deflector/blade assembly and a single fixedly linked connector assembly with a magnified detail rear isometric view of connector assembly curved leading and trailing edges that work with rotational flow.
FIG. **9M** is a side view of a fixed deflector connector assembly including a deflector-end flange, connector tube, blade end flange with a (i) cross-sectional detail view of connector tube leading and trailing edges with respect to rotational flow, and (ii) magnified top cross-sectional detail view of the connector tube leading and trailing edges with respect to the deflector/blade assembly in a static position.
FIG. **9N** is a cropped hub-end side view of a deflector/blade assembly with a cross-sectional view which reveals an embodiment of a connector assembly fixedly linked within a deflector and blade.
FIG. **10A** is a side view of flow trajectory lines impacting a blade pressure surface, without a deflector, while the blade is in a static position and exposed to a 2.0 m/s wind.
FIG. **10B** is a side view of flow trajectory lines impacting a blade pressure surface and a deflector of a deflector/blade assembly, while the deflector/blade assembly is in a static position and exposed to in a 2.0 m/s wind.
FIG. **10C** is a side view of a pressure plot around upstream and downstream surfaces of the blade of FIG. **10A****.**
FIG. **10D** is a side view of a pressure plot around upstream and downstream surfaces of the deflector/blade assembly of FIG. **10B****.**
FIG. **10E** is a magnified side isometric view of a section of the blade of FIG. **10A** showing surface pressures on the upstream and downstream surfaces of the section and in which pressure regions are displayed on the outside of the upstream surface and on the inside of the downstream surface.
FIG. **10F** is a magnified side isometric view of a section of the blade of FIG. **10B** (the deflector is not shown in the figure) showing surface pressures on the pressure and suction surfaces of the section.
FIG. **11A** is a side view of apparent velocity flow trajectory lines around a section of blade surfaces near the tip of a blade rotating in a 3.5 m/s wind, without the benefit of a deflector.
FIG. **11B** is a side view of apparent velocity flow trajectory lines around sections of blade and deflector surfaces near the tip of a deflector/blade assembly rotating in a 3.5 m/s wind, with the benefit of a deflector, including illustrative high and low pressure regions.
FIG. **11C** is a side view of a pressure plot around upstream and downstream surfaces of the blade of FIG. **11A**.
FIG. **11D** is a side view of a pressure plot around upstream and downstream surfaces of the deflector/blade assembly of FIG. **11B****.**
FIG. **11E** is a front view showing an upstream surface of a blade, without the benefit of a deflector, with pressure regions and associated fluid pressures, shown in a 3.5 m/s wind, with a magnified detail-profile view of the blade near the tip end.
FIG. **11F** is a front view showing an upstream surface of the blade of a deflector/blade assembly (but with the deflector not shown in the figure), with pressure regions and associated fluid pressures, shown in a 3.5 m/s wind.
FIG. **11G** is a rear view showing a downstream surface of a blade, without the benefit of a deflector, with pressure regions and associated fluid pressures, shown in a 3.5 m/s wind.
FIG. **11H** is a rear view of showing a downstream surface of the blade of a deflector/blade assembly (but with the deflector not shown in the figure), with pressure regions and associated fluid pressures, shown in a 3.5 m/s wind.
FIG. **11I** is a magnified side isometric view of section "111" of the blade of FIGS. **11E** and **11G** showing surface pressures on the upstream and downstream surfaces of the section.
FIG. **11J** is a magnified side isometric view of section "11J" of the blade of FIGS. **11F** and **11H** (the deflector is not shown in the figure) showing surface pressures on the pressure and suction surfaces of the section.
FIG. **12A** is a side view of a pressure plot around a section of blade surfaces near the tip of a blade rotating in a 13 m/s wind, without the benefit of a deflector.
FIG. **12B** is a side view of a pressure plot around sections of blade and deflector surfaces near the tip of a deflector/blade assembly rotating in a 13 m/s wind, with the benefit of a deflector.
FIG. **12C** is a front view showing an upstream surface of a blade, without the benefit of a deflector, with pressure regions and associated fluid pressures shown in a 13 m/s wind, with a magnified detail profile view of the blade near the tip end.
FIG. **12D** is a front view showing an upstream surface of the blade of a deflector/blade assembly including a deflector (but with the deflector not shown in the figure), with pressure regions and associated fluid pressures, shown in a 13 m/s wind.
FIG. **12E** is a rear view showing a downstream surface of a blade, without the benefit of a deflector, with pressure regions and related fluid pressures shown in a 13 m/s wind.
FIG. **12F** is a rear view showing a downstream surface of the blade of a deflector/blade assembly including a deflector (but with the deflector not shown in the figure), with pressure regions and associated fluid pressures, shown in a 13 m/s wind.
FIG. **12G** is a magnified side isometric view of section "12G" of the blade of FIG. **12C** and **12E** showing surface pressures on the pressure (upstream) and suction (downstream) surfaces of the section.
FIG. **12H** is a magnified side isometric view of section "12H" of the blade of FIG. **12D** and **12F** (the deflector is not shown in the figure) showing surface pressures on the pressure and suction surfaces of the section.
FIG. **13A** is a profile view of a deflector/blade assembly showing the angle of attack of two deflector profiles, relative to a blade profile, with one deflector profile nearer the oncoming fluid flow than the blade profile on the pressure side of the blade and one deflector profile further from the oncoming fluid flow than the blade profile on the suction side of the blade.
FIG. **13B** is a profile view of a deflector/blade assembly showing the (i) angle of attack of two deflector profiles, relative to a blade profile, with one deflector profile nearer the oncoming fluid flow than the blade profile on the pressure side of the blade and one deflector profile further from the oncoming fluid flow than the blade profile on the suction side of the blade, and (ii) relative difference seen when maintaining the deflector angle of attack but moving both deflector profiles nearer to the oncoming fluid flow than as shown in FIG. **13A**.
FIG. **13C** is a broken front view of a deflector/blade assembly, excluding any structure(s) connecting the deflector to the blade, and highlighting the skew in the chordwise gap between the deflector leading edge at the tip and hub ends relative to the blade trailing edge. To increase clarity of the chordwise gap, this figure is not drawn to scale.
FIG. **13D** is a rear isometric view of a deflector/blade assembly, excluding any structure(s) connecting the deflector to the blade, and highlighting the horizontal skew in the gap between the deflector leading edge at the tip and hub ends relative to the blade trailing edge. To increase clarity of the horizontal skew, this figure is not drawn to scale.
FIG. **13E** is a profile view of a deflector/blade assembly showing the deflector located on the suction side of the blade.
FIG. **14A** is a front view of a partial-span deflector and blade assembly with an embodiment of fixed connector assemblies for retrofitting the partial-span deflector to a blade.
FIG. **14B** is a front cropped magnified view of a partial span deflector and blade assembly with an embodiment of fixed connector assemblies for retrofitting the partial-span deflector to a blade.
FIG. **14C** is a cropped side cross-sectional view of a partial-span deflector and blade assembly with an embodiment of fixed connector assemblies for retrofitting the partial-span deflector to a blade.
FIG. **14D** is a cropped side exploded isometric view of an embodiment of partial-span deflector to blade connector assembly, with the blade and deflector not shown.
FIG. **14E** is a cropped side isometric view of an embodiment of partial-span deflector to blade connector assembly, with the blade and deflector not shown.
FIG. **15** is front isometric view of a non-uniform thickness deflector, excluding any structure(s) connecting the deflector to the blade, with magnified detail (i) cross-sectional side view of the tip and center sections, and (ii) side view of the hub end.
FIG. **16A** is a front view of an embodiment of a deflector/blade assembly with a curved deflector tip end.
FIG. **16B** is a front cropped magnified view of an embodiment of a deflector/blade assembly with a curved deflector tip end.
FIG. **17A** is a front view of an embodiment of a deflector that includes an arced trailing edge near the tip end, superimposed over a deflector without an arced trailing edge near the tip end.
FIG. **17B** is a magnified detail tip end view of the arced trailing edge superimposed over a deflector without an arced trailing edge.
FIG. **17C** is a magnified detail cross-sectional view of the arced trailing edge at line C-C in FIG. **17A****,** superimposed over a deflector without an arced trailing edge.
FIG. **18A** is a front view of an embodiment of a deflector with walls that project from the upstream surface of the deflector.
FIG. **18B** is a cropped magnified isometric view of the deflector with walls that project from the upstream surface.
FIG. **19A** is a rear view of an embodiment of a multi-part deflector/blade assembly with fixedly linked connector assemblies with a cropped magnified detail rear view of a connection between two deflector sections, and a magnified cropped detail side cross-sectional view of a connection between two deflector sections.
FIG. **19B** is a side isometric view of a two-part deflector to blade connector assembly, with cropped magnified (i) detail isometric view of the connection between connector sections, and (ii) detail isometric exploded view the of connection between two connector sections.
FIG. **20A** is a rear isometric view of an embodiment of a deflector/blade assembly with variable angle connector assemblies.
FIG. **20B** is a side view of a deflector chord in five positions relative to the rotor plane of rotation and depicting four ranges of angle of attack of the deflector, starting with the deflector leading edge nearest to the oncoming fluid flow, to the deflector leading edge furthest from the oncoming fluid flow. To increase clarity of degrees of articulation, this figure is not drawn to scale and deflector profiles are not shown.
FIG. **20C** is a cropped rear isometric view of a deflector/blade assembly with a variable angle connector assembly, with the deflector in the fully retracted position (with its trailing edge furthest from the oncoming fluid flow), with a broken-out sections revealing motorized components and deflector to connector assembly connection.
FIG. **20D** is a cropped rear isometric view of the deflector/blade assembly with the variable angle connector assembly, with the deflector in the fully extended position (with its trailing edge furthest from the oncoming fluid flow), with a broken-out sections revealing motorized components and deflector to connector assembly connection.
FIG. **20E** is a broken rear view of the motor and related major drivetrain components of the variable angle connector assemblies located within a blade. The blade is not shown to reduce the complexity of the illustration.
FIG. **20F** is an exploded isometric view of a deflector-end of a cropped flexible rod assembly, with broken-out sections revealing (i) a cut-away view of the deflector, and (ii) internal details of a guide tube.
FIG. **20G** is an exploded isometric view of the flexible rod assembly used with variable angle connector assemblies with a broken-out section and cross-sectional views of internal details of the guide tube.
FIG. **20H** is a cropped magnified rear isometric view of a portion of the deflector variable angle connector assembly located within a blade, with a broken-out section revealing cross-sectional views of structural and guide tube components.
FIG. **20I** is a magnified isometric view of a guide tube assembly with a mated male keyed assembly.
FIG. **21A** is the side profile schematic showing the 10 points along the deflector chord illustrating exemplary **X** and **Y** dimensions for an embodiment of the deflector.
FIG. **21B** is a table of dimensions that corresponds to FIG. **21A****.**
FIG. **21C** is a side view of the deflector with cut lines that correspond to FIG. **21B****.**
FIG. **21D** is a table of deflector spanwise dimensions, measured from the deflector tip, that corresponds to tables in FIG. **21B** and FIG. **21C****.**
FIG. **22A** is an isometric view of a deflector and blade geometry coordinate system that corresponds to dimensional data table in FIG. **22B****.**
FIG. **22B** is a dimensional data table containing the data describing exemplary positioning and angling of the deflector relative to the blade and which corresponds to a simulated deflector/blade assembly described herein.

### DETAILED DESCRIPTION

Unless defined otherwise, all terms of art, notations and other technical terms or terminology used herein have the same meaning as is commonly understood by one of ordinary skill in the art to which this disclosure belongs.

References in the specification to "one embodiment," "an embodiment," a "further embodiment," "an exemplary embodiment," "some aspects," "a further aspect," "aspects," etc., indicate that the embodiment described may include a particular feature, structure, or characteristic, but every embodiment encompassed by this disclosure may not necessarily include the particular feature, structure, or characteristic. Moreover, such phrases are not necessarily referring to the same embodiment. Further, when a particular feature, structure, or characteristic is described in connection with an embodiment, such feature, structure, or characteristic is also a description in connection with other embodiments, whether or not explicitly described.

Unless otherwise indicated or the context suggests otherwise, as used herein, "a" or "an" means "at least one" or "one or more."

This description may use various terms describing relative spatial arrangements and/or orientations or directions in describing the position and/or orientation of a component, apparatus, location, feature, or a portion thereof or direction of movement, force, or other dynamic action. Unless specifically stated, or otherwise dictated by the context of the description, such terms, including, without limitation, top, bottom, above, below, under, on top of, upper, lower, left, right, in front of, behind, beneath, next to, adjacent, between, horizontal, vertical, diagonal, longitudinal, transverse, radial, axial, clockwise, counter-clockwise, etc., are used for convenience in referring to such component, apparatus, location, feature, or a portion thereof or movement, force, or other dynamic action represented in the drawings and are not intended to be limiting.

Unless otherwise indicated, or the context suggests otherwise, terms used herein to describe a physical and/or spatial relationship between a first component, structure, or portion thereof and a second component, structure, or portion thereof, such as, attached, connected, fixed, joined, linked, coupled, or similar terms or variations of such terms, shall encompass both a direct relationship in which the first component, structure, or portion thereof is in direct contact with the second component, structure, or portion thereof or there are one or more intervening components, structures, or portions thereof between the first component, structure, or portion thereof and the second component, structure, or portion thereof.

Furthermore, unless otherwise stated, any specific dimensions mentioned in this description are merely representative of an exemplary implementation of a device embodying aspects of the disclosure and are not intended to be limiting.

To the extent used herein, the terms "first" and "second" preceding the name of an element (e.g., a component, apparatus, location, feature, or a portion thereof or a direction of movement, force, or other dynamic action) are used for identification purposes to distinguish between similar elements, and are not intended to necessarily imply order, nor are the terms "first" and "second" intended to preclude the inclusion of additional similar elements. Furthermore, use of the term "first" preceding the name of an element (e.g., a component, apparatus, location, feature, or a portion thereof or a direction of movement, force, or other dynamic action) does not necessarily imply or require that there be additional, e.g., "second," "third," etc., such element(s).

As used herein, the term "fixedly linked" as used to refer to a physical arrangement between two or more items means that one item is attached or connected to another item in a manner precluding relative movement between the first item and the second item.

As used herein, the term "operably coupled" as used to refer to a physical arrangement between two or more items means that one item is attached or otherwise coupled to another item via structure(s) and/or mechanism(s) that enable and/or effect relative movement between the first item and the second item so that the position and/or the orientation of the first item with respect to the second item may be selectively (including automatically) altered.

As used herein, the terms "optional" and "optionally" or the term "may" (e.g., as in the phrase "may include," "may comprise," "may produce," "may provide," or similar phrases) mean that the subsequently described, component, structure, element, event, circumstance, characteristic, property, etc. may or may not be included or occur and that the description includes instances where the component, structure, element, event, circumstance, characteristic, property, etc. is included or occurs and instances in which it is not or does not.

As used herein, the terms "substantially" and "substantial" refer to a considerable degree or extent. When used in conjunction with, for example, an event, circumstance, characteristic, or property, the terms can refer to instances in which the event, circumstance, characteristic, or property occurs precisely as stated as well as instances in which the event, circumstance, characteristic, or property occurs to a close approximation, such as accounting for typical tolerance levels or variability of the embodiments described herein.

As used herein, the term "airfoil section" means a portion of a blade having a shape that generates differential pressures between opposed surfaces (lift) due to relative movement of air with respect to the airfoil section.

As used herein, "apparent velocity" or "apparent flow" (or, alternatively, ("effective velocity" or "effective flow") is the fluid flow, e.g., airflow, water flow, liquid-flow or gas flow, to which a rotor blade is exposed and is the vector sum of oncoming fluid flow and rotational flow induced by the rotation of a blade about a rotor axis of rotation.

As used herein, the term "bearing" refers to a component used to support and/or guide a rotating, oscillating, articulating or sliding shaft, pivot, wheel or assembly. Irrespective of the bearing described or shown, it may take on numerous forms, including, without limitation, sealed, unsealed, roller, ball, angular, needle, and thrust. However, unless otherwise specifically stated, when such term is used, the term indicates that the actual linkage or coupling take a variety of forms, which will be readily apparent to a person of ordinary skill.

As used herein, the terms "blade," "rotor blade," and "turbine blade" refer to any embodiment of a blade used on a fluid powered turbine, including without limitation, wind turbines and hydro turbines.

As used herein, the term "blade angle of attack" refers to the angle of the blade chord or blade chord line relative to a rotor plane of rotation at a given point along a blade span.

As used herein, the term "bushing" refers to a component used to serve as a guide for a rotating, sliding, articulating or otherwise moving component within it, and may take on numerous forms, includes without limitation, self-lubricating, metal-polymer composite, bronze wrapped, filament wound, and injection molded. However, unless otherwise specifically stated, when such term is used, the term indicates that the actual linkage or coupling take a variety of forms, which in certain instances will be readily apparent to a person of ordinary skill.

As used herein, the term "CAD model" refers to a virtual model of a part, or assemblage of parts, including without limitation, a rotor, blade, deflector or blade/deflector assembly, which was created using Computer-Aided Design (CAD).

As used herein, the term "chord line" refers to a line that passes through, the leading edge and trailing edge of a deflector or blade, is colinear to the chord and may extend beyond it. This term may be used as a reference position relative to a rotor plane of rotation at a given point along a blade or deflector span when describing a blade or deflector angle of attack.

As used herein, the term "chord" refers to the distance between the trailing edge and a point where the chord intersects the leading edge, sometimes shown as a line and/or used as a reference position relative to a rotor plane of rotation at a given point along a blade or deflector span. This term may be used when describing such distance in a deflector or a blade, or its angle of attack.

As used herein, the terms "computer," "computer-controlled," and like terms refer computing and control modules (e.g., system controller(s)), such as microprocessors, programmable logic controllers, embedded controllers, application specific integrated circuits (ASICS), and computers, configured to effect computational and/or control steps by receiving one or more input values, executing one or more algorithms stored on non-transitory machine-readable media (e.g., software) that provide instruction for manipulating or otherwise acting on or in response to the input values, and output one or more output values. Such outputs may be displayed or otherwise indicated to a user for providing information to the user, for example information as to the status of the instrument or of a process being performed thereby, or such outputs may comprise inputs to other processes and/or control algorithms and/or computers. Data input components comprise elements by which data is input for use by the control and computing hardware components. Such data inputs may comprise signals generated by computers, sensors or scanners, such as, position sensors, speed sensors, accelerometers, environmental (e.g., temperature and barometric pressure) sensors, motor encoders, barcode scanners, or RFID scanners, pressure sensors, as well as manual input elements, such as keyboards, stylus-based input devices, touch screens, microphones, switches, manually-operated scanners, etc. Data inputs may further include data retrieved from memory. Data output components may comprise hard drives or other storage media, data transmission components (e.g. LAN, WiFi), monitors, printers, indicator lights, or audible signal elements (e.g., chime, buzzer, horn, bell, etc.). A computer may include one or more uninterruptible power supplies.

As used herein, the term "connector assembly" refers to a structure that connects a deflector to a turbine blade.

As used herein, the term "concavity" refers to a portion of a surface that is concave when shown as part of a profile.

As used herein, the term "convexity" refers to a portion of a surface that is convex when shown as part of a profile.

As used herein, the term "deflector" means a structure configured so as to define a pressure surface and a suction surface when exposed to relative fluid flow and which is positioned and oriented with respect to an associated rotor or turbine blade so as to affect fluid flow impacting the associated blade irrespective of the orientation of the longitudinal axis (axis of rotation) of the rotor or rotor direction of rotation.

As used herein, the term "deflector angle of attack" refers to the angle of the deflector chord or deflector chord line relative to a rotor plane of rotation at a given point along a deflector span.

As used herein, the term "deflector/blade assembly" or "turbine blade assembly" refers to any assemblage of a rotor or turbine blade and one or more deflectors including all embodiments as described herein.

As used herein, the term "edge" means any intersection of the pressure and suction sides of a deflector that meet, and include, but are not limited to, arcs, decreasing and increasing radii, and decreasing and increasing curvatures.

As used herein, the term "flexible shaft" refers to a component configured to transmit a force or rotary motion through a path that is not straight, that is capable of withstanding axial compressive or tensile loads lengthwise and is flexibly compliant transversely across its cross-section. Unless otherwise specifically stated, when such a term is used, the term indicates that the device may take a variety of forms. Construction may include a core consisting of wire, strands or fibers wound in layers in opposing directions around a center wire or wire-like structure, and a casing comprised of one or more layers of similar of dissimilar materials including metal, composites, cloth, plastics, and rubber. Layers may include reinforcing braids. Some flexible shafts may have all of these components while others may have one or more. In certain instances, a suitable construction will be readily apparent to a person of ordinary skill.

As used herein, the term "flow simulation" means computational fluid dynamic (CFD) simulation, also referred to herein as "flow analysis."

As used herein, the term "flow straightener" with respect to fluid flow refers to a device that reduces swirl and non-symmetry in a fluid flow.

As used herein, the term "global torque" refers to the combination of positive and/or negative torque from all deflector and blade surfaces within a deflector/blade assembly on the turbine of which the deflector/blade assembly is a part and is always a positive number in the desired direction of rotation about the hub axis.

As used herein, the term "hub end" refers to the portion of a blade and/or deflector nearest the hub of an associated rotor as defined herein.

As used herein, the term "hydrofoil section" means a portion of a blade having a shape that generates differential pressures between opposed surfaces (lift) due to relative movement of water or other liquid with respect to the hydrofoil section.

As used herein, the term "hydro turbine" refers to a system that is intended to convert kinetic fluid energy from a moving liquid, or liquid mixture, including without limitation, water, to mechanical energy, also referred to as a "water turbine."

As used herein, the term "motor" refers to a machine that converts electricity, or pressure, including without limitation hydraulic and pneumatic, into mechanical energy, e.g. rotational energy.

As used herein, the term "negative torque" refers to a torque component acting on deflector and/or blade surfaces in the opposite direction of the desired rotation about the rotor axis of rotation.

As used herein, the term "positive torque" refers to a torque component acting on deflector and/or blade surfaces in the direction of the desired rotation about the rotor axis of rotation.

As used herein, the term "profile" when referring to a blade or deflector refers to a chordwise slice of a blade or deflector (i.e., from leading edge to trailing edge) showing a shape of the blade or deflector between opposed upstream (pressure) and downstream (suction) surfaces.

As used herein, the term "pressure side" means the surfaces, or area adjacent to the surfaces, of a deflector or blade that is nearer to the oncoming fluid flow, also referred to as the "upstream," "windward" or "upwind" side.

As used herein, the term "pressure" with respect to fluid pressure is relative to atmospheric pressure. It is expressed as a positive number when greater than atmospheric pressure and expressed as a negative number when less than atmospheric pressure. Positive pressure values are commonly referred to as pressure, or positive pressure, and negative pressure values are commonly referred to as suction.

As used herein, the term "pressure surface" means the surfaces of a deflector or blade that is nearer to the oncoming fluid flow also referred to as the "upstream," "windward" or "upwind" side.

As used herein, the term "reflexed camber line" or "reflexed mean camber line" refers to a mean camber line that has a reverse in curvature from its first direction which results in it curving upward toward the chord at the deflector trailing edge. A center of curvature of the reflexed mean camber line is located on a downstream, or suction, side of the deflector or blade for one part of the mean camber line and is located on an upstream (or pressure) side of the deflector or blade for another part of the mean camber line.

As used herein, the term "right angle drive" means a mechanism with a gear train that can transmit an input torque and rotary motion transversely (e.g., 90 A right angle drive may be configured with (i) an input shaft that when powered rotates an output shaft at a 90° angle, and (ii) an optional additional output shaft that is colinear with the input shaft and rotated and powere by it (commonly known as a three-way right angle drive or three-way right angle gearbox).

As used herein, the term "rotational flow" means fluid flow induced by the rotation of a blade about a rotor axis of rotation and which is a component of apparent velocity.

As used herein, the term "rotor" means an assemblage of wind or hydro blades.

As used herein, the term "rotor blade" is synonymous with the term "turbine blade" and means a wind or hydro turbine blade that is part of a rotor.

As used herein, the term "seal" refers to a device or substance used to serve as a fluid barrier preventing the exchange of fluids in static, low/high pressure, or vacuum environments. Irrespective of how it is shown, its applications can take many forms including, without limitation, media/environmental physical seals, coatings to prevent exchange of media or fluids through porous surface, gaskets, o-rings, packings, shaft seals, coatings, and adhesives. However, unless otherwise specifically stated, when such terms are used, the terms indicate that the actual seal may take a variety of forms, which in certain instances will be readily apparent to a person of ordinary skill.

As used herein, the term "swept volume" means the three-dimensional space through which deflector or blades travel about the rotor axis of rotation.

As used herein, the term "suction" with respect to fluid pressure is relative to atmospheric pressure and is expressed as a negative number. It is also commonly known as a negative pressure.

As used herein, the term "suction side" means the surfaces, or area near the surfaces, of a deflector or blade that are opposite or generally opposite from the pressure side surfaces and further from the oncoming flow, also known as the "downwind" or "downstream" side.

As used herein, the term "suction surface" means the surfaces of a deflector or blade that are opposite or generally opposite from the pressure side surfaces and further from the oncoming flow, also known as the "downstream" or "downwind" side.

As used herein, the term "tip end" refers to the portion of a blade and/or deflector nearest its respective tip end.

As used herein, the term "VAC assembly" refers to a variable angle connector assembly that connects a deflector to a turbine blade and enables changing of an orientation of the deflector with respect to the turbine blade.

As used herein, the term "wind turbine" refers to a system that is intended to convert kinetic fluid energy from a moving gas or gaseous mixture, including, without limitation, air, to mechanical energy.

As used herein, the term "working section" refers to a portion of a blade having a shape that generates differential pressures between opposed surfaces (lift) due to relative movement of fluid, e.g. air, water, or other liquid or gas. The working section may be referred to as the airfoil section on a wind turbine blade and may be referred to as a hydrofoil section on a hydro turbine blade.

All possible combinations of elements and components described in the specification or recited in the claims are contemplated and considered to be part of this disclosure. It should be appreciated that all combinations of the concepts discussed in greater detail below (provided such concepts are not mutually inconsistent) are contemplated as being part of the subject matter disclosed herein.

The preferred embodiments will now be described with reference to the accompanying figures, wherein like numerals, including those followed by letter or hyphen and letter e.g. "-A" refer to like elements throughout. The terminology used in the descriptions below, including without limitation, the words "upper" and "lower," are not to be interpreted in any limited or restrictive manner simply because it is used in conjunction with detailed descriptions of certain specific embodiments. Furthermore, many components described herein and shown within the drawings, and which are drawn as solid components, are done so for ease of understanding the drawings. Notwithstanding the crosshatch of such components, all such components may be manufactured using conventional (i) assembly techniques whereby a single component may be split into multiple parts and, when reassembled, embody the characteristics of the component described herein and/or shown in the drawings, and (ii) weight saving methods, including without limitation, designing all such components, in multiple subassemblies, which can be assembled with conventional assembly techniques, into the particular component as shown. All components, at the designer's choice, may also have an interior lattice-like, or other non-solid interior design with strengthened and/or thickened areas where required, for example at areas in contact with bearings or supports, and an external skin whereby such components may appear to be solid when in fact they need not be to achieve their desired functionality.

Provided herein and shown on accompanying figures are configurations of deflectors capable of being fixedly linked and/or operably coupled to one or more wind or hydro turbine blades.

Embodiments disclosed herein permit multiple configurations of size and shape of deflectors, including without limitation, (i) differing aspect ratios (ratio of chordwise width to spanwise length) of deflectors, and (ii) positions relative to the pressure side and suction side of the respective blade to which the deflector(s) is fixedly linked or operably coupled. Moreover, the descriptions and drawings are not intended to be limiting with respect to a deflector's physical shape, size, installation location or fluid type in which the deflector is operating.

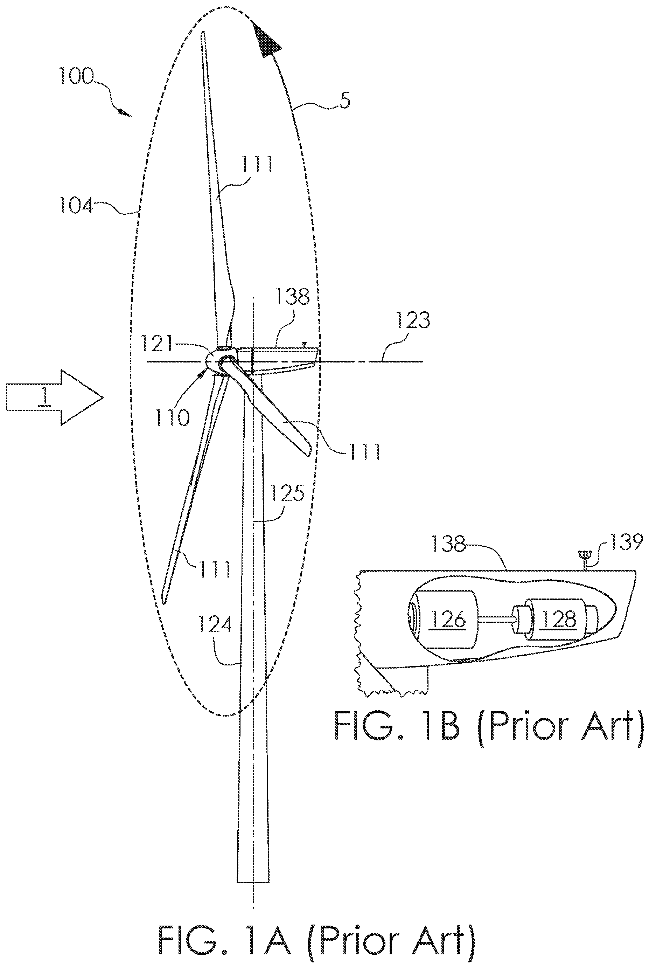

### 1. Prior Art - Wind Turbine FIG. 1A - FIG. 2D

Referring now to FIG. **1A****,** a fluid flow turbine **100** is exemplary of an embodiment disclosed herein. Fluid flow turbine **100** may comprise a horizontal axis wind turbine ("HAWT"). Fluid flow turbine **100** includes a rotor **110** comprising a plurality of rotor blades **111** (e.g., three) mounted to and extending radially from a hub **121** defining the rotor axis or rotor axis of rotation **123** (also referred to herein as the hub axis or hub axis of rotation) about which the rotor **110** rotates in direction 5 (counterclockwise in the illustrated embodiment). In an alternative embodiment, rotor **110** includes more or less than three rotor blades **111** and/or rotates clockwise.

Referring now to FIG. **1B** while still referring to FIG. **1A****,** a typical fluid flow turbine **100** may include rotor-driven components, such as a gearbox **126** and generator **128** located within a nacelle **138**, operatively coupled with or defining the axis of rotation **123** of the rotor **110**, which converts the kinetic energy of oncoming fluid flow (wind stream) **1** via the rotor blades **111** into a rotational energy harnessed within the gearbox **126.** The gearbox **126** is rotated by the rotor **110** and may be coupled to a device that converts the rotational energy such, as electrical generator **128** or a fluid pump (not shown). It should be noted that some wind turbines may use a direct-drive generator coupled directly to the rotor **110** and eliminates the need for a gearbox **126.**

Turbine **100,** i.e., rotor **110** and nacelle **138,** may be mounted atop a tower **124** defining a tower axis **125.** A wind speed and wind direction sensor **139** may be mounted on the nacelle **138** and connected to a computer (not shown) for monitoring wind turbine operation, e.g., orienting the rotor **110** perpendicular to the oncoming fluid flow **1,** and pitching the rotor blades **111.**

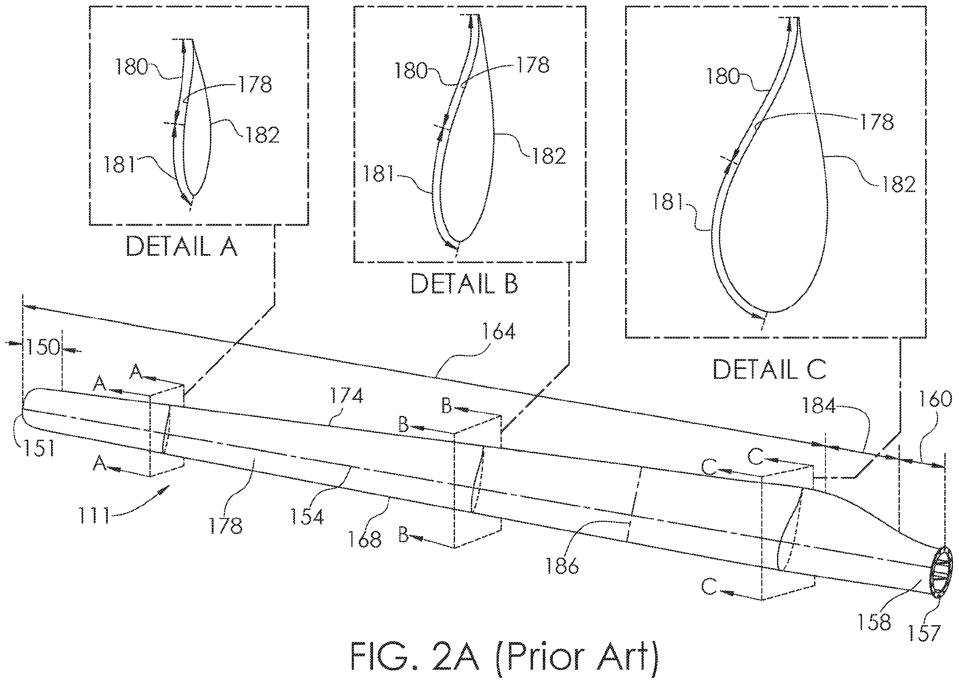

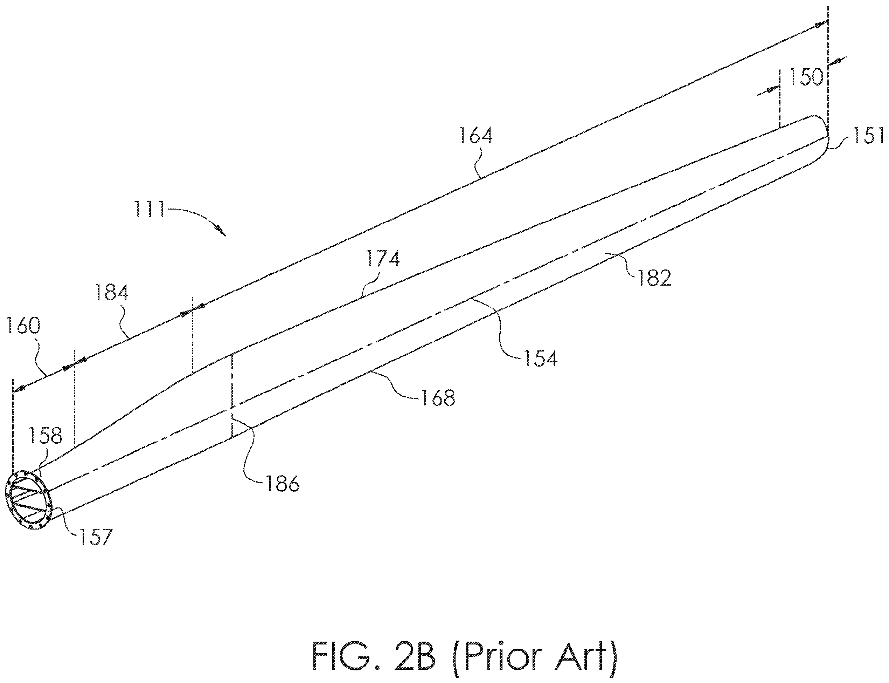

Referring now to FIG. **2A** and FIG. **2B**, each rotor blade **111** includes a blade root **158** at an inboard end with respect to the hub **121** (see FIG. **1A**), and may include connecting structure **157** (e.g., an annular mounting flange) for securing the rotor blade **111** with respect to the hub **121,** and a blade tip **151** at a radially outboard end of the rotor blade **111** with respect to the hub **121** and defining a span **154** from the blade root **158** to the blade tip **151.** Rotor blade **111** may include, progressing from the blade root end **158,** a root section **160** that may be generally circular, elliptical, oval, or egg-shaped in cross-sectional profile at the far root end **158** of the blade and an airfoil section **164** having a leading edge **168** and a trailing edge **174,** which is the working section of the rotor blade **111** and which defines an airfoil profile between the leading edge **168** and blade trailing edge **174** that forms a pressure surface (or upstream surface) **178** generally facing the oncoming fluid flow **1** (see FIG. **1A**) and a suction surface (or downstream surface) **182** (see FIG. **2B**).

Each rotor blade **111** also includes a tip section **150** that overlaps a portion of the airfoil section **164** and a leading edge **168** and blade trailing edge **174** which defines the boundaries of the pressure surface **178** and the suction surface **182.** Referring to Details **A, B,** and **C** of FIG. **2A**, pressure surface **178** may include a leading convexity **181** and a trailing concavity **180.** Blade **111** may include a transition section **184** at which the cross-sectional shape of the rotor blade **111** transitions from the circular, elliptical, or other shape of the blade root **158** and root section **160** to the shape of the airfoil section **164.** In an alternate environment, a transition section is omitted and the blade **111** includes an abrupt, generally instantaneous transition between the profile of the root section **160** and the profile of the airfoil section **164.**

Airfoil section **164** is defined by a chord **186** between the blade leading edge **168** and the blade trailing edge **174.** Chord **186** may be variable along the span **154** of the blade **111** (e.g., with the chord decreasing with increasing span distance from the blade root **158,** as shown), or the chord **186** maybe constant along some or all of the span **154** within the airfoil section **164.**

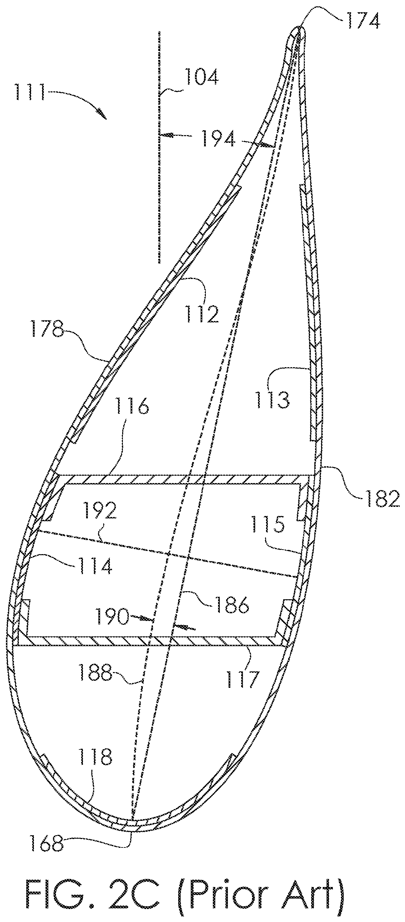

Referring now to FIG. **2C** while still referring to **FIG. 2A**, the airfoil section **164** may have an aerodynamic profile defined by the pressure surface **178** and the suction surface **182** defining a mean camber line **188** having a maximum camber **190** and a maximum thickness **192.** The maximum thickness **192,** the maximum camber **190,** and the mean camber line **188** may vary with spanwise distance from the hub **121** (see FIG. **1A** and DETAILS **A, B, C** of FIG. **2A**). Chord **186** may be arranged at a blade chord angle (or angle of attack) **194** relative to the plane of rotation **104** of the rotor **110** (see FIG. **1A**), and the blade chord angle **194** may also vary with spanwise distance from the hub**121.**

Referring now to FIG. **2C**, the blade **111** may have internal support structures including, (i) on the pressure side **178** a spar **114** and reinforcement **112,** (ii) on the suction side **182** a spar **115** and reinforcement **113,** and (iii) at and near the leading edge **168** reinforcement **118** (collectively "blade reinforcements").

Blade **111** may also have a u-shaped shear web **116** near the center of the blade **111** and u-shaped shear web **117** near the blade leading edge **168** (collectively "shear webs"). The reinforcements and shear webs provide additional structural support to blade **111**.

### 1.1 Apparent Velocity

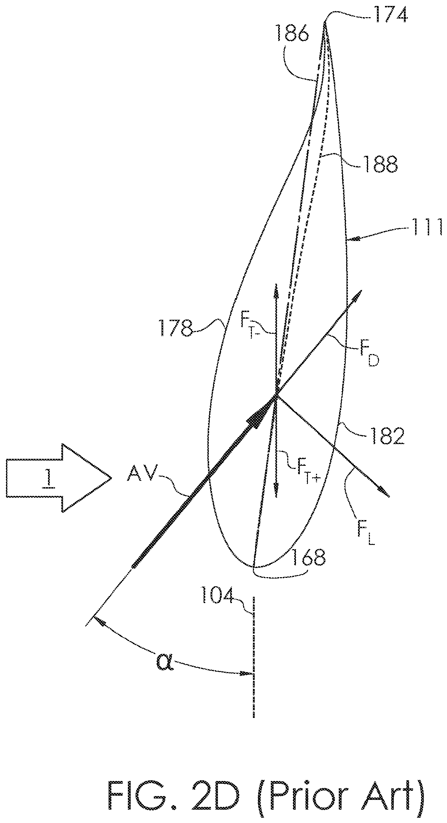

Referring to FIG. **2D****,** when rotor **110** is static, i.e., not rotating, each rotor blade **111** is only exposed to oncoming fluid flow **1** impinging on the pressure surface **178** of blade **111.** When the flow passes by the blade trailing edge **174,** and blade leading edge **168,** the passage of such flow causes a pressure drop on the suction side **182.** The passing flow moving in a downwind direction generates recirculation and a vacuum in the area adjacent to the suction side **182** (i.e., pressure that is relatively lower than pressure on the pressure side **178**). If the suction on the suction surface **182** is lower between the leading edge **168** and the thickest part of the blade, than it is between the thickest part of the blade **111** and the blade trailing edge **174,** positive rotor torque occurs.

As the rotor **110** rotates, each rotor blade **111** is exposed to flow due to movement of the rotor blade **111** in rotational direction **5** (see FIG. **1A**) within the rotor plane **104,** as well as the oncoming fluid flow **1.** The resultant of the flow due to rotational direction **5** and the oncoming fluid flow **1** is the apparent velocity ("AV"), or apparent fluid flow. A portion of the apparent velocity AV flows over the pressure side **178** of the blade **111,** and a portion of the apparent velocity AV flows over the suction side **182** of the blade **111.** Due to the differential curvatures of the pressure side **178** and suction side **182** and/or the angle of attack of the blade **111** (i.e., the angle between apparent velocity **AV** and the rotor plane **104**), fluid flows more quickly over the suction side **182** than over the pressure side **178,** thereby creating a pressure differential between the suction side **182** and pressure side **178** resulting in a lift force **F_{L}** acting generally perpendicular to the direction of the apparent velocity **AV.** In addition, flow over the blade **111** generates a drag force **F_{D}** acting in a direction parallel to the apparent velocity **AV.** A component of the lift force **F_{L}** produces a positive torque **F_{T}+** acting on the blade **111** and a component of the drag force **F_{D}** results in a negative torque **F_{T}-** acting on the blade **111.** An **F_{T+}** that is greater than **F_{T-}** causes the rotor to rotate.

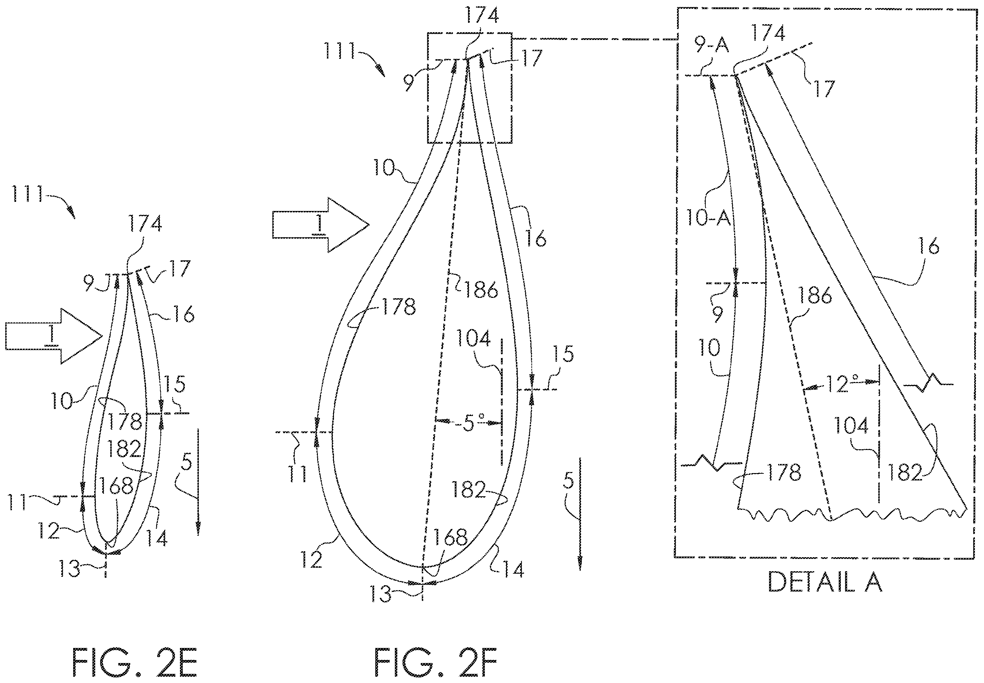

### 1.2 Beneficial Area FIG. 2E - FIG. 2F

Referring now to FIGS. **2E** and **2F****,** blade **111** has areas on its pressure surface **178** and suction surface **182,** whereby, depending on the curvature of the respective surface, both pressure and suction can result in positive or negative torque acting on the blade **111.** This Subsection describes the blade **111** geometry and its related angle of attack that causes a positive pressure or negative pressure (suction) to result in positive torque. These areas are defined herein as "beneficial areas."

A beneficial area, under theoretically ideal conditions ("ideal conditions"), and depending on the blade geometry and angle of attack as described below, can have a positive or negative pressure that contributes positive torque to blade **111.**

The pressure surface **178** includes an area **10** that, under ideal conditions, would have (i) positive pressure located between transition point **9** (which, in the illustration, corresponds to blade trailing edge **174**) and transition point **11,** and (ii) negative pressure (suction) in area **12,** located between transition point **11** and transition point **13** (which, in the illustration, corresponds to leading edge **168**).

The suction surface **182** includes an area that, under ideal conditions, would have a (i) negative pressure (suction) in area **14,** located between transition point **13** and transition point **15,** and (ii) positive pressure in area **16** between transition point **15** and transition point **17** (which, in the illustration, corresponds to blade trailing edge **174**).

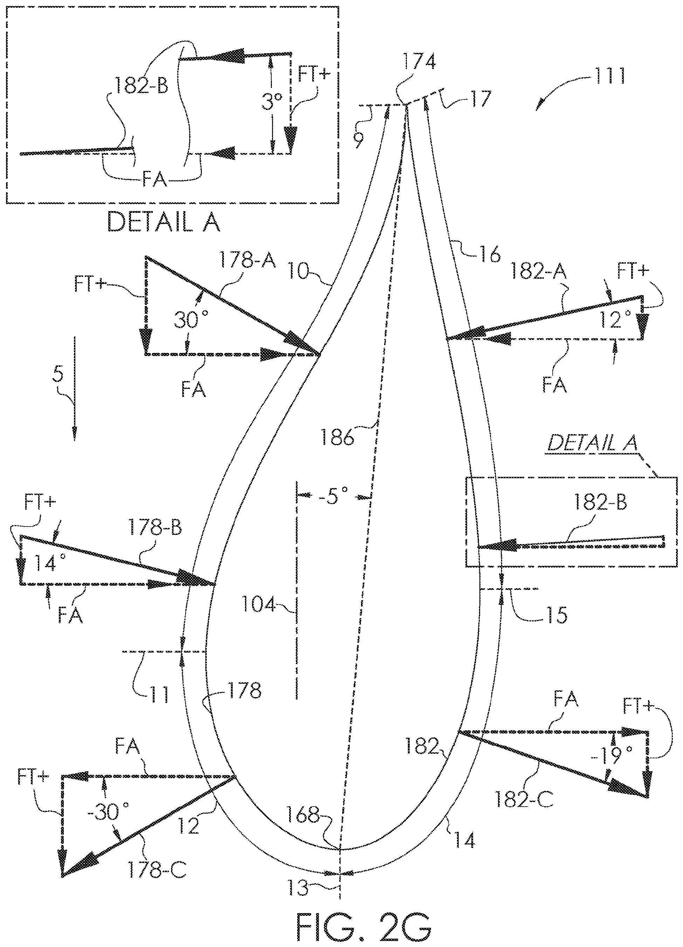

### 1.3 Beneficial Areas - How They Work FIG. 2G

Referring now to FIG. **2G** while still referring to FIGS. **2E** and **2F****,** any pressure or suction on the blade **111** can be described as a series of forces acting normal (locally perpendicular) to the blade pressure surface **178** or suction surface **182.** Any force applied to blade **111** can be broken into an axial component (i.e., in a direction that is parallel to the rotor axis of rotation **123** (see FIG. **1A**)) and a tangential component (i.e., in a direction that is perpendicular to the rotor axis of rotation **123**). Axial forces do not directly affect rotation of blade **111.** Tangential components of forces in the intended direction of rotation **5** increase positive torque, and thus are beneficial. Tangential components of forces opposite the direction of rotation 5 result in negative torque, and thus are detrimental.

The greater the slope of the blade pressure surface **178** relative to the rotor plane of rotation **104,** e.g. **178-A, 178-B,** and **178-C,** and the greater the slope of the blade suction surface **182** relative to the rotor plane of rotation **104,** e.g., **182-A, 182-B,** and **182-C,** the greater the tangential component of the force becomes, since the force is applied normal to the surface.

For example, since the angle of slope **178-A** is 30 degrees, and greater than slope **178-B** (14 degrees), the same pressure at both slopes will create a greater force in the direction of rotation at slope **178-A** than at slope **178-B**. If the tangential component is in the direction of rotation 5, then such force is beneficial. Area **10** produces a beneficial torque when the collection of forces that result from the pressure all have tangential force components that are in the direction of rotation **5.**

The greatest beneficial forces are experienced where normal forces create a greater slope angle with the rotor axis of rotation **123** (see FIG. **1A**), e.g. **178-A**, **178-C** and **182-C** because the tangential component of the forces in direction **5** is greater than elsewhere in the examples shown. The theoretically ideal pressure and suction locations are as follows:

| **Pressure Surface - Beneficial Area 10** | **Suction Surface - Beneficial Area 16** |
|---|---|
| Greater positive slope and pressure = Greater positive torque | Greater positive slope and pressure = Greater positive torque |

| **Pressure Surface - Beneficial Area 12** | **Suction Surface - Beneficial Area 14** |
|---|---|
| Greater negative slope, and suction = Greater positive torque | Greater negative slope, and suction = Greater positive torque |

### 1.4 Angle of Attack Effect Upon Beneficial Areas - FIG. 2F and FIG 2F Detail A

Referring now to FIG. **2F****,** as the blade **111** angle of attack changes, beneficial areas can move along the blade chord **186.** For example, with a -5-degree angle of attack as shown, blade **111** has beneficial area **12,** where ideally suction would occur, and area **10** where ideally pressure would occur. However, as blade trailing edge **174** is pitched toward oncoming flow **1,** for example at a 12-degree angle of attack, (i) transition point **9** moves toward oncoming flow **1,** and downward toward leading edge **168** thus reducing the area of beneficial area **10,** and (ii) a third beneficial pressure surface area **10-A,** located between transition point **9** and transition point **9-A** is created (see FIG. **2F** Detail **A**). Ideally, area **10-A** would be most benefited by suction and practically benefited by a decreased pressure to contribute positive torque in the desired direction of rotation **5** of the blade **111.**

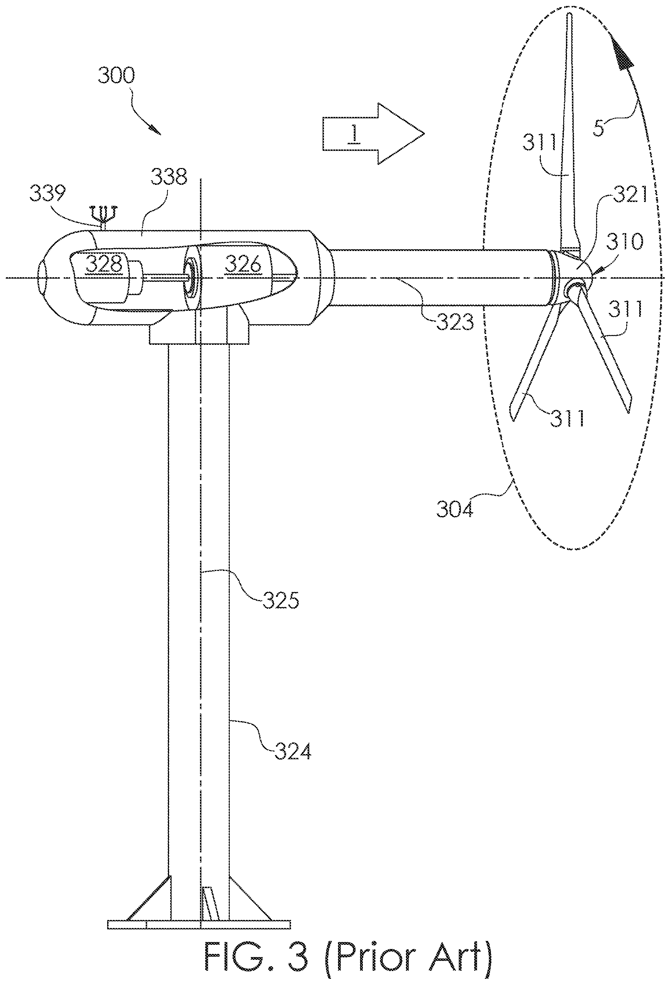

### 2. Prior Art-Hydro Turbine FIG. 3

Referring now to FIG. **3****,** a fluid flow hydro turbine **300** is exemplary of an embodiment disclosed herein. Fluid flow turbine **300** may comprise a horizontal axis water turbine. Fluid flow turbine **300** includes a rotor **310** comprising a plurality (e.g., three) of rotor blades **311** mounted to and extending radially from a hub **321** defining a rotor axis **323** about which the rotor **310** rotates in direction **5** (counterclockwise in the illustrated embodiment). In an alternative embodiment, rotor **310** includes more or less than three rotor blades **311** and/or rotates clockwise.

Fluid flow turbine **300** may include rotor-driven components, such as a gearbox **326** and generator **328** located within a nacelle **338,** operatively coupled with or defining rotor axis **323** of the rotor **310,** which converts the kinetic energy of oncoming fluid flow (water stream) **1** via the rotor blades **311** into a rotational energy harnessed within the gearbox **326.** The gearbox **326** is rotated by the rotor **310** and may be coupled to a device that converts the rotational energy such, as electrical generator **328** or a fluid pump (not shown). It should be noted that some fluid flow turbines may use a direct-drive generator coupled directly to the rotor **310** and eliminates the need for a gearbox **326.**

Turbine **300,** i.e., rotor **310** and nacelle **338,** may be mounted to a tower **324** defining a tower axis **325.** A fluid speed and fluid direction sensor **339** may be mounted on the nacelle **338** and connected to a computer (not shown) for monitoring hydro turbine operation, e.g., orienting the rotor **310** perpendicular to the oncoming fluid flow **1,** and pitching the rotor blades **311.**

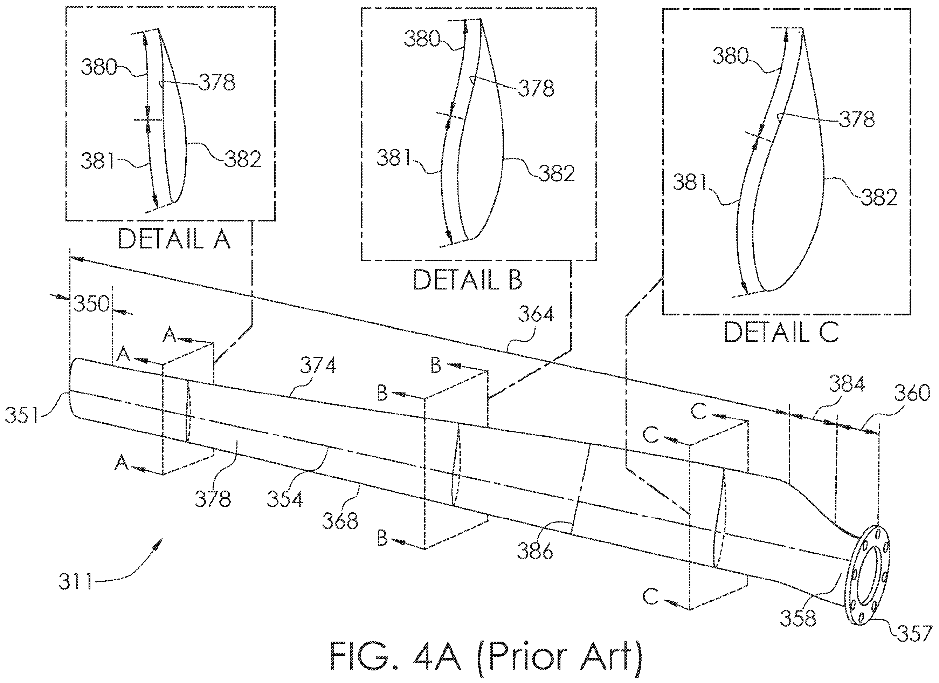

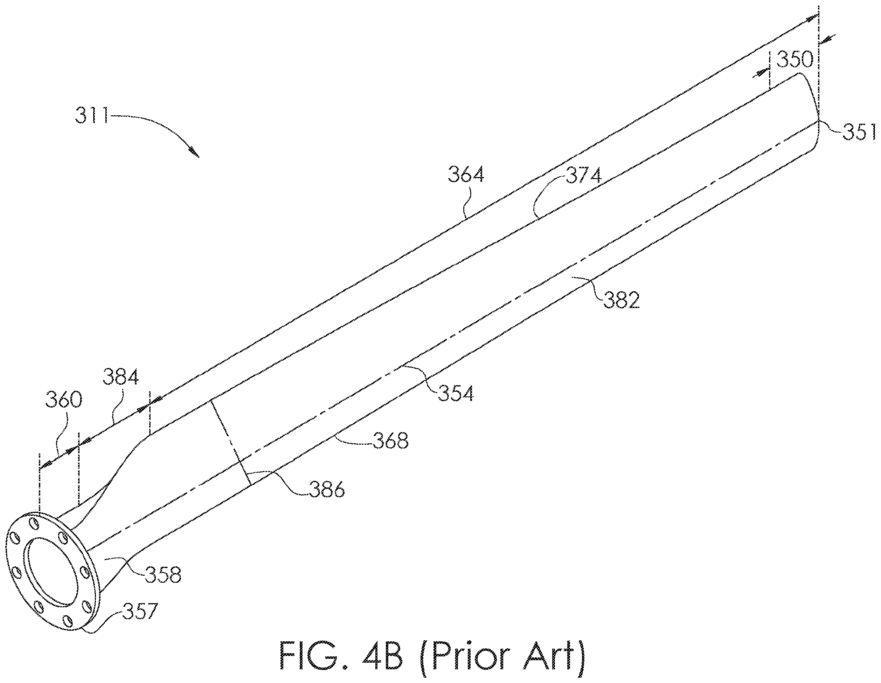

Referring now to FIG. **4A** and FIG. **4B****,** each rotor blade **311** includes a blade root **358** at an inboard end with respect to the hub **321** (see FIG. **3A**), and may include connecting structure **357** (e.g., an annular mounting flange) for securing the rotor blade **311** with respect to the hub **321** (see FIG. **3A**), and a blade tip **351** at a radially outboard end of the rotor blade **311** with respect to the hub **321** and defining a span **354** from the blade root **358** to the blade tip **351.** Rotor blade **311** may include, progressing from the blade root end **358,** a root section **360** that may be generally circular, elliptical, oval, or egg-shaped in cross-sectional profile at the far root end 358 of the blade and a hydrofoil section **364** having a leading edge **368** and a trailing edge **374,** which is the working section of the rotor blade **311** and which defines a hydrofoil profile between the leading edge **368** and trailing edge **374** that forms a pressure surface (or upstream surface) **378** generally facing the oncoming fluid flow **1** (see FIG. **3**) and a suction surface (or downstream surface) **382** (see FIG. **4B**).

Each rotor blade 3**11** also includes a tip section **350** that overlaps hydrofoil section **164** and a pressure surface **378** may include a leading convexity **381** and a trailing concavity **380.** Blade **311** may include a transition section **384** at which the cross-sectional shape of the rotor blade **311** transitions from the circular, elliptical, or other shape of the blade root **358** and root section **360** to the shape of the hydrofoil section **364.** In an alternate environment, a transition section is omitted, and the blade **311** includes an abrupt, generally instantaneous transition between the profile of the root section **360** and the profile of the hydrofoil section **364.**

Hydrofoil section **364** is defined by a chord **386** between the blade leading edge **368** and the blade trailing edge **374.** Chord **386** may be variable along the span **354** of the blade **311** (e.g., with the chord decreasing with increasing span distance from the blade root **358,** as shown), or the chord **386** maybe constant along the portion of the span **354** within the hydrofoil section **364.**

The fluid dynamics interact with blade **311** similarly as described in Subsection **1.1** above.

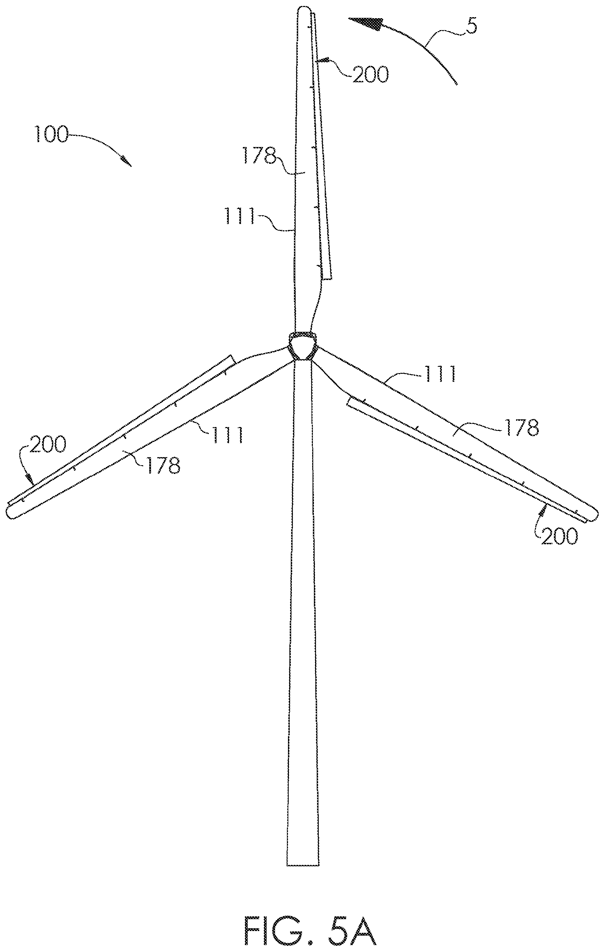

### 3. Deflector Location, Length, and Orientation Relative to the Blade - FIG. 5A - FIG. 8

A deflector/blade assembly (or turbine blade assembly) as described herein includes a rotor blade (of a wind flow turbine, water flow turbine, or other fluid flow turbine) with a deflector fixed or otherwise coupled to the associated rotor blade. Deflectors described herein may be configured to work with rotor blades that rotate in either a clockwise or counterclockwise rotation.

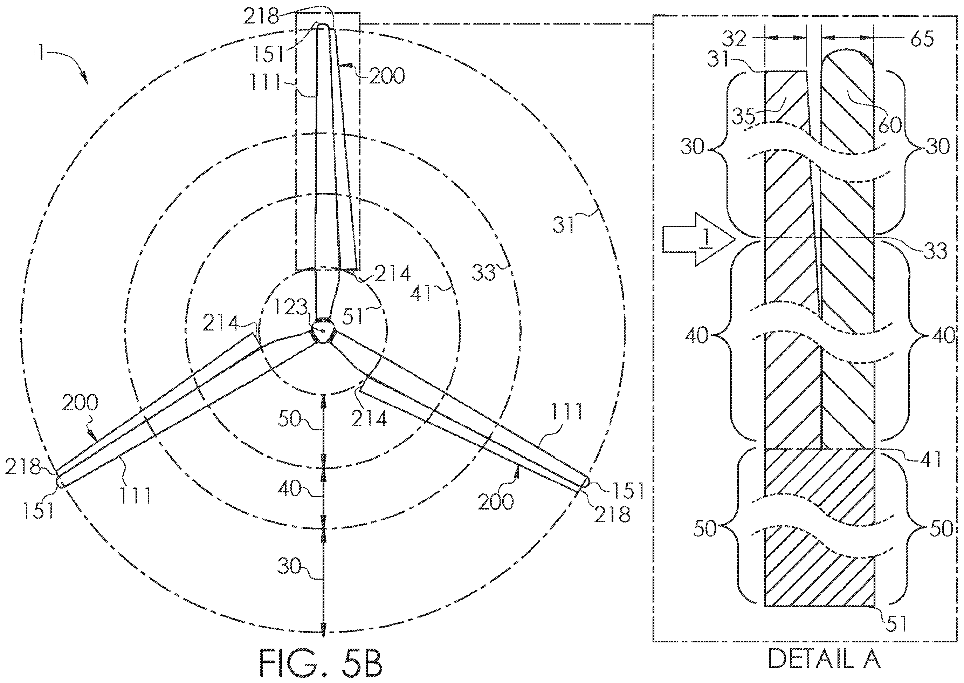

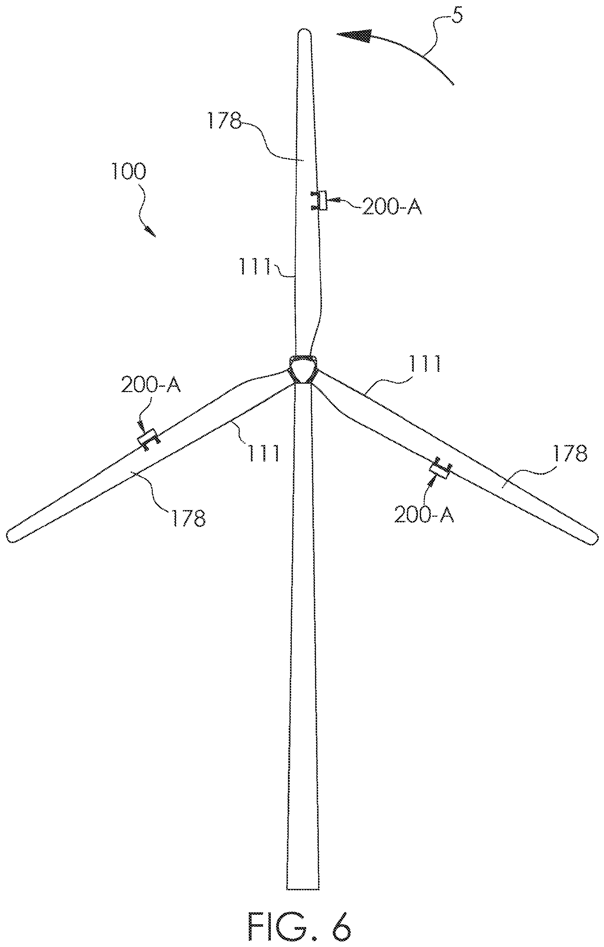

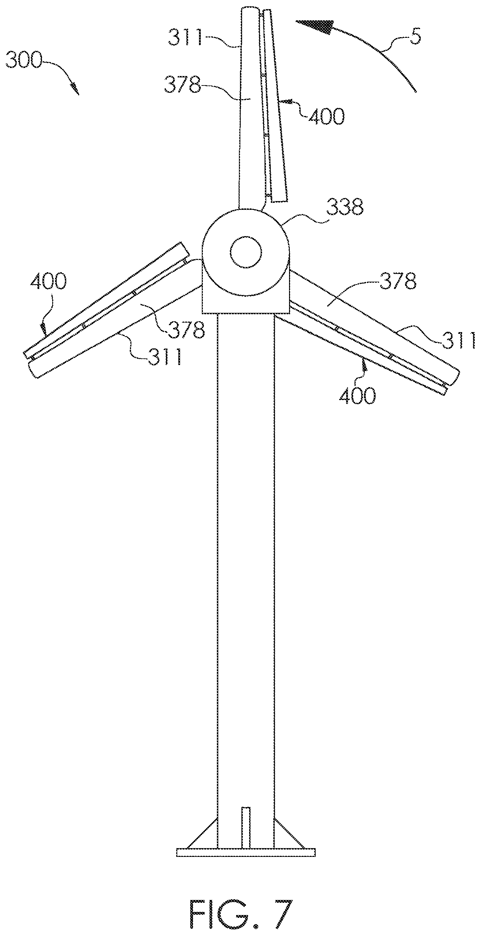

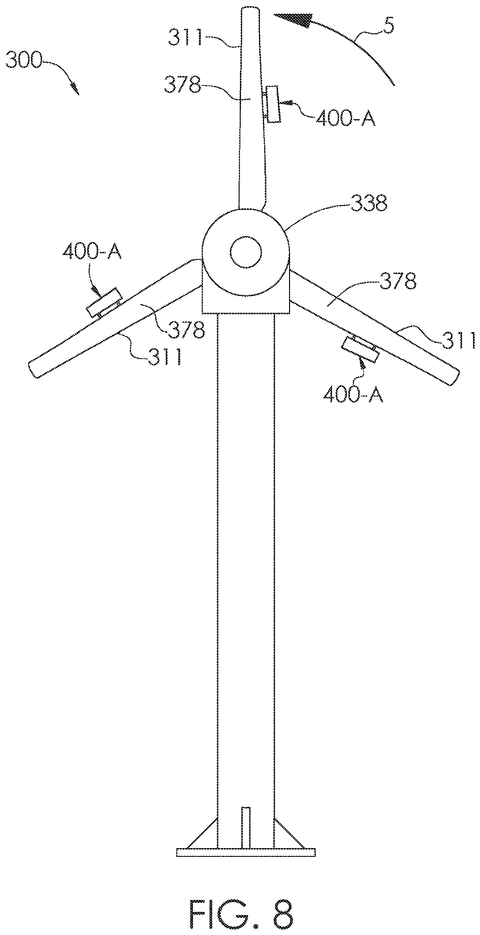

Referring now to FIG. **5** - FIG. **8**, the deflectors, including without limitation, partial-span deflectors described herein, may be configured with a wind turbine **100** (see FIG. **5** and FIG. **6**), water turbine **300** (see FIG. **7** and **8**), or other fluid powered turbine. The deflectors similarly affect the fluid flow adjacent to and/or near deflector/blade assemblies in all fluid types. As the interactions between a deflector and associated rotor blade and the relative impact on the performance of a rotor as described herein are generally agnostic to the type of fluid in which the rotor is operating - e.g., air, water, liquid or gas - the following descriptions will be with reference to a wind turbine, it being understood that the descriptions are generally equally applicable to other fluid turbines, such as water turbines.

A deflector **200,** or partial-span deflector **200-A** (see FIG. **5** and FIG. **6** respectively), when positioned adjacent to the pressure side **178,** and nearer the oncoming flow than the blade, or positioned adjacent to the suction side **182,** and further from the oncoming flow than the blade **111** (see FIG. **2A** and FIG. **2B**), of the blade **111** to which the deflector is coupled causes the fluid pressure to rise on the pressure side **178** of the blade **111** and/or drop on the suction side **182** of the blade **111,** as compared to a blade **111** without one or more deflectors, in such a manner as to generate greater global torque in the rotor having blades with deflectors as compared to a rotor having the same blades, but no deflectors. In this context, a deflector coupled to an associated blade means the deflector is fixedly linked to the associated blade (attached or connected in a manner precluding relative movement between the deflector and associated blade) or operably coupled to the associated blade (attached or otherwise coupled via structure(s) and/or mechanism(s) that enable and/or effect relative movement between the deflector and the associated blade so that the position and/or the orientation of the deflector with respect to the associated blade may be selectively (including automatically) altered.

Referring now to FIG. **5A** and FIG. **2A****,** each deflector **200** is configured to affect the entire airfoil section **164** of the associated blade **111** to which it is coupled (i.e., the deflector **200** extends spanwise over all or substantially all of the airfoil section **164**), and each deflector **200** is positioned, with respect to the direction of rotation **5,** behind the associated blade's leading edge **168,** on the pressure side **178** of the associated blade **111.** One or more additional deflector(s) **200** may also be configured on the pressure side **178** or suction side **182** of each blade **111.**

### 3.1 Deflector and Blade Swept volumes

Referring now to FIG. **5B****,** in an embodiment, deflector **200** operates in areas nearer the oncoming fluid flow **1,** in separate and distinct swept volumes, than does the blade **111.** For example, deflector swept volume **35** is nearer the oncoming flow 1 than is blade swept volume **60.**

A rotor **101** is shown comprised of three deflector/blade assemblies, each comprised of a deflector **200** and blade **111.** In this embodiment, a portion of each deflector **200** is positioned within an outer deflector swept volume **30** that is bounded by (i) the deflector tip **218** circumferential path of travel **31** about the hub axis of rotation **123** at or near the deflector tip **218,** and (ii) an inner circumference **33** located nearer to the hub axis of rotation **123.**

Deflector swept volume depth (i.e., axial extent relative to the hub axis of rotation 123) **32** contains the deflector chord over its spanwise distance from its tip **218,** to circumference **33.**

A smaller diameter transitional swept volume **40** is shared by a portion of deflector **200** and a portion of blade **111,** whereby deflector **200** geometry begins to transition closer to blade **111** as the deflector 200 distance to the hub axis of rotation **123** decreases. Transitional swept volume **40** is bounded outer circumference **33** and inner circumference **41.**

The smallest diameter area, common swept volume **50,** is completely shared by a portion of deflector **200** and a portion of blade **111.** Common swept volume **50** is bounded by its outer circumference **41,** and by the deflector hub end **214** circumferential path of travel **51** about the hub axis of rotation **123** at or near the deflector hub end **214.**

Deflectors **200** and rotor blades **111** share the entire common swept volume **50** where the deflector **200** distance away from oncoming fluid flow **1** increases as its spanwise distance toward the hub axis of rotation **123** decreases. That is, progressing from the tip end **218** to the hub end **214,** the distance by which the deflector **200** is advanced toward the oncoming flow **1** as compared to the blade **111** decreases.

Blade **111** has a separate swept volume **60** that is bounded at its tip end **151** circumferential path of travel about the hub axis of rotation **123** (slightly beyond circumference **31** of deflector **200**) and inner circumference **33.** Blade swept volume depth **65** contains the blade **111** chord over its spanwise distance from its tip **218,** to circumference **33.**

Deflector **200** as described herein has forty-eight percent (48%) of its span within its outer swept volume **30,** twenty-five percent (25%) of its span in the transitional swept volume **40,** and twenty-seven percent (27%) of its span in the common swept volume **50.** The virtual and physical performance for this embodiment is described in Section **7.**

### 3.2 Partial-Span and Hydro Turbine Blades

Referring now to FIG. 6, and still referring to FIG. **2A****,** each partial-span deflector **200-A** is configured to affect a portion of the airfoil section **164** of the associated blade **111** to which it is coupled (i.e., the partial-span deflector **200-A** extends spanwise over less than all of the airfoil section **164**), and each partial-span deflector **200-A** is positioned, with respect to direction of rotation **5,** behind the associated blade's leading edge **168,** on the pressure side **178** of the associated blade **111.** One or more additional partial-span deflector(s) **200-A** may also be configured on the pressure side **178** or suction side **182** anywhere along the blade span **154.**

Referring now to FIG. **7** and FIG. **4A****,** each deflector **400** is configured to affect the entire hydrofoil section **364** and tip **351** of the associated blade **300** to which it is coupled (see FIG. **4A**) (i.e., the deflector **400** extends spanwise over all or substantially all of the hydrofoil section **364),** and each deflector **400** is positioned, with respect to the direction of rotation 5, behind the leading edge **368** of the pressure side **378** of the associated blade **311.** One or more additional deflector(s) **400** may also be configured on the pressure side **378** or suction side **382** of each blade **311.**

Referring now to FIG. **8****,** each partial-span deflector **400-A** is configured to affect a portion of the hydrofoil section **364** of the associated blade **311** to which it is coupled (see FIG. **4A**) (i.e., the partial-span deflector **400-A** extends spanwise over less than all of the hydrofoil section **364**), and the partial-span deflector **400-A** is positioned, with respect to the direction of rotation **5,** behind the associated blade's leading edge **368,** on the pressure side **378** of the associated blade **311.** One or more additional partial-span deflector(s) **400-A** may also be configured on the pressure side **378** or suction side **382** of each hydro turbine blade **311** anywhere along the blade span **354.**

Partial span deflectors are designed for retrofitting existing turbines which are located where the fluid flows in which they operate are less than required to reach the rated capacities.

Any deflector type e.g. **200, 200-B, 201,** may be configured as a partial span deflector for turbines operating in any fluid type.

Deflectors described herein may be fixedly linked or operably coupled to an associated blade as described in Section **6** and Subsection **9.7** respectively.

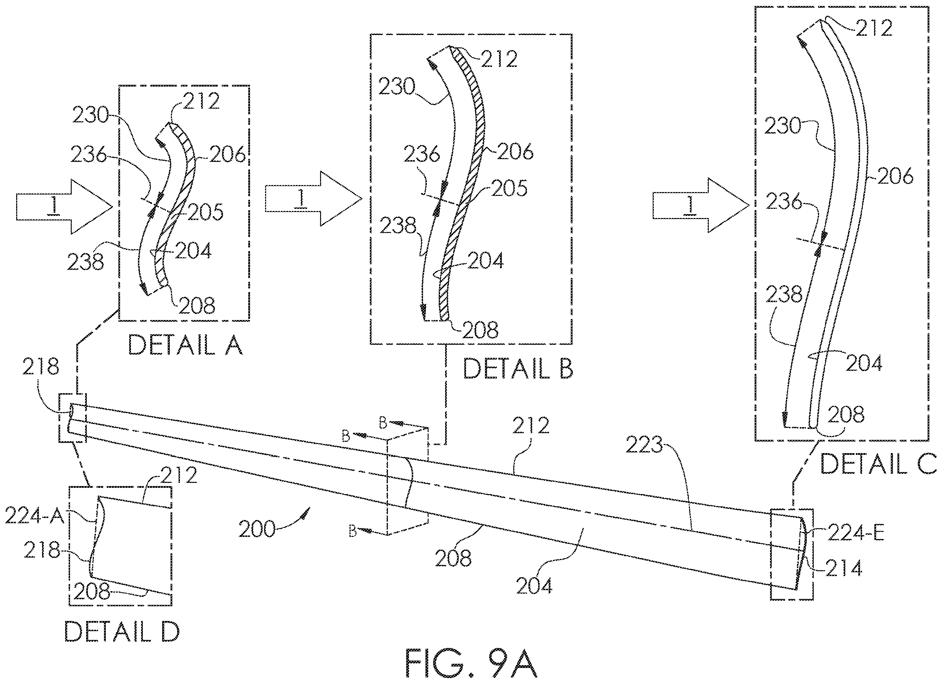

### 4. Deflector General Shape and Orientation to the Oncoming Flow - FIG. 9A - 9B

Referring now to FIG. **9A**, showing a front isometric view of a deflector **200,** the deflector is bounded by a leading edge **208,** a hub end **214,** a trailing edge **212,** and a tip end **218.** In the illustrated embodiment, the general shape of a perimeter of the deflector **200** is trapezoidal, where the perimeter is defined by leading edge **208,** hub end **214,** trailing edge **212,** and tip end **218.** However, in other embodiments, the shape of the perimeter may not be generally trapezoidal and may, for example, be quadrilateral.

Deflector **200** has a length defined by a deflector span **223** extending from the deflector tip end **218** to the deflector hub end **214** and may be greater, less than, or equal to blade span **154** (see FIG. **2A**). Each deflector **200** is positioned and oriented with respect to its associated blade **111** (see FIG. **5**) so as to have a pressure surface (or upstream surface) **204** that is impacted by oncoming fluid flow **1** and a suction surface (or downstream surface) **206** opposite the pressure surface **204.**

Deflector **200,** at any position along the span **223,** is characterized by a chord extending from the leading edge **208** to the trailing edge **212,** such as tip end chord **224-A** and hub end chord **224-E.** The tip end chord **224-A** and hub end chord **224-E** may differ, including without limitation, such that (i) when unequal as shown, the shape of the perimeter of deflector **200** pressure surface **204** is generally trapezoidal, and (ii) when equal, the shape of the perimeter of deflector **200** pressure surface **204** is generally quadrilateral.

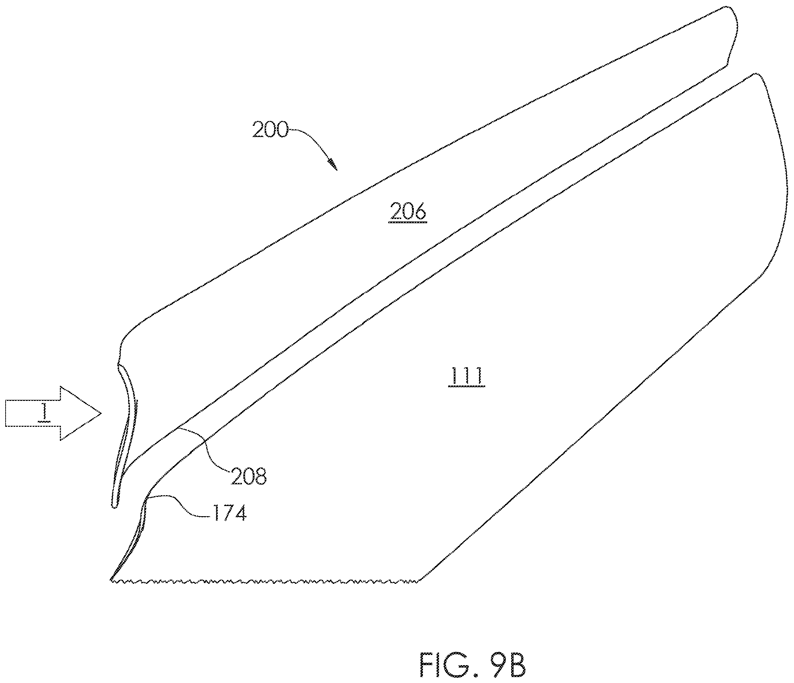

In an embodiment, the spanwise curvature of the deflector **200** leading edge **208** follows the curvature of the blade trailing edge **174** (see FIG. **9B**). In other embodiments the deflector **200** leading edge **208** may be straight or have a curvature that does not follow the curvature or other geometry of blade **111.**

Deflector **200** may twist along span **223** similar to a blade twist and the twist may be (i) linear or non-linear, and/or (ii) may or may not match the twist of the blade to which it is fixedly linked or operably coupled. Flow analysis indicates that matching the deflector twist with the blade twist will increase blade/deflector assembly performance by increasing the global torque generated by the blade/deflector assembly in the rotation direction.

Referring now to FIG. **9A** Detail **A** - Detail **C**, while still referring to FIG. **9A****,** pressure surface **204** has a trailing concavity **230** that begins at trailing edge **212** and ends at transition point **236** and a leading convexity **238** that begins at transition point **236** and ends at leading edge **208.**

Deflector **200,** deflector **400** (see FIG. **7**), and all deflector embodiments described herein, may be constructed of a single material or combination of two or more materials (e.g., laminates), including but not limited to composites, plastics, or metal, each with integral supports, including without limitation, structural mounting flanges, and/or a combination of materials and internal support structures common to turbine blade and/or wing construction methods, including without limitation, foam, ribs, spars, or other reinforcements.

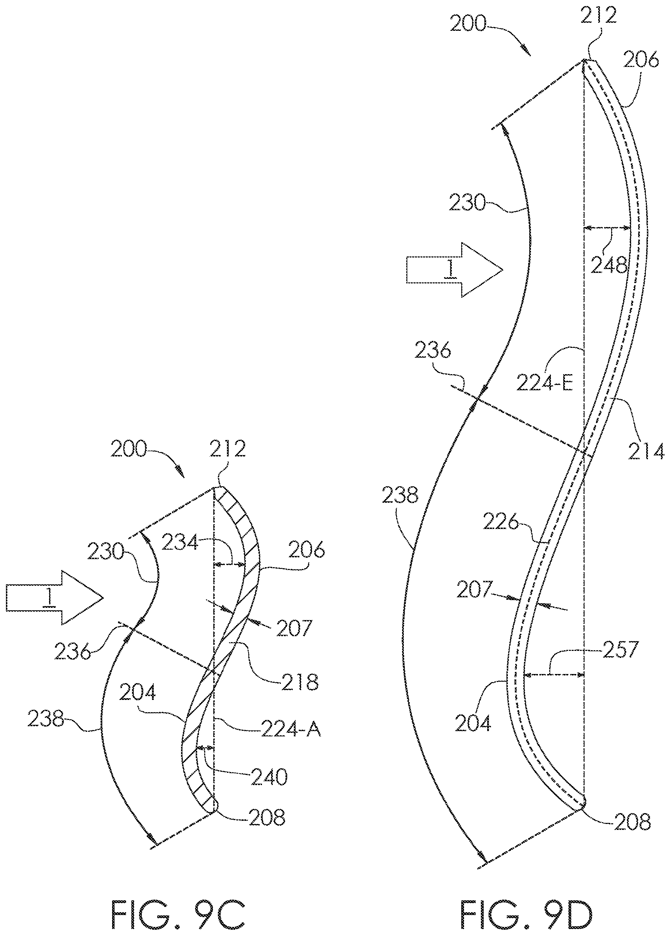

### 5. Concavity and Convexity - General - FIG. 9C - FIG. 9D

Referring now to FIGS. **9C** and **9D**, in the embodiment shown, the trailing concavity **230** and leading convexity **238** curvatures may vary uniformly or non-uniformly over the span **223** (see FIG. **9A**) of the deflector **200** with the trailing concavity **230** and leading convexity **238** at the tip end (FIG. **9C**) having a greater curvature (smaller radius of curvature) than trailing concavity **230** and leading convexity **238** at the hub end (FIG. **9D**).

In other embodiments the trailing concavity **230** and leading convexity **238** could remain constant over at least portions of the span of the blade and/or change non-uniformly (increasing or decreasing curvature) over the span **223** (see FIG. **9A**).

### 5.1 Concavity and Convexity Relationship to Angle of Attack - FIG. 9C - FIG. 9D

Each of the trailing concavity **230** and leading convexity **238** may be characterized at any position along the span **223** (see FIG. **9A**) of the deflector **200** by its respective depth, which is the maximum distance from a chord at that span position to the pressure surface **204** within the trailing concavity **230** or leading convexity **238,** respectively, and which is a function of the curvature (radius of curvature) and the arc length (or span) of the concavity **230** or convexity **238.**

The convexities **238** shown in FIGS. **9C** and **9D** are exaggerated to more easily show their depth measurement.

Referring now to FIG. **9C**, at the tip end **218** of the deflector **200,** the depth of trailing concavity **230** is length **234** when measured from the tip end chord **224-A** to pressure surface **204,** and the depth of leading convexity **238** is length **240** when measured from the tip end chord **224-A** to suction surface **206.**

Referring now to FIG. **9D**, at the hub end **214** of the deflector **200,** the depth of trailing concavity **230** is length **248** when measured from the hub end chord **224-E** to pressure surface **204,** and the depth of leading convexity **238** is length **257** when measured from the hub end chord **224-E** to suction surface **206.** In the embodiments shown, the combination and arrangement of trailing concavity **230,** and reverse in curvature occurring at leading convexity **238,** results in a reflexed camber line **226** across the span **223** (see FIG. **9A**) of deflector **200.** A center of curvature of the reflexed mean camber line **226** is located on a downstream, or suction, side (i.e., outside downstream surface **206**) of the deflector **200** for one part of the mean camber line **226** corresponding to the convexity **238** and is located on an upstream (or pressure) side of the deflector (i.e., outside upstream surface **204**) for another part of the mean camber line **226** corresponding to the concavity **230.** Either the concavity **230** or convexity **238** may not be circles, and either portion may have multiple centers of curvature on the downstream or upstream sides of the deflector. Other embodiments could be configured without a lower convexity and thus not have a reflexed camber.

Note that due to the concavity **230** and the convexity **238** (the extent of which may be exaggerated in the drawings to enhance visualization of these concepts) at least a portion of the line representing chord **224-A (****FIG. 9C****)** and at least a portion of the line representing the chord **224-E** (FIG. **9D****)** may lie external to the deflector **200** (i.e., outside the space between upstream surface **204** and downstream surface **206**). In some embodiments, the majority of the deflector chord **224** across span **223** (see FIG. **9A**) is external to deflector **200.** In some embodiments the amount of the deflector chord external to the defector profile, which may vary along the span of the deflector, is 25-80% of the chord at the tip end of the deflector and 65-90% of the chord at the hub end of the deflector and may vary continuously -e.g., linearly, from the tip end to the hub end.

The concavity depths **234, 248** and convexity depths **240, 257** (i) correspond to a curvature, whereby as the respective depth increases, the corresponding curvature increases (radius of curvature decreases), and (ii) may change between the deflector tip end **218** and hub end **214** (See FIG. **9A**).

In an embodiment, a relationship exists between the (i) depth of convexity **230** over the length of the span **223** (See FIG. **9A**), and (ii) the deflector **200** angle of attack as described below.

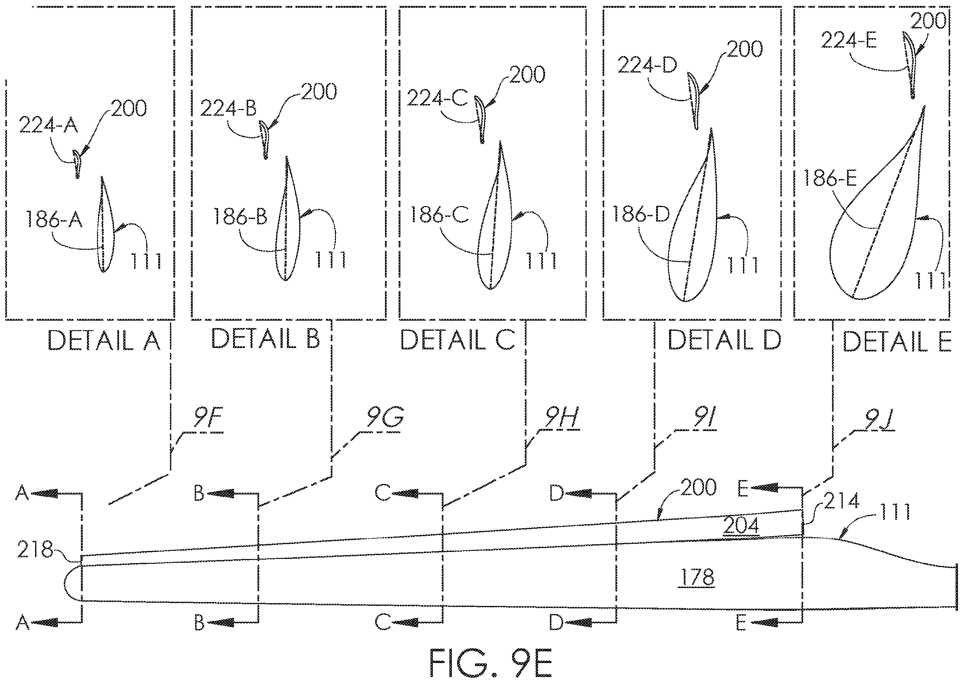

Flow simulations indicate that in an embodiment with deflector/blade relative positions as shown in FIG.**9E****,** a ratio of a (i) concavity depth **234** and **248** of five to twenty percent (5-20%) of the respective chord **224-A** through **224-E,** (ii) convexity depths **240** and **257** of zero to fifteen percent (0-15%) of respective chord **224-A** through **224-E,** and (iii) angle of attack of 0 - 15 degrees (with the angle of attack equal to 0 degrees when coplanar with the plane of rotation and positive degrees increasing as the deflector trailing edge is advanced toward the oncoming flow) increases global torque depending upon the relationship between the amount of convexity and concavity and the deflector angle of attack relative to rotor plane of rotation, as further described below. However, due to the large number of optimization variables, and alternate embodiments that can be combined, it is possible that improvements in global torque can be obtained with an expanded deflector angle of attack range and expanded upper concavity to chord ratio.

Flow simulations also indicate that similar increases in global torque to the deflector/blade assembly, i.e., increased performance, may be achieved with (i) a lesser concavity in the pressure (upstream) surface of the deflector and greater angle of attack between the deflector and blade, and (ii) a greater concavity in the pressure (upstream) surface of the deflector and lessor angle of attack between the deflector and blade. Flow simulations further show that either increased concavity (i.e., greater curvature or greater concavity depth **234, 248**) or increased angle of attack between the deflector and the blade results in increased performance of the deflector/blade assembly.

The operating range of the lower convexity **238** is less than the operating range for the upper concavity **230.** The lower convexity **238** influences flow passing between deflector **200** leading edge **208** and blade trailing edge **174** from the blade pressure surface side **178** toward the deflector suction surface side **206,** in other words, from the upstream side of the blade **111** to the downstream side of the deflector **200.** Flow simulation shows that the flow passing through the opening between the deflector **200** and blade **111** is an important variable in balancing the global torque and the type of torque attributed solely to deflector **200,** i.e., positive, negative, or neutral.

Flow simulations also show that varying the concavity/angle of attack ("AoA") relationship may also result in the deflector **200** contributing positive torque or negative torque to the deflector/blade assembly. This is illustrated in the table below comparing representative blade torque, deflector torque, and global torque for a rotor blade without a deflector and a blade/deflector assembly, where, for purposes of comparison, the torque values are normalized by the torque value obtained by the rotor blade alone. Comparisons are made for three representative deflector configurations: (i) high deflector angle of attack (e.g., 13° - 15°) and low concavity (e.g., 5% - 7% of chord), (ii) medium deflector angle of attack (e.g., 6° - 12°) and medium concavity (e.g., 8% - 12% of chord), and (iii) low deflector angle of attack (e.g., 0° - 5°) and high concavity (e.g., 13% - 20% of chord).

| **Torque Type** | **Blade Only Without Deflector** | **Blade with Deflector High AoA/ Low Concavity** | **Blade with Deflector Medium AoA and Concavity** | **Blade with Deflector Low AoA/ High Concavity** |
|---|---|---|---|---|
| Blade Torque | 1.0 | 2.0 | 1.8 | 1.65 |
| Deflector Torque | N/A | -0.2 | -0.05 | 0.05 |
| Global Torque | 1.0 | 1.80 | 1.75 | 1.70 |

As illustrated in the table above, in this embodiment, adding a deflector increases the blade torque contribution to global torque, provided the angle of attack and concavity depth to chord ratio are as described above. In addition, as the angle of attack changes from high to low and the concavity of the deflector changes from low to high, the blade torque contribution to global torque decreases but the deflector torque contribution to global torque increases. Stated another way, deflector configurations that result in low - or even negative - torque contributions from the deflector result in higher torque contributions from the blade, thereby offsetting the low or negative deflector torque contributions to provide increased global torque as compared to a blade without a deflector.

As shown in FIGS. **9C** and **9D**, deflector **200** has a deflector thickness **207** between the upstream surface **204** and downstream surface **206** that may be constant from the deflector leading edge **208** to the deflector trailing edge **212.** In one embodiment, the upstream surface **204** and the downstream surface **206** are flat and parallel. In other embodiments, the upstream surface **204** and the downstream surface **206** are curved and parallel (i.e., the upstream surface **204** and downstream surface **206** are equidistant from a midline of the deflector thickness), and in other embodiments, the surfaces **204** and **206** are not parallel. Where the upstream surface **204** and the downstream surface **206** are curved and parallel, the trailing concavity **230** on the upstream surface **204** has a corresponding trailing convexity on the downstream surface **206,** and the leading convexity **238** on the upstream surface **204** has a corresponding leading concavity on the downstream surface **206.** In various embodiments, such as shown in FIGS. **9C** and **9D**, where the thickness of the deflector **200** is relatively small relative to the chord (e.g., tip end chord **224-A** and hub end chord **224-E**), the chord is at least partially outside the profile defined between upstream surface **204** and downstream surface **206,** for example, wherein the chord spans the trailing concavity **230** and/or the leading convexity **238.**

### 5.2 Deflector/Blade Assembly Chord Detail - FIG. 9E - 9J

Referring now to FIG. **9E**, a plan view of an exemplary embodiment of a blade/deflector assembly is shown, including blade **111** and deflector **200** and showing the pressure surface **178** of the blade **111** and the pressure surface **204** of the deflector **200.** Details **A, B, C, D,** and **E** are transverse profile views of the blade/deflector assembly at sections **A-A, B-B, C-C, D-D,** and **E-E,** respectively.

The angles of blade chords **186-A** - **186-E** (relative to the rotor plane of rotation **104** (see FIG. **1A**)) may change along the blade span **154** (see **FIG. 2A**) as further described below.

The angles of deflector chords **224-A** - **224-E** (relative to the rotor plane of rotation **104** (see FIG. **1A**)) may change along the deflector span **223** (see **FIG. 9A**) as further described below.

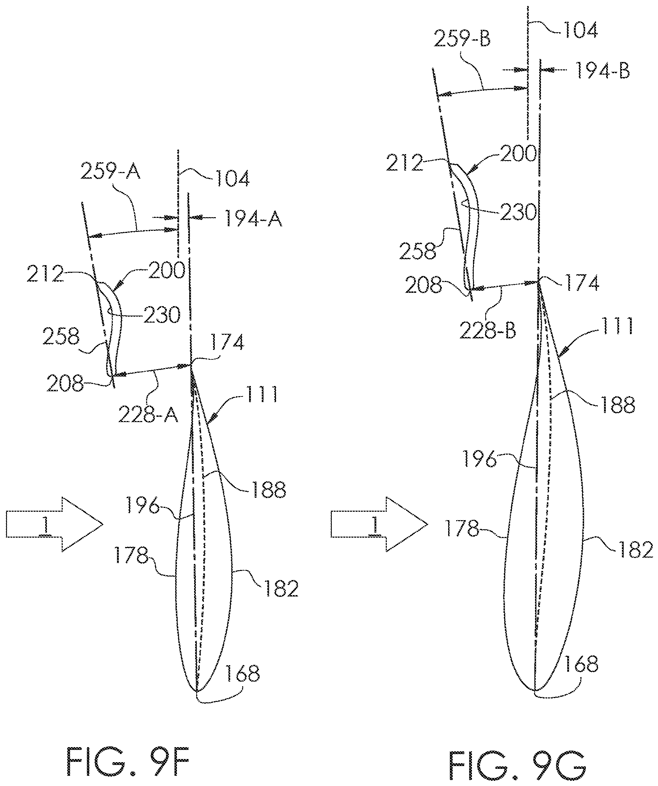

FIG. **9F** is an enlarged view of detail **A** of **FIG. 9E** and shows a tip end profile of the blade/deflector assembly. The blade **111** profile of **FIG. 9F** has a chord line **196** extending from the blade leading edge **168** through the blade trailing edge **174** and a mean camber line **188** representing a line that is equidistant from pressure surface **178** and suction surface **182.** The deflector **200** profile of FIG. **9F** has a chord line **258** extending from leading edge **208** through trailing edge **212,** and the deflector **200** profile includes a trailing concavity **230.**

The blade **111** profile of **FIG. 9F** is oriented at a blade angle of attack **194-A** and the deflector **200** profile of FIG. **9F** is oriented at a deflector angle of attack **259-A.**

Still referring to FIG. **9F**, the leading edge **208** of the deflector **200** profile is spaced from the blade trailing edge **174** of the blade **111** profile by a distance of **228-A** in the direction toward the oncoming fluid flow **1** (upstream).

FIG. **9G** is an enlarged view of detail **B** of FIG. **9E** and shows a profile of the blade/deflector assembly at a distance from the tip end that is twenty percent (20%) of the length of the span **154** of blade **111** (see FIG. **2A**). The blade **111** profile of FIG. **9G** has a chord line **196** extending from the leading edge **168** through the blade trailing edge **174** and a mean camber line **188** representing a line that is equidistant from pressure surface **178** and suction surface **182.** The blade chord **186-B** (see FIG. **9E** Detail B) of the blade **111** profile of FIG. **9G** may be different (e.g., longer) than the blade chord **186-A** (see FIG. **9E** Detail **A**) of the blade **111** profile of FIG. **9F****.** In addition, mean camber line **188** of the blade **111** profile of FIG. **9G** may differ from mean camber line **188** of the blade **111** profile of FIG. **9F****.**

The deflector **200** profile of FIG. **9G** has a chord line **258** extending from leading edge **208** through trailing edge **212** and includes a trailing concavity **230.** The deflector chord **224-B** (see FIG. **9E** Detail **B**) of the deflector **200** profile of FIG. **9G** may be different (e.g., longer) than deflector chord **224-A** (see FIG. **9E** Detail **A**) of the deflector **200** profile of FIG. **9F****.** The curvature of trailing concavity **230** of the deflector **200** profile of FIG. **9G** may be different from the curvature of trailing concavity **230** of the deflector **200** profile of FIG. **9F****.**

The blade **111** profile of FIG. **9G** is oriented at a blade angle of attack **194-B** and may be different from angle of attack **194-A** of FIG. **9F** due to blade twist.

The deflector **200** profile of FIG. **9G** is oriented at a deflector angle of attack **259-B.** The angle of attack **259-B** of the deflector **200** profile of FIG. **9G** may be different than the angle of attack **259-A** of the deflector **200** profile of FIG. **9F****.**

The leading edge **208** of the deflector **200** profile of FIG. **9G** is spaced from the blade trailing edge **174** of the blade **111** profile of FIG. **9G** by a distance of **228-B** in the direction toward the oncoming fluid flow **1** (upstream). Distance **228-B** of FIG. **9G** may be different than distance **228-A** of FIG. **9F** due to variations in vertical and/or horizontal skew (described below).

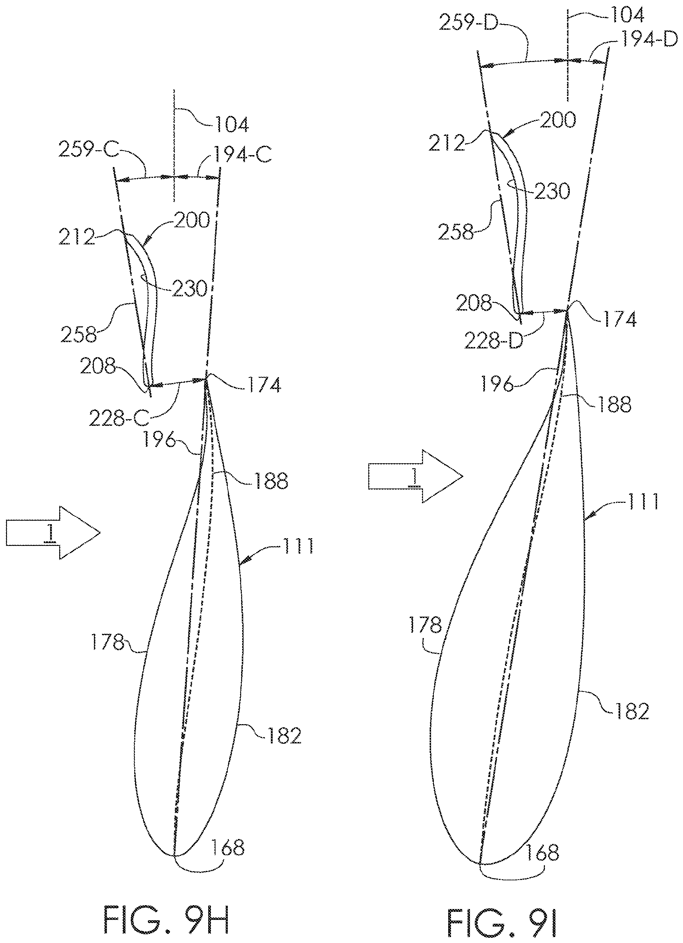

FIG. **9H** is an enlarged view of detail **C** of FIG. **9E****.** The blade **111** profile of FIG. **9H** has a chord line **196** extending from the leading edge **168** through the trailing edge **174** and a mean camber line **188** representing a line that is equidistant from pressure surface **178** and suction surface 182. The chord **186-C** (see FIG. **9E** Detail C) of the blade **111** profile of FIG. **9H** may be different (e.g., longer) than the blade chord **186-A** and **186-B** (see FIG. **9E** Detail A and Detail **B,** respectively) of the blade **111** profiles of FIGS. **9F** and **9G****,** respectively. In addition, mean camber line **188** of the blade **111** profile of FIG. **9H** may differ from mean camber lines **188** of the blade **111** profiles of FIGS. **9F** and **9G**.

The deflector **200** profile of FIG. **9H** has a chord line **258** extending from leading edge **208** through trailing edge **212,** and includes a trailing concavity **230.** The chord **224-C** (see FIG. **9E** Detail **C**) of the deflector **200** profile of FIG. **9H** may be different (e.g., longer) than the deflector chords **224-A** and **224-B** (see FIG. **9E** Detail **A** and Detail **B,** respectively) of the deflector **200** profiles of FIGS. **9F** and **9G**, respectively. The curvature of trailing concavity **230** of the deflector **200** profile of FIG. **9H** may be different from the curvatures of trailing concavities **230** of the deflector **200** profiles of FIGS. **9F** and **9G**.

The blade **111** profile of FIG. **9H** is oriented at a blade angle of attack **194-**C and may be different from blade angles of attack **194-A** of FIG. **9F** and **194-B** of FIG. **9G** due to blade twist.

The deflector **200** profile of FIG. **9H** is oriented at deflector angle of attack **259-C** and may be different than the angles of attack **259-A** and **259-B** of the deflector **200** profiles of FIGS. **9F** and **9G****,** respectively.

The leading edge **208** of the deflector **200** profile of FIG. **9H** is spaced from the trailing edge **174** of the blade **111** profile of FIG. **9H** by a distance of **228-C** in the direction toward the oncoming fluid flow **1** (upstream). Distance **228-C** of FIG. **9H** may be different than distance **228-A** of FIG. **9F** and distance **228-B** of FIG. **9G** due to variations in vertical and/or horizontal skew (described below).

FIG. **9I** is an enlarged view of detail **D** of FIG. **9E**. The blade **111** profile of FIG. **9I** has a chord line **196** extending from the leading edge **168** through the trailing edge **174** and a mean camber line **188** representing a line that is equidistant from pressure surface **178** and suction surface **182.** The blade chord **186-D** (see FIG. **9E** Detail **D**) of the blade **111** profile of FIG. **9I** may be different (e.g., longer) than the blade chords **186-A, 186-B, 186-C** (see FIG. **9E** Detail **A,** Detail **B,** and Detail **C,** respectively) of the blade 111 profiles of FIGS. **9F**, **9G**, and **9H**, respectively. In addition, mean camber line **188** of the blade **111** profile of FIG. **9I** may differ from mean camber lines **188** of the blade **111** profiles of FIGS. **9F**, **9G** and **9H**.

The deflector **200** profile of FIG. **9I** has a chord line **258** extending from leading edge **208** through trailing edge **212,** and includes a trailing concavity **230.** The deflector chord **224-D** (see FIG. **9E** Detail **D**) of the deflector **200** profile of FIG. **9I** may be different (e.g., longer) than the deflector chords **224-A, 224-B, 224-C** (see FIG. **9E** Detail **A,** Detail **B,** and Detail **C,** respectively) of the deflector **200** profiles of FIGS. **9F, 9G**, and **9H**, respectively. The curvature of trailing concavity **230** of the deflector **200** profile of FIG. **9I** may be different from the curvatures of trailing concavities **230** of the deflector **200** profiles of FIGS. **9F**, **9G** and **9H**.

The blade **111** profile of FIG. **9I** is oriented at a blade angle of attack **194-**D and may be different from blade angles of attack **194-A** of FIG. **9F****, 194-B** of FIG. **9G****,** and **194-C** of FIG. **9H** due to blade twist.

The deflector **200** profile of FIG. **9I** is oriented at a deflector angle of attack **259-D** and may be different than the angles of attack **259-A, 259-B** and **259-C** of the deflector **200** profiles of FIGS. **9F**, **9G** and **9H**, respectively.

The leading edge **208** of the deflector **200** profile of FIG. **9I** is spaced from the trailing edge **174** of the blade **111** profile of FIG. **9I** by a distance of **228-D** in the direction toward the oncoming fluid flow **1** (upstream). Distance **228-D** of FIG. **9I** may be different than distance **228-A** of FIG. **9F**, distance **228-B** of FIG. **9G****,** and distance **228-C** of FIG. **9H** due to variations in vertical and/or horizontal skew (described below).

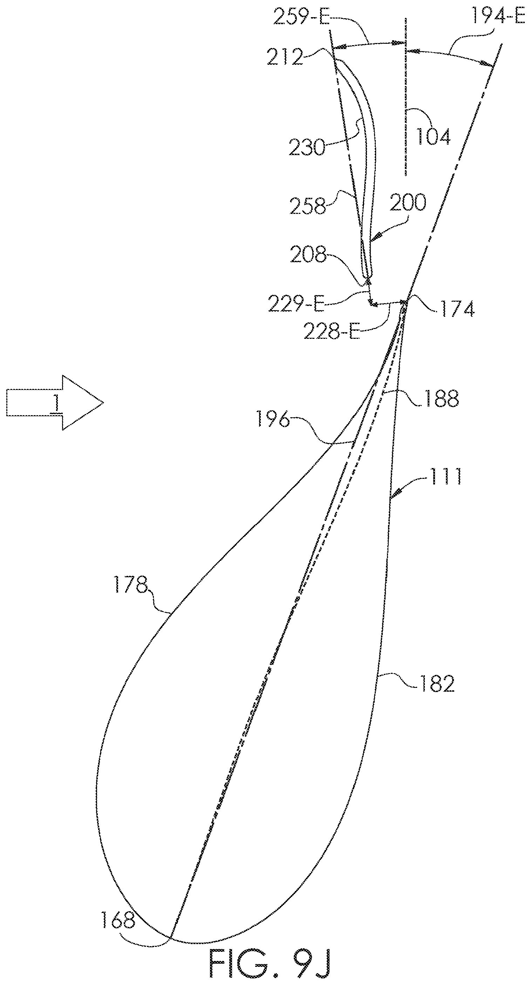

FIG. **9J** is an enlarged view of Detail **E** of FIG. **9E** and shows a hub end profile of the blade/deflector assembly. The blade **111** profile of FIG. **9J** has a chord line **196** extending from the leading edge **168** through the trailing edge **174** and a mean camber line **188** representing a line that is equidistant from pressure surface **178** and suction surface **182.** The blade chord **186-E** (see FIG. **9E** Detail **E**) of the blade **111** profile of FIG. **9J** may be different (e.g., longer) than the blade chords **186-A, 186-B, 186-C,** and **186-D** (see FIG. **9E** Detail **A,** Detail **B,** Detail C, and Detail D, respectively) of the blade **111** profiles of FIGS. **9F**, **9G**, **9H**, and **9I**, respectively. In addition, mean camber line **188** of the blade **111** profile of FIG. **9J** may differ from mean camber lines **188** of the blade **111** profiles of FIGS. **9F**, **9G**, **9H**, and **9I**.

The deflector **200** profile of FIG. **9J** has a chord line **258** extending from leading edge **208** through trailing edge **212,** and includes a trailing concavity **230.** The deflector chord **224-E** (see FIG. **9E** Detail E) of the deflector **200** profile of FIG. **9J** may be different (e.g., longer) than the deflector chords **224-A, 224-B, 224-C,** and **224-D** (see FIG. **9E** Detail **A**, Detail **B,** Detail C, and Detail **D**, respectively) of the deflector **200** profiles of FIGS. **9F**, **9G**, **9H**, and **9I**, respectively. The curvature of trailing concavity **230** of the deflector **200** profile of FIG. **9J** may be different from the curvatures of trailing concavities **230** of the deflector **200** profiles of FIGS. **9F**, **9G**, **9H**, and **9I**.

The blade **111** profile of FIG. **9J** is oriented at a blade angle of attack **194-E** and may be different from angles of attack **194-A** of FIG. **9F****, 194-B** of FIG. **9G****, 194-C** of FIG. **9H****,** and **194-D** of FIG. **9I** due to blade twist.

The deflector **200** profile of FIG. **9J** is oriented at a deflector angle of attack **259-E** and may be different than the angles of attack **259-A, 259-B, 259-C** and **259-D** of the deflector **200** profiles of FIGS. **9F**, **9G**, **9H**, and **9I**, respectively.

The leading edge **208** of the deflector **200** profile of FIG. **9J** is spaced from the trailing edge **174** of the blade **111** profile of FIG. **9J** by a distance of **228-E** in the direction toward the oncoming fluid flow **1** (upstream). Distance **228-E** of FIG. **9J** may be different than distance **228-A** of FIG. **9F****,** distance **228-B** of FIG. **9G**, distance **228-C** of FIG. **9H**, and distance **228-D** of FIG. **9I** due to variations in vertical and/or horizontal skew (described below).

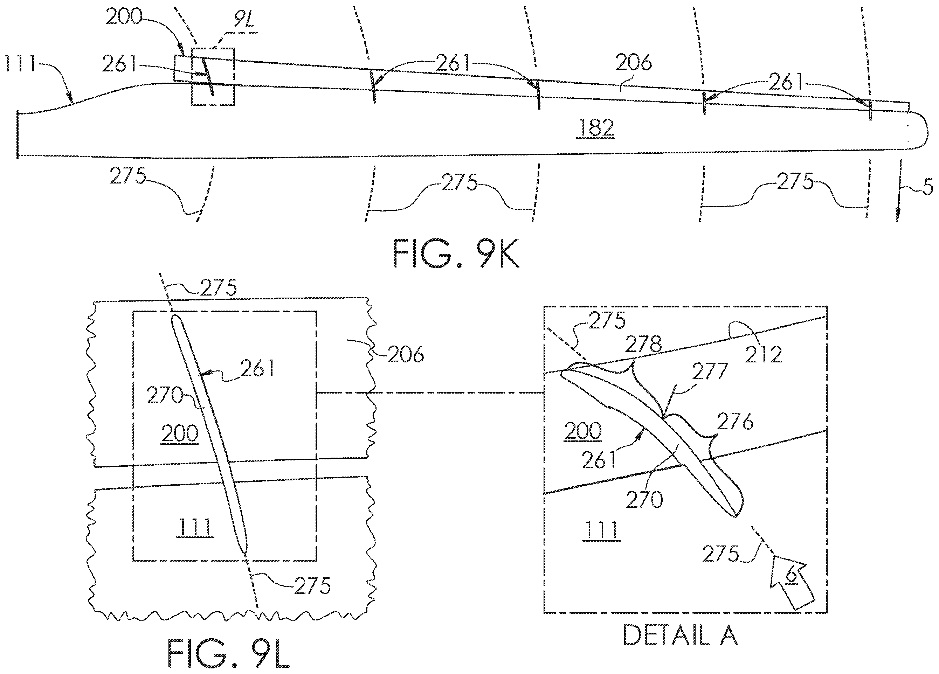

### 6. Fixed Connectors and Related Structures - FIG. 9K - FIG. 9N

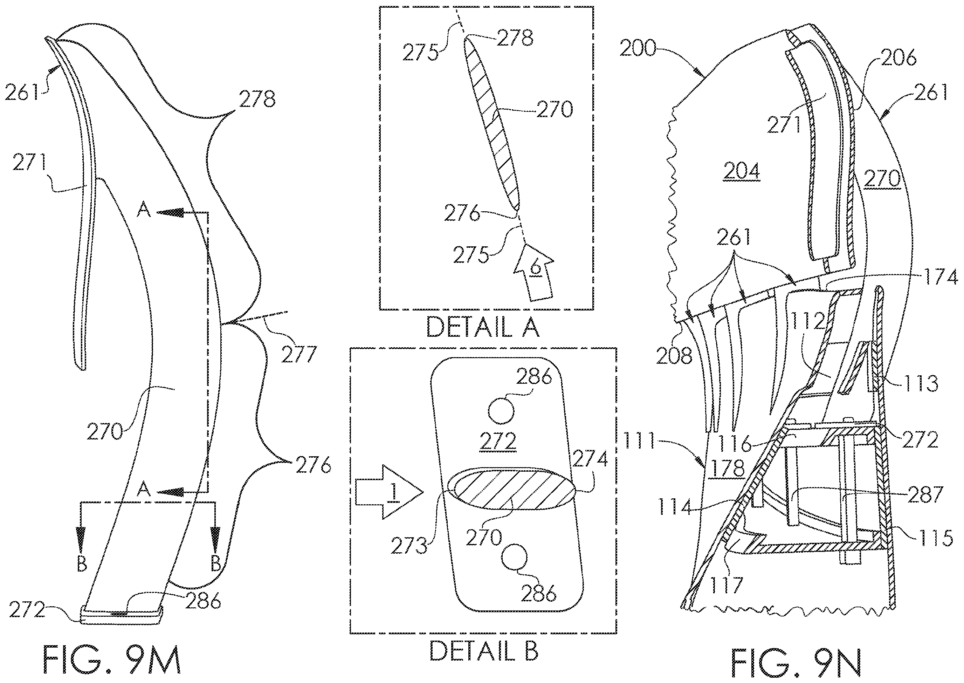

Referring now to FIG.**9K****,** an embodiment of deflector **200** is fixedly linked to the blade **111** suction side **182** via one or more connector assemblies (or connector brackets) **261.** As shown in FIG. **9M****,** in an embodiment, connector assembly **261** includes a deflector-end flange **271** at which the connector assembly **261** is attached to deflector **200,** a blade-end flange **272** at which the connector assembly **261** is attached to rotor blade **111,** and a connector tube **270** extending between and connecting blade-end flange **272** and deflector-end flange **271.** Flange **272** may have one or more holes **286** for fasteners used to fixedly link assembly **261** to structural members within a blade **111** as described below.

In an embodiment, as shown in FIGS. **9K** and **9L**, connector assemblies **261** have longitudinal shapes between the rotor blade **111** and the deflector **200** that follow their respective paths of travel **275** of rotation **5** about the rotor axis of rotation **123** (see FIG. **1A**) (i.e., each connector assembly **261** conforms to an arc centered on the rotor axis of rotation **123** (see FIG. **1A**) and having a radius corresponding to the spanwise position of the connector assembly)). In the illustrated embodiment, as shown in FIG. **9L****,** connector tube **270** is shaped to conform to path of travel **275** between connecting blade-end flange **272** and deflector-end flange **271** (see FIG. **9M**). Other embodiments of deflector connector assemblies may have different longitudinal shapes.

Connector assemblies **261** embody two sets of leading and trailing edges; one set of leading and trailing edges minimizes drag induced by oncoming fluid flow, and a second set of leading and trailing edges minimizes drag induced by rotational fluid flow and apparent velocity **6.** Both sets of edges as further described below.

FIG. **9L** is a cropped magnified rear view of deflector/blade assembly showing a portion (i.e., tube **270**) of single connector assembly **261** extending between blade **111** and deflector **200.**

Referring now to FIG. **9L** and **9L** Detail **A** and FIG. **9M** and **9M** Detail **A,** connector assembly **261** includes rotational flow leading edge **276** and rotational flow trailing edge **278,** which are oriented to align with the rotational flow and can be oriented at the designer's choice for any particular RPM.. That is, tube **270,** where shown, extends from the deflector **200** and from blade **111** substantially into the apparent velocity fluid flow **6** passing over the downstream surface **206** and downstream surface **182.** Due to a curvature of an outer edge of the tube **270** (i.e., the edge furthest away from downstream surface **206** and downstream surface **182**), apparent velocity fluid flow **6** first contacts portion **276** of an outer edge of the tube **270,** flows around the tube **270,** and then flows past portion **278** of the outer edge of the tube **270.** Leading edge **276** begins at the point nearest the oncoming rotational flow, and apparent velocity fluid flow **6,** and ends at an apex **277** of the curvature of tube **270** (see FIG. **9M** and FIG. **9L** Detail **A**). The rotational flow trailing edge **278** begins at apex **277** and ends at the point of connector assembly **261** nearest the deflector trailing edge **212.**

Referring now to FIG. **9M** Detail **A,** which is a cross-section along line **A-A** in FIG. **9M****,** while still referring to FIG. **9L****,** a longitudinal cutaway of connector assembly **261** reveals the elliptical shape of an embodiment of tube **270.** Section **A-A** of tube **270** may have an aerodynamic shape with tapered ends to the leading edge **276** and to trailing edge **278** and may be laterally symmetric about a line bisecting the section between leading edge **276** and trailing edge **278.** Exemplary shapes may include elliptical, an ogive, a spherically blunted ogive, or parabolic, among other similar shapes.

Referring now FIG. **9L** Detail **A,** the longitudinal shape of connector assembly **261** follows the arc of rotational path of travel **275** from the leading edge **276** to trailing edge **278.**

Referring now to FIG. **9M** Detail **B,** which is a cross-section along line **B-B** in FIG. **9M****,** while still referring to FIG. **9M****,** tube **270** has a leading edge **273,** oriented toward the oncoming fluid flow **1,** and an opposite trailing edge **274.** Tube **270** is oriented with respect to blade **111** and deflector **200** so that, when the blade/deflector assembly is in a static, non-rotating, state, oncoming fluid flow **1,** flows around the tube **270** from leading edge **273** to trailing edge **274.** Section **B-B** of tube **270** may have an aerodynamic shape with tapered ends to the leading edge **273** and to the trailing edge **274** and may be laterally symmetric about a line bisecting the section between leading edge **273** and trailing edge **274.** Exemplary shapes may include elliptical, an ogive, a spherically blunted ogive, or parabolic, among other similar shapes.

Accordingly, tube **270** defines two sets of leading and trailing edges, leading edge **273** and trailing edge **274** with respect to oncoming fluid flow impinging on a static blade deflector assembly, and leading edge **276** and trailing edge **278** with respect to apparent fluid flow impinging on a rotating blade deflector assembly. The connector tube **270** leading edge **273,** trailing edge **274,** leading edge **276** and trailing edge **278** (collectively "connector tube edges") reduce drag, e.g. by reducing the drag coefficient, i.e., a tapered edge has a lower drag coefficient than does a square edge. Note that trailing edge **274** encompasses both leading edge **276** and trailing edge **278.** The geometry of tube **270** can be altered such that its cross-section more benefits low speed - whereby leading and trailing edges **273** and **247** are more tapered, or benefits high speed, where leading and trailing edges **276** and **278** are more tapered.

Referring now to FIG. **9N****,** in an embodiment, the leading edge **208** of deflector **200** is positioned near the blade trailing edge **174.** The deflector-end flange **271** is connected to deflector **200** (e.g., by mechanical fasteners (screws, bolts, rivets), adhesive, welding, co-molding, inter-laminating, or some combination(s) thereof) so that the flange **271** is preferably embedded within the thickness of deflector **200** between the upstream surface **204** and the downstream surface **206.** The blade-end flange **272** is fixedly linked to the u-shaped webs **116** and **117** within blade **111** via fasteners **287.** In another embodiment, deflector to blade connectors may be externally fixedly linked to deflector **200** and/or blade **111.** Reinforcements **114** and **115** are fixedly linked within blade **111** and strengthen it where it is fixedly linked to the webs **116** and **117.** Webs **116** and **117** and reinforcements **114** and **115** may run along any length of the blade span **154** (see FIG. **2A**.)

Connector assemblies **261** conform to the twist of the deflector/blade assembly and the concavity and convexity of deflector **200** thus the (i) twist and/or, (ii) length or angle of connector assemblies **261** may vary over the deflector span **223** (see FIG. **9A**).

### 7. Working Principles, Flow Simulation Results and Physical Test Results

The units of pressure in the plots referenced in this Section are expressed in Pascals (Pa).

The deflector **200** increases and decreases pressure and/or velocity where desired on the blade **111** (see FIGS. **2A** and **2B**) resulting in positive torque increases on blade **111** with the benefit of a deflector **200** as compared to a similar blade **111** without the benefit of a deflector **200.** Consequently, a blade **111** benefited by a deflector **200** has a global torque at a given fluid speed that is higher than a similar blade operating under the same conditions without a deflector, e.g., a blade with a deflector running in an 8-mph wind speed performs similarly to a similar blade without a deflector running in an 11-mph wind speed.

The figures containing profiles and isometric views of blades and deflector/blade assemblies referred to in this Section, and plots contained in the referenced figures, are as obtained from flow simulation and correlate with performance data observed during physical testing of scaled physical models. The CAD model of the rotor used in the Section is 93 meters in diameter. Pressures and suctions recorded in all profile and isometric views in this Section were measured at a distance of 41.66 meters from the rotor axis of rotation **123** (see FIG. **1**).

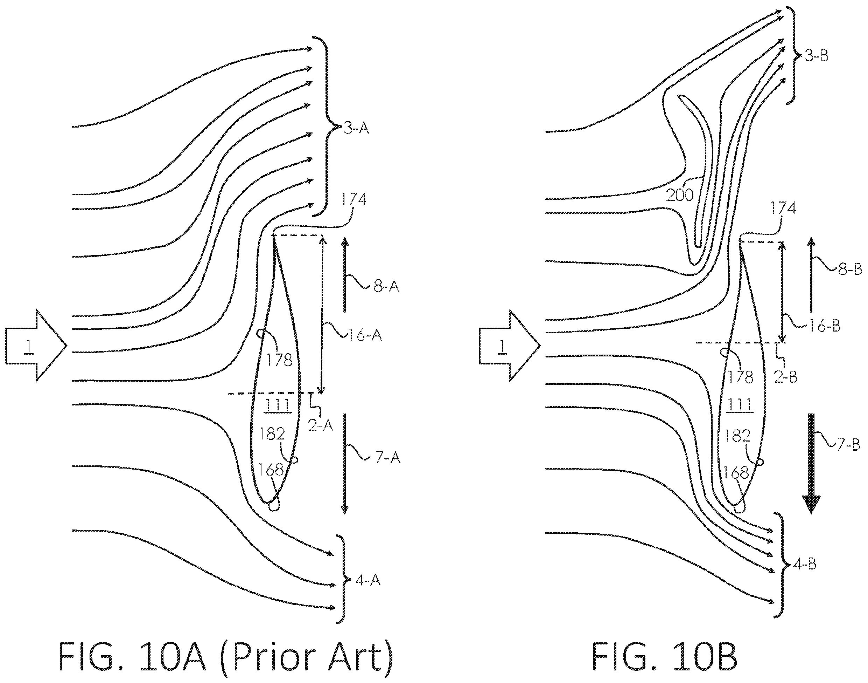

### 7.1 Fluid Flow and Pressures Prior to Rotation - FIG. 10 A - FIG. 10 F

FIG. **10A** is a side view of a section of a static, non-rotating blade **111** without a deflector **200** and shows flow trajectory lines around the blade **111.** **FIG. 10B** is a side view of a section of a static, non-rotating deflector/blade assembly, including the blade **111** and associated deflector **200,** and shows flow trajectory lines around the deflector/blade assembly. The velocity of fluid flow **1** in FIGS. **10A** and **10B** is so low (e.g., 2.0 m/s) that blade **111** has not begun to rotate due to mechanical resistance, e.g., due to the generator **128** (see FIG. **1B**) and/or due to overcoming the inertia of rotor **110** (See FIG. **1A**).

Referring now to FIG. **10A****,** fluid flow **1** impacting the pressure surface **178** of the blade **111** exhibits a pressure side transition point **2-A** at a distance **16-A** from the blade trailing edge **174.** The transition point **2-A** is where the oncoming fluid flow **1** separates, with (i) a portion of the fluid flow **3-A** being pushed toward and accelerating around blade trailing edge **174** (up in the illustration) of the blade **111,** and a portion of the fluid flow 4**-A** being pushed toward and accelerating around leading edge **168** of the blade **111** (downward in the illustration). Fluid flow **4-A** that moves windward past leading edge **168** results in a suction side **182** low pressure and desirable positive torque **7-A.** Fluid flow **3-A** that moves windward over blade trailing edge **174** results in a suction side **182** low pressure and undesirable negative torque **8-A.**

Referring now to FIG. **10B** while still referring to FIG. **10A****,** deflector **200** deflects a portion of the oncoming fluid flow **1** that would otherwise pass behind (above in the illustration) the blade's trailing edge **174** without impacting the blade **111,** and causes a portion of the oncoming fluid flow **1** that would impact the blade near its trailing edge **174,** irrespective of the deflector **200,** to flow toward (downward in the illustration) and around the blade's leading edge **168.** The deflected flow results in (i) more fluid volume passing over the blade pressure surface **178,** including toward and past the leading edge **168,** and consequently across the suction surface **182,** and consequently (ii) increasing and decreasing pressures as desired on the pressure surface **178** beneficial areas (see Subsections **1.2** and **1.3**), and (iii) increasing and decreasing suction as desired in beneficial areas (see Subsections **1.2** and **1.3**) on the suction surface **182.**

The increased flow volume flowing around the leading edge **168** of blade **111** increases the pressure as desired between a transition point **2-B** and blade trailing edge **174** (see beneficial area **16** - see FIG. **2G****).** The increased volume and pressure causes: (i) the pressure side transition point **2-B** of the deflector/blade assembly to move closer to the blade trailing edge **174** as compared to transition point **2-A,** thus reducing distance **16-B** between the transition point **2-B** and the blade trailing edge **174** as compared to distance **16-A** in FIG. **10A****,** (ii) a lessor fluid flow **3-B** of the oncoming fluid flow **1** to be pushed toward and around the blade trailing edge **174** thus reducing the detrimental suction and negative torque in beneficial area **16** (see FIG. **2G**), and (iii) a greater fluid flow **4B** to be pushed toward and around the blade leading edge **168** as compared to fluid flow **4A** in Fig. **10A****,** thus increasing the suction in beneficial area **14** (see FIG. **2G**) on the blade suction side **178.**

The additional fluid flow **4-B** on the pressure side **178** of the blade **111** of the deflector/blade assembly of FIG. **10B** is compounded and pushed by the oncoming fluid flow **1** past the blade leading edge **168,** thereby reducing pressure on the suction side **182** of the blade **111** between the transition point **2-B** and the blade leading edge **168** as compared to a blade **111** without the benefit of a deflector **200** (see FIG. **10A****,** i.e., as compared to a blade having less fluid flow **4-A** around the blade leading edge **168**).

Consequently, the additional flow volume from deflector **200** results in (i) reduced detrimental suction and negative torque **8-B** as compared to **8-A,** (ii) increased desirable suction and greater positive torque **7-B** as compared to **7-A,** and (iii) increased global torque on the blade **111** with the benefit of deflector **200** (FIG. **10B**) as compared to the blade **111** without the benefit of the deflector **200** (FIG. **10A**).

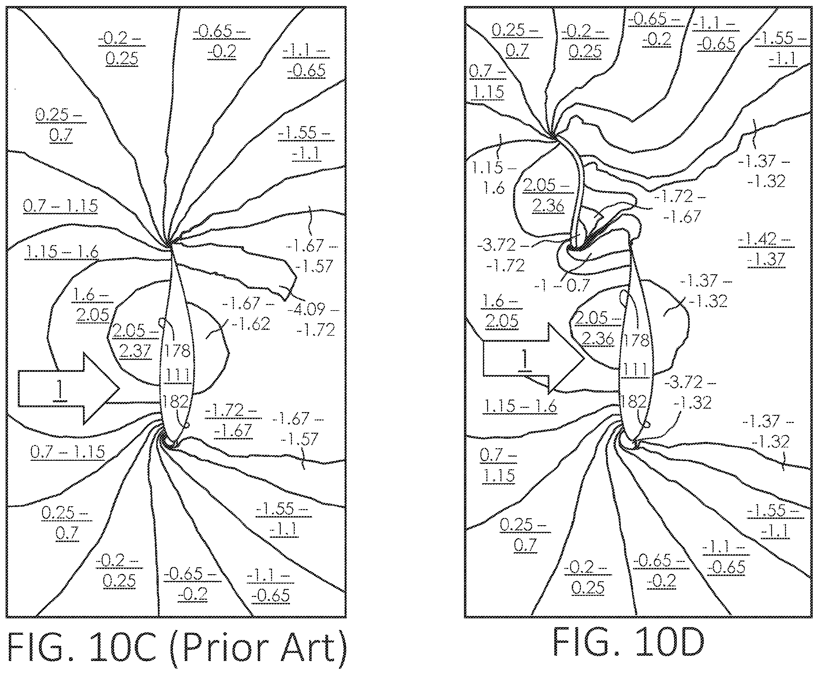

FIG. **10C** is a side view of a pressure plot around the blade surfaces of the blade of FIG. **10A****,** and FIG. **10D** is a side view of a pressure plot around the blade and deflector surfaces of the deflector/blade assembly of FIG. **10B****.** Referring now to FIG. **10C** and FIG. **10D****,** performance improvements seen in pressures are visible when comparing the two pressure plots, and are very significant near the blade trailing edge **174** (see FIGS. **10C** and **10D**) of the blade suction side **182** where the minimum pressure of -4.09 Pa on the blade **111** without the benefit of a deflector **200** in FIG. **10C** (pressure region -4.09 - -1.72 Pa) has dropped more than 2.5 times to -1.42 Pa in FIG. **10D** in the same area on the suction side of the blade **111** that is benefited by deflector **200** (pressure region -1.42 - -1.37 Pa). It is important to note that the performance improvements shown in the plots (FIG. **10C** and **10D**) are occurring near the blade tip end **151** (see FIG. **9E** Detail **A**) where the moment arm is the longest, thus contributing to the blade benefited by the deflector beginning to rotate sooner, and in a lower fluid speed, than the blade not benefited by the deflector.

The 93 meter CAD model described above, and which flow analysis results follow, was scaled down by 146.4 times and its chord was truncated by three percent (3%) to accommodate 3D print technology. The physical diameter is 25 inches. Its performance was measured with redundant sensors, all with the same results, and recorded with a programmable logic controller. Sample physical test performance data comparing scaled model rotors having blades with and without deflectors, with both rotors under the identical load (resistance), from 0 - 15.5 m/s. The results from the 0-2.68 m/s are included in the table below. As demonstrated by the test data, rotor rotation was initiated at a lower wind speed for the rotor having blades with deflectors, and rotor rotation at the same wind speed is higher for the rotor having blades with deflectors.

| **Wind speed (m/s)** | **Blade without deflector** | **Blade with deflector** |
|---|---|---|
| | **RPM** | **RPM** |
| 1.16 | 0 | 8 |
| 1.88 | 0 | 86 |
| 2.68 | 62 | 148 |

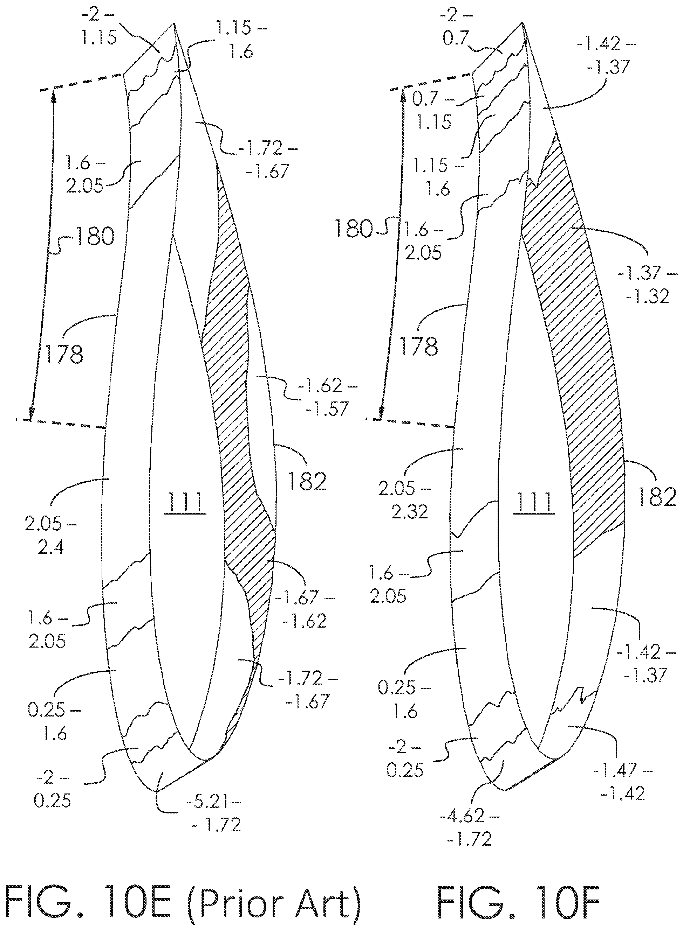

Referring now to FIG. **10E** and **10** **F,** both of which are magnified side isometric views of FIG. **10A** and **10B** respectively, showing surface pressures on the upstream and downstream surfaces of the section and in which pressure regions are displayed on the outside of the upstream surface and on the inside of the downstream surface. Significant performance improvements can be seen over suction surface **182** of the blade **111.** For example, the narrow-crosshatched portion of the suction surface of blade **111** benefited by a deflector **200** (see FIG. **10F**) has a lower pressure magnitude of -1.37 - 1.32 Pa than does the suction surface of a blade without the benefit of a deflector **200** with a pressure magnitude of -1.67-1.62 Pa (see FIG. **10E**) and in beneficial area **16** (see FIG. **2G**) where a lower pressure has a performance benefit as this is an area at which negative torque is generated.

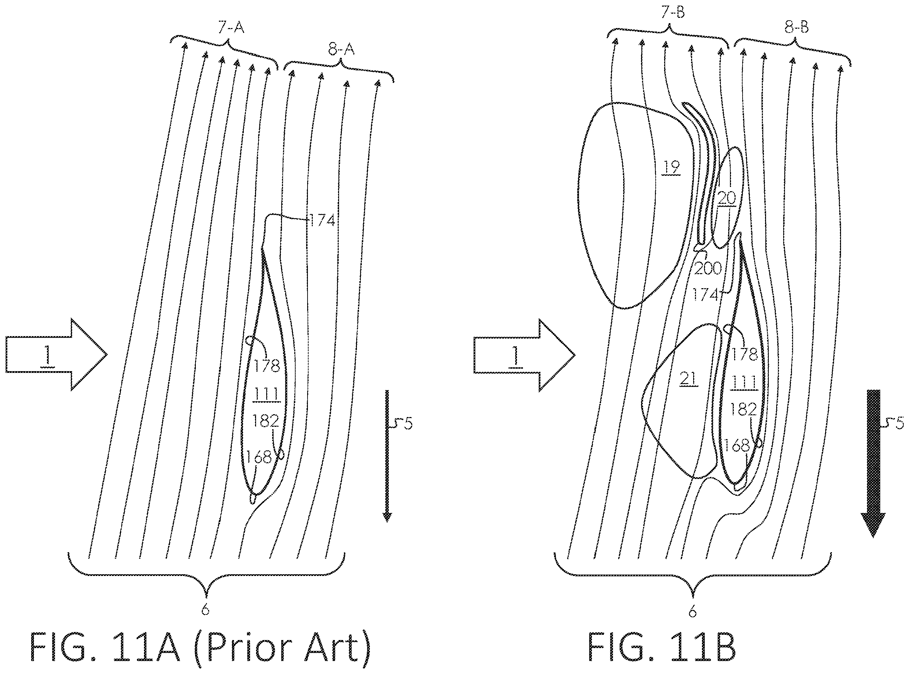

### 7.2 Fluid Flow and Pressures During Rotation at 3.5 m/s - FIGS. 11 A - J

The figures in this Subsection depict flow simulation results from a 93 meter diameter rotor, studied in an oncoming fluid **flow 1** speed of 3.5 m/s, rotating at 4.3 RPM in the desired counterclockwise rotation **5** (down in the illustration) about the rotor axis of rotation **123** of the rotor **110** (see FIG. **1A**). The profile views and center of the isometric views show results obtained at a distance of 41.66 meters from the rotor axis of rotation **123** (see FIG. **1A**). At such distance from the hub axis, the profile views and center of the isometric views in this Subsection are rotating at a circumferential speed of 18.8 m/s.

FIG. **11A** is a side view of a section of a rotating blade **111,** without a deflector, which shows apparent velocity flow trajectory lines around the pressure (upstream) surface **178** and suction (downstream) surface **182** of the blade. **FIG. 11B** is a side view of a section of a rotating deflector/blade assembly, including a blade **111** and a deflector **200,** near the tip of the blade as described above, which shows apparent velocity flow trajectory lines around the pressure (upstream) surface **178** and suction (downstream) surface **182** of the deflector/blade assembly and representative pressure regions. Although it is expected the blade in FIG. **11B** would rotate faster than the blade in FIG.**11A** due to improved blade pressure conditions caused by the deflector, which physical testing confirms, the flow analysis did not include a feedback loop for determining RPM based on blade pressure. Thus, for purposes of the flow analysis, the RPM was artificially set at the same level for both blades, with and without a deflector. Accordingly, it is expected that the performance results observed in the flow analysis and reported herein are actually understated for the blade with a deflector.

Referring now to FIG. **11A****,** the fluid flow from apparent velocity **6** separates as it nears the blade leading edge **168,** with fluid flow **7-A** passing adjacent to the pressure side **178** of blade **111,** and fluid flow **8-A** accelerating adjacent to the suction side **182** of blade **111.** The pressure differential between the pressure side **178** and the suction side **182** and its interaction with the geometry of blade **111** causes blade **111** to rotate in the desired counterclockwise rotation **5.**

Referring now to FIG. **11B****,** while still referring to FIG. **11A****,** as the apparent velocity **6** nears the blade leading edge **168,** it separates differently than it would without the benefit of a deflector **200,** with a greater amount of apparent velocity **8-B** passing adjacent to blade suction side **182.** The difference is caused by the deflector **200** creating a high-pressure area **19** on the upstream side of the deflector **200** and a high-velocity-low-pressure area **20** on the downstream side of the deflector **200,** which offsets drag resulting from high pressure area **19,** as further described below.

The high-pressure area **19:** (i) increases in size and magnitude by the oncoming fluid flow **1** impinging on the deflector **200** and which would otherwise not affect the performance of blade **111** if it was not benefited by a deflector **200,** (ii) appreciably increases the pressure in area **21** (increase in size and magnitude) adjacent to blade pressure surface **178** in beneficial area **10** (see FIG. **2G**) and consequently by diverting more apparent velocity fluid flow **6** over the blade suction surface **182,** thus increasing fluid flow **8-B** and positive torque on the blade suction surface **182** as compared to **8-A** in FIG. **11A****,** (iii) slows the apparent velocity of fluid flow **7-B** as it nears and passes the blade pressure side **178,** and (iv) reduces the volume and velocity of fluid flow **7-B** adjacent to the blade concavity **180** (see also FIG. **2A** Detail **A** - **C**), which collectively results in a positive torque on the pressure surface **178** and increasing global torque on blade **111** as compared to a blade **111** without the benefit of deflector **200** in FIG. **11B** which has a negative torque on its pressure surface **178 A** negative torque on the pressure surface in FIG. **11B** without the benefit of deflector **200.**

The high-pressure area **21** on pressure surface **178** of blade **111** results in a greater portion of the apparent velocity **6** that is approaching the blade leading edge **168** to change direction and flow over the suction surface **182** rather than the pressure surface **178** (which would normally cause additional drag on the pressure surface **178** in beneficial area **11** (see FIG. **2G**)), thereby converting an undesirable pressure side **178** drag force into a desirable suction surface **182** force near the blade leading edge **168** where it benefits performance by increasing positive torque. High pressure area **21** also results in the apparent velocity fluid flow **6** accelerating at a higher velocity adjacent to the suction surface **182.** The increased flow at higher velocity over suction surface **182** results in a greater suction from the leading edge **182** through beneficial area **15** (see FIG. **2G**), and consequently greater positive torque on the suction side **182** of the blade **111** than occurs on a blade **111** without the benefit of deflector **200.**

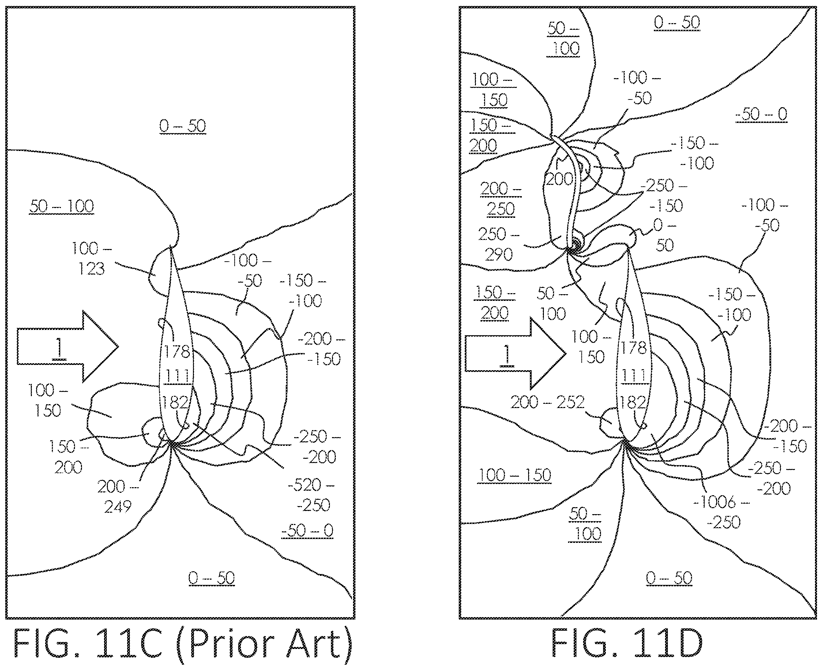

Referring now to FIG. **11C** and FIG. **11D****,** performance improvements are exemplary of beneficial pressure changes along the blade span **154** (see FIG. **2A**). For example, referring now to FIG. **11C****,** the (i) pressure on the blade pressure side **178** beneficial area **10** (see FIG. **2G**) is 100 - 123 Pa on the blade **111** without the benefit of deflector **200** as compared to 100 - 150 Pa on blade **111** with the benefit of deflector **200** covering more than 1.5 times the surface of the beneficial area **10** (see FIG. **2G**), and (ii) suction on the suction side **182** near the leading edge on a blade **111,** in beneficial area **14** (see FIG. **2G**) without the benefit of a deflector **200** is -520 - -250 Pa as compared to -1006 - -250 on a blade **111** with the benefit of a deflector **200** (see FIG. **11D**). Consequently, both the blade pressure side **178** and suction side **182** generate greater positive torque due to the deflector **200.**

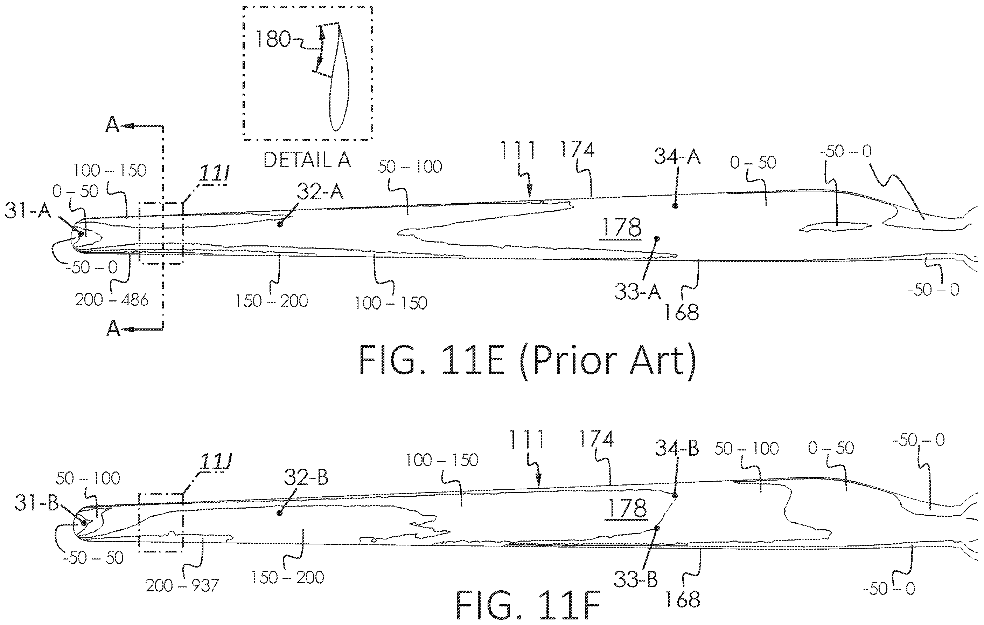

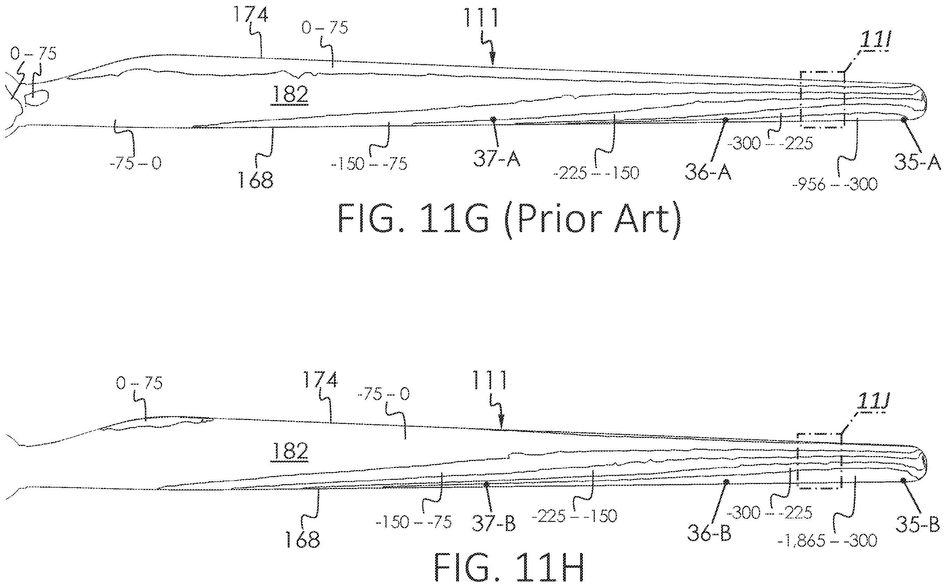

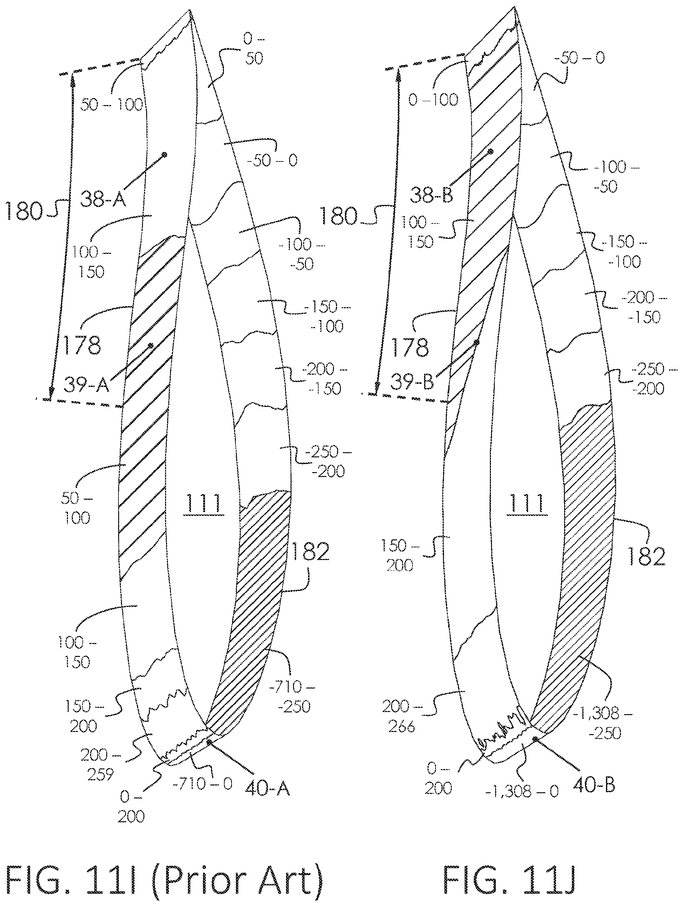

Referring now to FIG. **11E** and FIG. **11F****,** the benefits of the deflector **200** in a 3.5 m/s wind on the pressure surface **178** are apparent along the blade span **154** (see FIG. **2A**). For example, the pressure on the trailing concavity **180** is 100 - 150 Pa over about twenty-eight percent (28%) of the blade **111** span **154** (see FIG. **2A**), without the benefit of deflector **200** (see FIG. **11E**), as compared to 100 - 150 Pa over at least seventy-nine percent (79%) of the blade **111** span **154** (see FIG. **2A**) with the benefit of deflector **200** (see FIG. **11F**). Also, the higher pressures shown in FIG. **11F** are in a more beneficial area due to their increased slope angles (see Subsection **1**.**2**) on the blade, i.e., an area of the blade geometry for which the pressure difference benefits blade (rotor) performance. The deflector **200** (see FIG. **9A**) is not shown in the pressure plots shown in FIGS. **11F****,** **11H** and **11J**.

Referring now to FIG. **11** **G** and FIG. **11H****,** the benefits of the deflector **200** in a 3.5 m/s wind on the suction (downstream) surface **182** occur along the blade span **154** (see FIG. **2A**). For example, the suction on the suction side **182** near the tip on a blade **111** and near the leading edge **168** without the benefit of a deflector **200** is -956--300 Pa (see FIG. **11G**) as compared to -1865 - -300 on a blade near the tip and near the leading edge with the benefit of a deflector **200** (see FIG. **11H**) - nearly double the maximum suction. Also, as can be seen by comparing FIG. **11G** and FIG. **11H****,** the area over which the pressure on the suction surface is -1865 - -300 Pa with a deflector (FIG. **11H**) is more than 3 times the size the area over which the pressure on the suction surface is -956 - -300 Pa without a deflector (FIG. **11G**).

Referring now to FIG. **11I** and **11J****,** both of which are magnified side isometric views of section **111** of FIGS. **11E** and **11G****,** and section **11J** of FIGS. **11F** and **11G****,** respectively, surface pressures are shown on the respective pressure surfaces and suction surfaces.

The benefit of deflector **200** in a 3.5 m/s wind on the upstream and downstream surfaces of a section of blade **111** (see FIG. **11J**) is shown on a section of blade **111** in the same wind speed without the benefit of a deflector **200** (see FIG. **11I**). For example, on blade **111** without the benefit of a deflector **200** (see FIG. **11I**), the pressure on a large portion of pressure surface **178,** with wide crosshatching, is 50 Pa - 100 Pa in an area with a small slope angle thus less beneficial part of area **10** (see Subsections **1.2- 1.3**) as compared to 100 Pa - 150 Pa shown in the wide crosshatched area on pressure surface **178** on a blade **111** with the benefit of deflector **200** (see FIG. **11J**), and entirely in beneficial area and with a greater slope angle (see Subsections **1.2-1.3).** Also on blade **111** without the benefit of a deflector **200** (FIG. **11I**), the suction on the suction side **182** shown in narrow crosshatching is -710 - -250 Pa as compared to -1308 - -250 Pa shown in the narrow crosshatched area on the suction surface **182** on a blade **111** with the benefit of a deflector **200** (FIG. **11J**), and in a greater beneficial area (see Subsections **1.2-1.3).** The increased negative pressure on the suction side **182** near the leading edge **168** due to the deflector **200** generates higher positive torque further adding to the performance improvement seen on the blade with the benefit of the deflector **200.**

Additional examples of performance improvements via comparisons of common points on the pressure surface **178** and suction surface **182** on blade **111** between the blade without the benefit of the deflector and the blade with the deflector, are shown in the table below. However, it is important to note that the pressure side **182** of blade **111** has areas that ideally benefit from pressure, and other areas that ideally benefit from suction. Likewise, the suction side **182** of blade **111** has areas that ideally benefit from suction, and other areas that ideally benefit from pressure (see Subsections **1.2** and **1.3**). The following chart includes the desired pressure type, low pressure (suction), or high pressure for the points measured.

| **Blade without deflector** | | | **Blade with deflector** | |
|---|---|---|---|---|
| **Desired Pressure Type** | **Reference Number** | **Pressure [Pa]** | **Reference Number** | **Pressure [Pa]** |
| | FIG. 11E | | FIG. 11F | |
| Low | 31-A | 7.1 | 31-B | -34 |
| High | 32-A | 85 | 32-B | 167 |
| High | 33-A | 24 | 33-B | 100 |
| High | 34-A | 28.3 | 34-B | 100 |

| | **FIG. 11G** | | **FIG. 11H** | |
|---|---|---|---|---|
| | **Reference Number** | **Pressure [Pa]** | **Reference Number** | **Pressure [Pa]** |
| Low | 35-A | -306 | 35-B | -400 |
| Low | 36-A | -643 | 36-B | -1 265 |
| Low | 37-A | -175 | 37-B | -324 |

| | FIG. 11I | | FIG. 11J | |
|---|---|---|---|---|
| | Reference Number | Pressure [Pa] | Reference Number | Pressure [Pa] |
| High | 38-A | 114 | 38-B | 129 |
| High | 39-A | 86 | 39-B | 150 |
| Low | 40-A | -630 | 40-B | -1239 |

Physical test results for at 3.5 m/s were:

| **Wind speed (m/s)** | **Blade without deflector** | **Blade with deflector** |
|---|---|---|
| | **RPM** | **RPM** |
| 3.5 | 101 | 256 |

The deflector performs similarly but improvements are even more pronounced as the fluid speed increases as further described below.

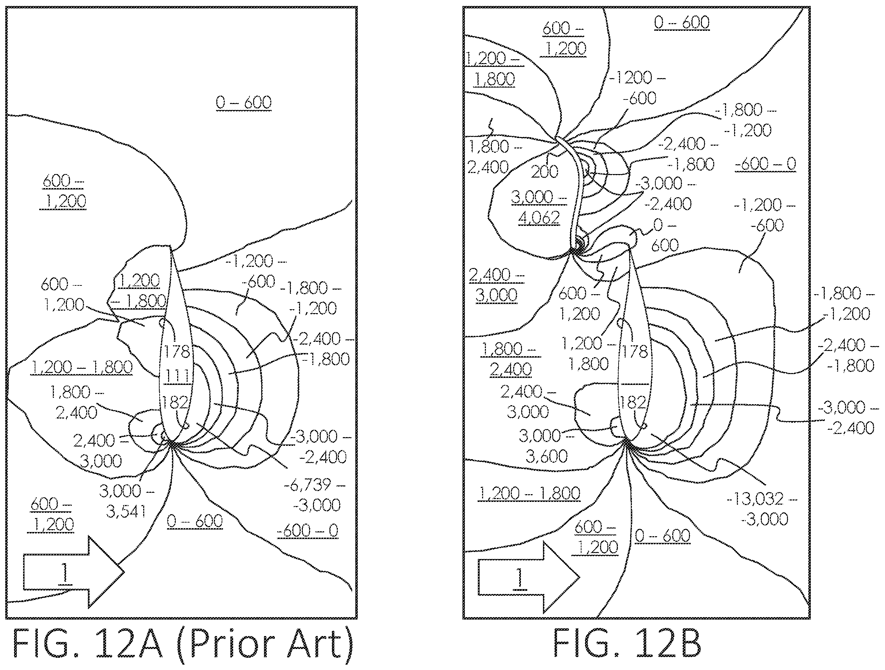

### 7.3Fluid Flow and Pressures During Rotation at 13 m/s - FIGS. 12A - H

The deflector affects flow similarly while rotating in all fluid speeds. Consequently, the explanation in the previous subsection with respect to how the deflector works applies to this subsection. Moreover, as a result of kinetic fluid energy being proportional to the square of the fluid velocity, the deflector performance improves exponentially as the velocity increases. In addition, the flow trajectories and pressure plots are similar when the deflector/blade assembly is rotating irrespective of the fluid speed, however the pressures, suctions, and global torque performance figures are significantly higher the greater the fluid speed.

The figures in this Subsection depict flow simulation results from a 93 meter diameter rotor, studied in an oncoming fluid flow **1** speed of 13 m/s, rotating at 16 RPM in the desired counterclockwise rotation **5** (down in the illustration) about the rotor axis of rotation **123** (see FIG. **1A**). The profile views and center of the isometric views show results obtained at a distance of 41.66 meters from the rotor axis of rotation **123** (see FIG. **1A**). At such distance from the rotor axis of rotation **123,** the profile views and center of the isometric views in this Subsection are rotating at a circumferential speed of 69.8 m/s. Again, for purposes of flow analysis, the blades with and without a deflector are rotating at the same speed, and thus, physical testing indicates that the results reported herein for the blade/deflector combination are understated.

Referring now to FIG. **12A** and **12B****,** the oncoming fluid flow **1** is 13 m/s, and blade **111** is rotating in the desired counterclockwise rotation (down in the figure) about the rotor axis of rotation **123** (see FIG. **1A**).

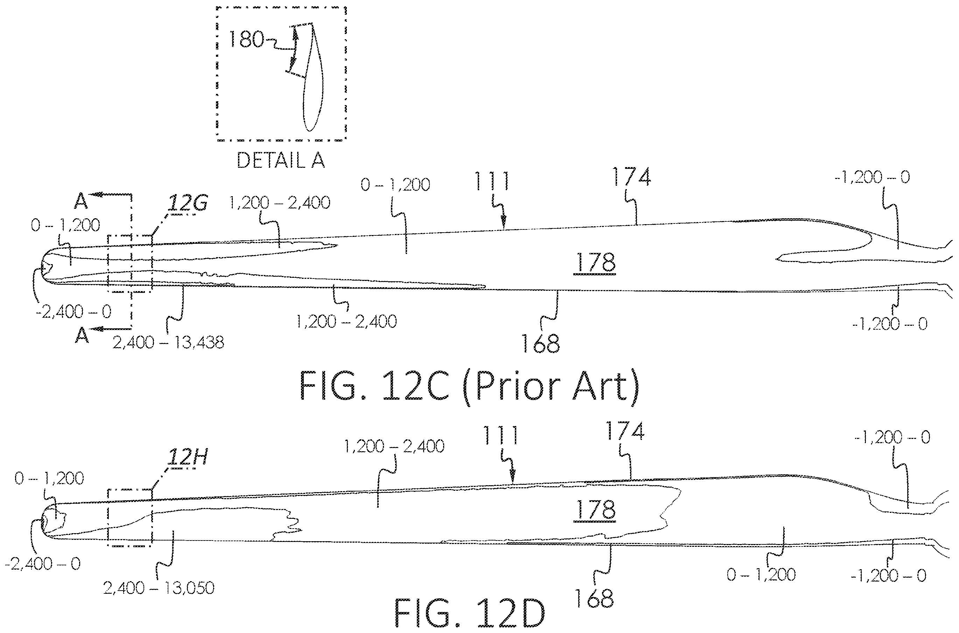

Performance improvements at a distance of 41.66 meters from the hub axis as described in the preceding paragraph are exemplary of beneficial pressure changes along the span **154** (see FIG. **2A**). For example, (i) the pressure on trailing concavity **180** (see FIG. **12C** Detail **A**) is 1200 - 1800 Pa on the blade **111** without the benefit of deflector **200** (see FIG. **12A**) as compared to blade **111** with the benefit of deflector **200** (see FIG. **12B**) for which the pressure over a significant portion of the concavity is 1800 - 2400 Pa, and (ii) the maximum suction on the suction side **182** near the leading edge on a blade **111** without the benefit of a deflector **200** is -6739 Pa as compared to -13,032 on a blade with the benefit of a deflector (see FIG. **12B**), and the increased suction on the suction side **182** of the blade in FIG. **12B** is over an area more than two times the size, and near the blade tip **151** (see FIG. **2A**) as described above where the moment arm is the greatest.

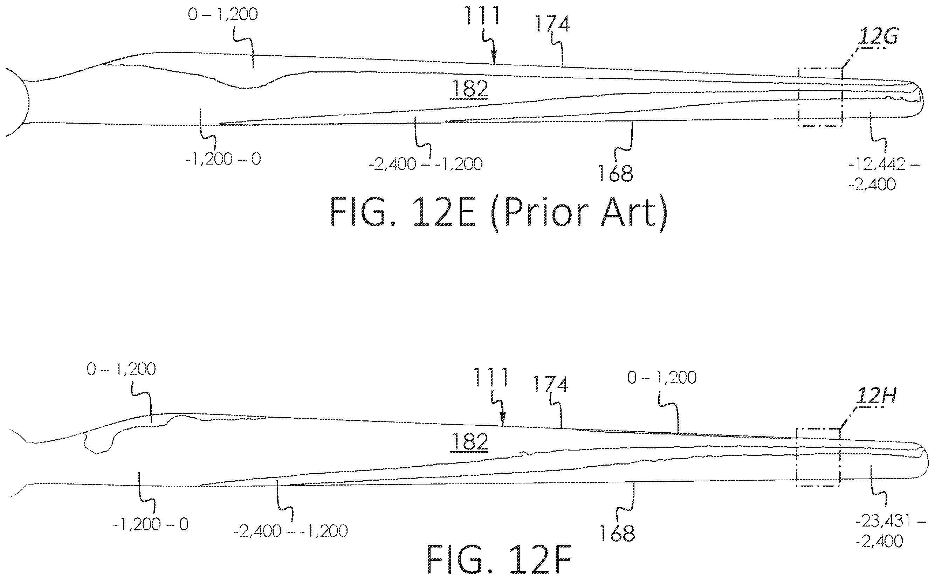

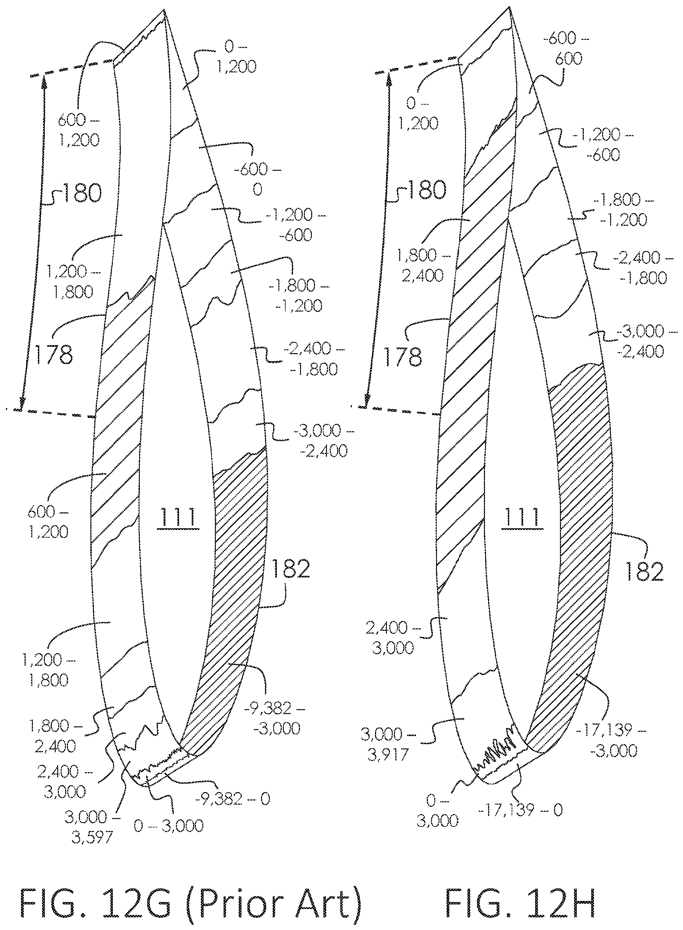

Referring now to FIG. **12C** and FIG. **12D****,** the benefits of the deflector **200** in a 13 m/s wind on the pressure surface **178** are apparent along the blade span **154** (see FIG. **2A**). For example, the pressure on the trailing concavity **180** is 0 - 1200 Pa over more than 58 percent of the blade **111** span **154** (see FIG. **2A**), without the benefit of deflector **200** (see FIG. **12C**), as compared to 1200 - 2400 Pa over more than 87 percent of the blade **111** span **154** (see FIG. **2A**) with the benefit of deflector **200** (see FIG. **12D**). Also, the higher pressures shown in FIG. **12D** are in a more beneficial area due to their increased slope angles (see Subsection **1.2**) on the blade, i.e., an area of the blade geometry for which the pressure difference benefits blade (rotor) performance. The deflector **200** (see FIG. **9A**) is not shown in the pressure plots shown in FIGS. **12D****,** **12F****,** **12H****.**

Referring now to FIG. **12E** and FIG. **12F****,** the benefits of the deflector **200** in a 13 m/s wind on the suction surface **182** are apparent along the along the span **154** (see FIG. **2A**). For example, the suction on the suction side **182** near the tip and near the leading edge on a blade **111** without the benefit of a deflector **200** is -12,442 - - 2400 Pa (see FIG. **12E**) as compared to -23,431 - -2400 on a blade with the benefit of a deflector **200** (see FIG. **12F**) - nearly double the suction over an area more than 3 times the size.

Referring now to FIG. **12G** and **12H****,** both of which are magnified side isometric views of section 12G of FIGS. **12C** and **12E** and section **12H** of FIGS. **12D** and **12F****,** respectively, surface pressures are shown on the respective pressure surfaces and suction surfaces. The benefit of deflector in a 13 m/s wind on the upstream and downstream surfaces of a section of blade **111** is apparent on a section of blade **111** in the same wind speed. For example, (i) on blade **111** without the benefit of a deflector **200** (see FIG. **12G**) the pressure on a large portion of pressure surface **178,** with wide crosshatching, is 600 Pa - 1200 Pa as compared to 1800 Pa - 2400 Pa shown in the wide crosshatched area on pressure surface **178** on a blade **111** with the benefit of deflector **200** (see FIG. **12H**) , and (ii) on blade **111** without the benefit of a deflector **200** the suction on the suction side **182** shown in narrow crosshatching is - 9382 - -3000 Pa (FIG. **12G**) as compared to -17,139 - -3000 Pa shown in the narrow crosshatched area on the suction surface **182** on a blade **111** with the benefit of a deflector **200** (FIG. **12H**).

Physical test results for at 3.5 m/s were:

| **Wind speed (m/s)** | **Blade without deflector** | **Blade with deflector** |
|---|---|---|
| | **RPM** | **RPM** |
| 13.0 | 754 | 2822 |

In the embodiment shown, the global torque of a deflector/blade assembly is significantly greater than a blade **111** without the benefit of a deflector **200.** The additional positive or negative torque attributed to deflector **200,** irrespective of blade **111** torque, can be positive, negative, or neutral as described in Section **8.**

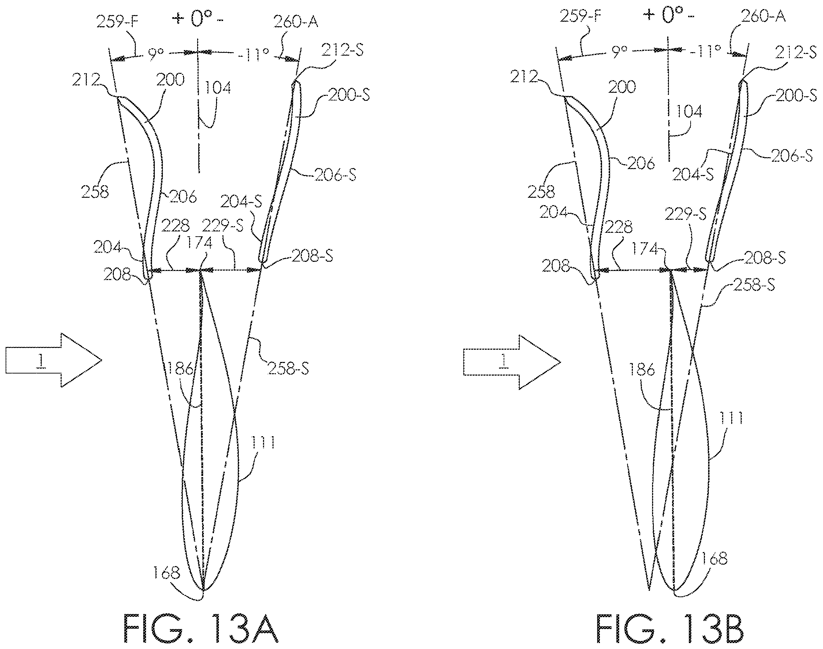

### 8. Optimization Parameters - FIG. 13A - FIG. 13E

The deflector/blade performance is affected by the interrelationship of numerous deflector parameters, including (i) overall shape and size, (ii) angle of attack, (iii) position relative to the blade, (iv) trailing concavity length and depth, leading convexity length and depth, and (v) vertical and horizontal skew (collectively, "optimization parameters"). Alternate embodiment features of the deflector include, but are not limited to, a suction-side deflector, a non-uniform thickness deflector profile (e.g., a common airfoil shape), leading edge curved tip, leading edge arced tip, fluid walls, and number of deflectors (collectively "alternate embodiment features").

Flow simulations, and physical tests in each case where they have performed, show that optimization parameters can be adjusted to obtain increased blade performance over (i) a given fluid speed range, and (ii) a particular fluid speed, both of which while also increasing blade performance over the entire operating speed range. Because the deflector changes the environment in which the blade is operating, and blades for different rotor sizes and manufacturers have different geometry, the optimization parameters may be used to increase performance for the unique blade design for which the deflector may be customized and attached.

Optimization parameters may also be used when adding one or more of the alternative embodiments to the deflector, e.g., the arced tip (see Subsection **9.4**), and fluid walls (see Subsection **9.5**). As any one or more alternate embodiments are added to a given deflector embodiment, due to the interrelationships between the deflector and the blade, the optimization parameters may be used to change peak performance of a given blade/deflector assembly, e.g. customized for a specific fluid speed.

The increase of global torque can be achieved in numerous ways based upon the combination of the optimization parameters, and with differing results. For example, many flow simulation show the largest global torque improvement can be achieved if the deflector has a large negative torque. However, a lessor negative deflector torque, positive deflector torque or neutral deflector torque may be more desirable at the expense of a lessor, yet significant increase in global torque as shown in Section **7.**

In this Section, all illustrations of deflector **200** and related features, when deflector **200** is located on the suction side of the blade, share the same numeric portion of the part number, however, are appended with "-S."

### 8.1 Angle of Attack and Position Relative to the Fluid Flow - FIGS. 13A - 13B

For ease in understanding the matter described in this Subsection, the (i) rotor plane of rotation **104** and blade chord **186** are collinear, and (ii) the angle of attack of the deflector **200-S** is exaggerated to aid in presenting the subject matter. FIG. **13A** and FIG. **13B** each show two deflectors, each deflector being the same relative distance above the blade (i.e., aft of the blade relative to the rotational direction), and each deflector being oriented at the same relative angles of attack. The deflectors in FIG **13A** are both further from the oncoming flow 1 than the deflectors shown in FIG. **13B****.**

FIG. **13A** and FIG. **13B** are used in describing details regarding the (i) position of the deflector **200,** when its leading edge is nearer the oncoming fluid flow 1 than the blade trailing edge **174** relative to the oncoming flow 1, (ii) distance of the deflector **200-S** leading edge **208-S** aft of the blade trailing edge **174,** (iii) ability to have both a deflector **200** and deflector **200-S** in an embodiment, and (iv) properties of advancing a deflector toward the oncoming flow while maintaining its angle of attack. The pressure side of the deflector and blade in all figures referenced in this Subsection are located nearest the oncoming flow.

Referring now to FIG. **13A****,** an embodiment is shown with profiles of a deflector **200** nearer the oncoming fluid flow **1** than the profile of the blade **111** (i.e., the deflector **200** is upstream of the blade **111,** so the fluid flow **1** impinges on the deflector **200** before it impinges on the blade **111),** and a second deflector profile **200-S** further from the oncoming fluid flow **1** than blade profile **111** (i.e., the deflector **200-S** is downstream of the blade **111,** so the fluid flow **1** impinges on the blade **111** before it impinges on deflector **200-S** as further described in Subsection **8.4.**

The deflector angle of attack is shown as a (i) positive number of degrees **259-F** when the leading edge **208** of the deflector **200** chord line **258** is nearer the oncoming fluid flow **1** than the trailing edge **212,** and (ii) negative number of degrees **260-A** when the leading edge **208-S** of deflector **200-S** chord line **258-S** is further from the oncoming fluid flow **1** than the trailing edge **212-S.** It is important to note that deflector **200** and deflector **200 S** can be positioned or configured with their respective angle of attack position at either a positive or negative degree angle.

The deflector profile **200** has a chord line **258** at a distance **228** into the fluid flow **1** from the blade chord **186** along at least a portion of the span of the blade **111** as measured from the blade trailing edge **174** to the deflector leading edge **208** and is shown at an angle of attack **259-F** of 9 degrees. The second deflector profile **200-S** has a chord line **258-S** at a distance **229-S** downstream from the blade chord **186** along at least a portion of the span of the blade **111** as measured from blade trailing edge **174** to the deflector leading edge **208-S** and is shown at an angle of attack **260-A** of -11 degrees.

Referring now to FIG. **13B****,** while still referring to FIG. **13A****,** similarly to the embodiment shown in FIG. **13A****,** an embodiment is shown with profiles of a (i) deflector **200** with its chord line **258** nearer the oncoming fluid flow **1** than the profile of the blade **111** chord **186,** and (ii) second deflector profile **200-S** with its chord line **258-S** further from the oncoming fluid flow **1** than the blade **111** chord **186.**

However, deflectors **200** and **200-S** and their respective chord lines **258** and **258-S** in FIG. **13B****,** as compared to deflectors **200** and **200-S** shown in FIG. **13A****,** are nearer the oncoming fluid flow **1** than are configured in FIG. **13A****.** In all cases in FIG. **13A** and FIG. **13B****,** the respective deflector angle of attack for each deflector chord line **258** and **258-S** remains constant, e.g., at 9° and -11° respectively. The respective angles of attack remain constant in these examples due to the distances **228-S** and **229-S** of the respective chord planes in FIG. **13B** being different than the distances **228** and **229** in FIG. **13A****.**

As deflector chord line **258** and/or **258-S** are advanced toward the oncoming fluid flow **1,** angles of attack **259-F** and **260-A** may be maintained as shown or may also be altered. If the angle of attack is maintained while advancing the chord line **258** toward the oncoming fluid flow **1,** distance **228** in FIG. **13B** will increase as compared to distance **228** in FIG. **13A****,** and distance **229-S** in FIG. **13B** will decrease as compared to distance **229-S** in FIG. **13A** with respect to blade chord **186.** Conversely, if the angle of attack is maintained while moving the deflector chord lines away from the oncoming fluid flow **1,** distance **228** in FIG. **13A** will decrease as compared to distance **228** in FIG. **13B** with respect to blade chord **186.**

Although positioning the deflector forward of the rotor plane relative to the oncoming flow **1** (deflector **200**) or behind the rotor plane relative to the oncoming flow 1 (deflector **200-S**) will result in improved performance (e.g., increased global torque) of the blade-deflector assembly as compared to a blade without a deflector, flow analysis indicates that positioning the deflector forward of the rotor plane relative to the oncoming flow **1** (deflector **200**) results in greater improved performance as compared to positioning the deflector behind the rotor plane relative to the oncoming flow **1** (deflector **200**-**S**). Flow simulation studies show that continuing to advance the deflector chord line **258** toward the fluid flow **1,** when the deflector **200** is located nearer the oncoming flow **1** than the blade **111,** and provided the optimization parameters remain constant or reasonably constant, increases global torque.

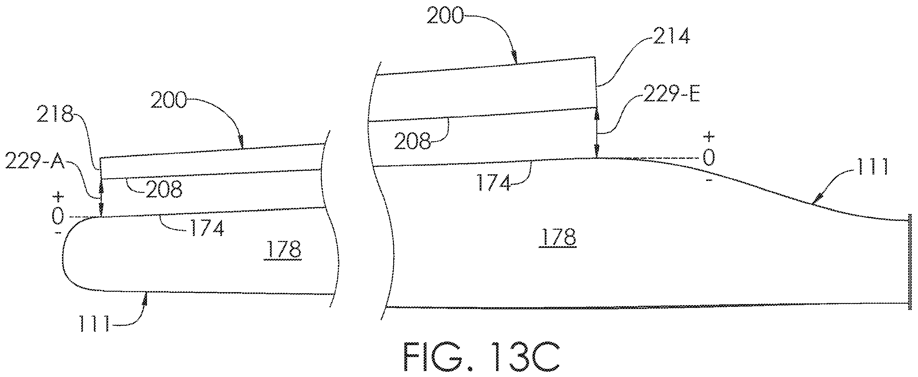

### 8.2 Vertical Skew - FIG. 13C

Referring now to FIG. **13C****,** deflector leading edge **208** may be behind, even with, or in front of the blade trailing edge **174** or shifted in a direction toward or away from the oncoming flow **1** (see FIG. **13A**). The deflector leading edge **208** may be skewed relative to the blade trailing edge **174** such that the distance between the blade trailing edge **174** and deflector leading edge **208** is not uninform along the deflector span **223** (see FIG. **9A**). The deflector **200** is skewed when a chord-wise spacing **229-A** between the deflector leading edge **208** and the blade trailing edge **174** at the tip-end **218** of the deflector differs from a chord-wise spacing **229-E** between deflector leading edge **208** and the blade trailing edge **174** at the hub-end **214** of the deflector.

The chord-wise spacing between the deflector leading edge **208** and the blade trailing edge **174** may be expressed as a (i) positive value when the deflector leading edge **208** is aft of the blade trailing edge **174** (i.e., the deflector leading edge **208** trails the blade trailing edge **174** relative to the direction of travel of the deflector/blade assembly), and (ii) as a negative value when the deflector leading edge **208** is forward of the blade trailing edge **174** (i.e., the deflector leading edge **208** leads the blade trailing edge **174** relative to the direction of travel of the deflector/blade assembly), with a distance of zero equating to no chord-wise spacing between the deflector leading edge **208** and the blade trailing edge **174** (i.e., the deflector leading edge **208** neither leads nor trails the blade trailing edge **174** relative to the direction of travel of the deflector/blade assembly). It should be noted that neither deflector leading edge **208** nor blade trailing edge **174** are necessarily straight lines, but, in one embodiment, the shape of the deflector leading edge **208** conforms to any curvature or non-straight portion of the blade trailing edge.

Depending upon where a deflector **200** is positioned relative to a blade **111,** vertical skew may increase or decrease global torque to tune the output performance of the wind turbine as desired, e.g., at the designer's choice.

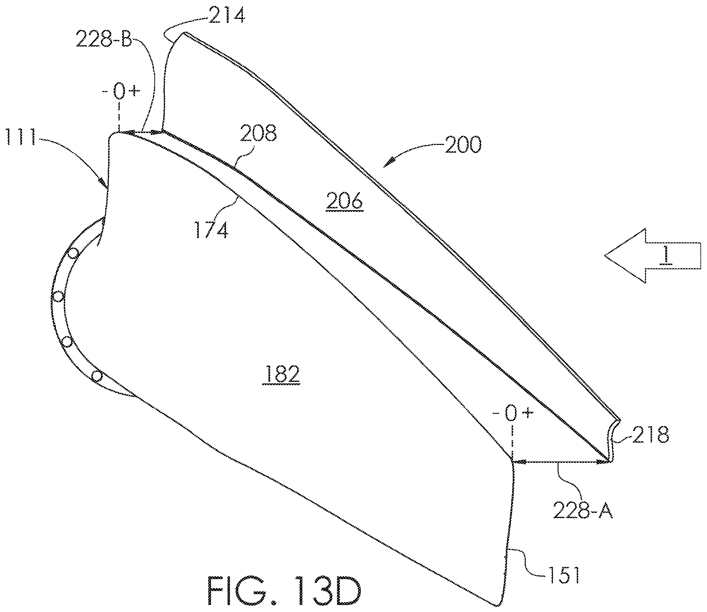

### 8.3 Horizontal Skew - FIG. 13D

Referring now to FIG. **13D****,** the deflector **200** leading edge **208** position relative to the blade **111** trailing edge **174** may be (i) nearer the oncoming fluid flow **1** than blade **111** as shown and expressed as a positive distance (horizontal spacing) or, (ii) further from the oncoming fluid flow **1** than the blade **111** and expressed as a negative distance (horizontal spacing). A distance of zero between the deflector **200** leading edge **208** and the blade trailing edge **174** means there is no horizontal spacing between the deflector leading edge **208** and the blade trailing edge **174.**

A horizontal distance **228-A** between the deflector leading edge **208** and the blade trailing edge **174** at the deflector tip end **218** may be greater than, equal to, or less than a horizontal distance **228-B** between the deflector leading edge **208** and the blade trailing edge **174** at the deflector hub end **214.** Flow simulation shows that the greater the horizontal distance **228-A** at the deflector tip end **218** relative to the horizontal distance **228-B** at the deflector hub end **214** increases global torque. Flow analysis indicates this is due to the much greater volume of fluid flowing between the deflector leading edge **208** and the blade trailing edge **174** (collectively "edges") near their respective tip ends **151** and **218** versus the much less volume of fluid flowing between the edges near the deflector hub end **214,** as a result of their respective circumferential speeds.

Flow simulation also shows that moving deflector **200** nearer to the oncoming fluid flow **1,** than is shown in Section **7,** increases global torque. The further deflector **200** is advanced, when located on the pressure side of the blade **111,** toward the oncoming fluid flow **1** and in a direction out of the blade **111** wake, the larger the volume of fluid flow **1** is available to increase blade **111** performance.

Deflector **200** when located on the pressure **178** side of blade **111** creates a phenomenon analogous to changing the environment in which blade **111** is operating in a higher fluid flow **1** speed, e.g. wind speed. This phenomenon increases as the deflector **200** is moved nearer to the oncoming fluid flow **1** as described above due to the increased fluid flow rate benefiting blade **111.**

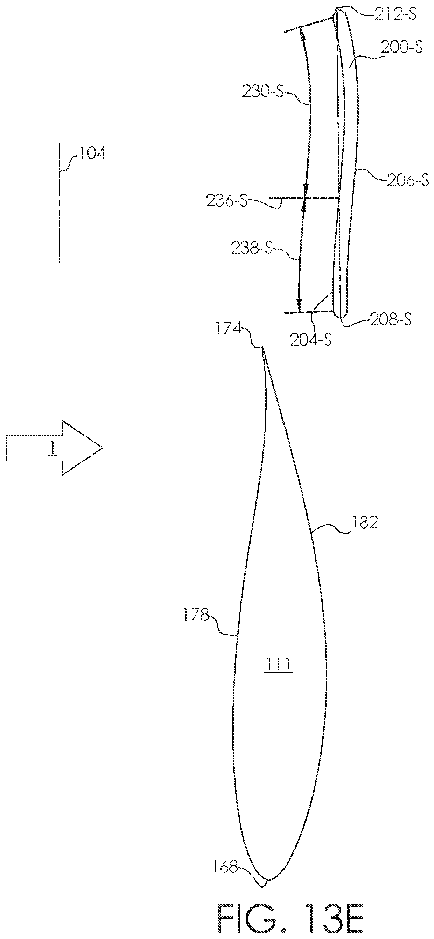

### 8.4 - Suction Side Deflector Position - FIG. 13E

Referring now to FIG. **13E****,** flow simulation shows that when a deflector **200-S** is located on the suction side **182** of blade **111,** global torque improvements can be gained when concavity **230-S** and convexity **238-S** are less than when deflector **200** is positioned on the pressure side **178** of blade **111.** This is due to deflector **200,** when configured on the suction side **182** of the blade **111** as shown, and when used in conjunction with a deflector **200** located on the pressure side of the blade **111** (configuration not shown), acts similar to a flow straightener rather than a deflector, thus reducing the turbulence and suction near the suction surface **182** trailing edge beneficial area **16** (see FIG. **2G**).

### 9. Alternate Embodiments

Alternate embodiments described herein may be used in any (i) fluid type, i.e., air and water, and (ii) combination with any deflector/blade assembly or alternate embodiments thereof, i.e., a deflector with a curved tip (see Subsection **9.3**), and fluid walls (see Subsection **9.5**) may be combined irrespective of the drawing or text that describes such alternate embodiment.

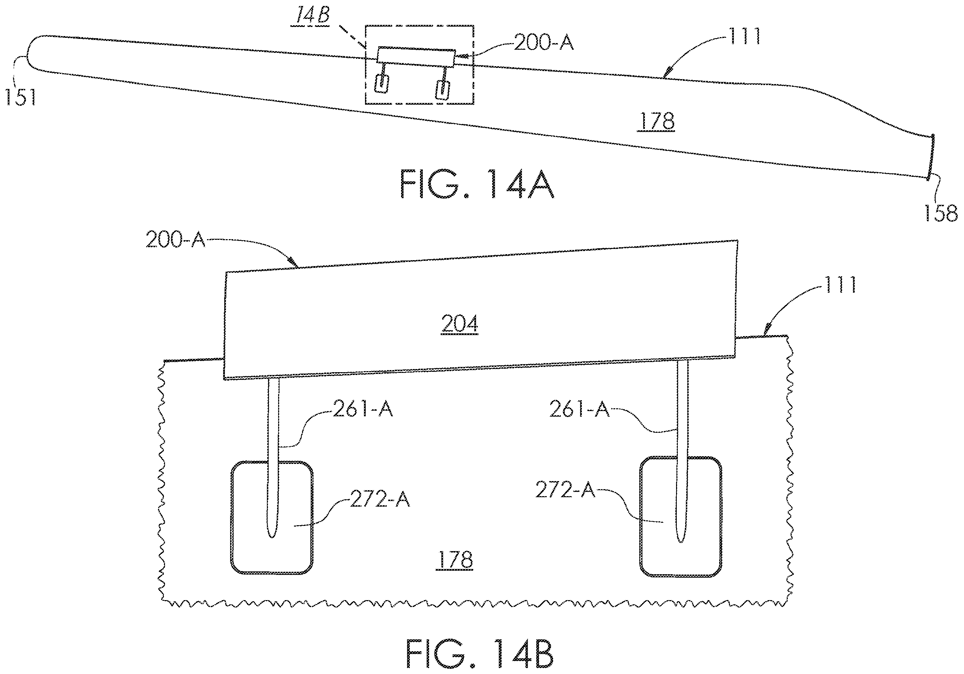

### 9.1 Partial-span Deflector - FIG. 14A - FIG. 14E

Partial-span deflectors **200-A** may embody all of the features and attributes of a deflector **200,** including, without limitation, the connector tube **270** and leading and trailing edge features as described in Section **6** and shown in FIGS. **9K, 9L****,** **9M, 9N****.**

Partial-span deflectors **200-A** may be retrofitted anywhere along the span of existing turbine blades at the designer's choice, e.g., to increase turbine performance if a turbine is performing under its rated capacity. Flow simulations and physical tests show that partial-span deflectors increase global torque per square area of pressure and suction surfaces of the deflector **200-A** similar to, but less than, deflector **200** extending substantially the full span of the blade. Flow simulations also show that partial-span deflectors with longer spans produce more global torque per square area than do partial-span deflectors with shorter spans. Thus, flow simulations suggest that a longer deflector with twice the area of a shorter deflector will more than double the global torque as compared to the shorter deflector.

Referring now to FIG. **14A****,** partial-span deflector **200-A** is configured on the pressure side **178** of blade **111** approximately midway between the blade tip **151** and the root end **158.**

Referring now to FIG. **14B****,** while still referring to FIG. **14A****,** partial-span deflector **200-A** is fixedly linked to blade **111** via connector assemblies **261-A** that include fixedly linked external blade-end flanges **272-A.** Connector assembly **261-A** embodies the same aerodynamic features as connector assembly **261** as described in Section **6** and shown in FIGS. **9K, 9L****,** **9M, 9N****,** including, without limitation, whereby it (i) embodies two sets of leading and trailing edges; one set of leading and trailing edges is affected by and minimizes drag for oncoming fluid flow as described above, and a second set of leading and trailing edges is affected by and minimizes drag for fluid flow (apparent velocity), and (ii) has elliptical and/or oval profiles that are oriented in alignment with the rotational flow.

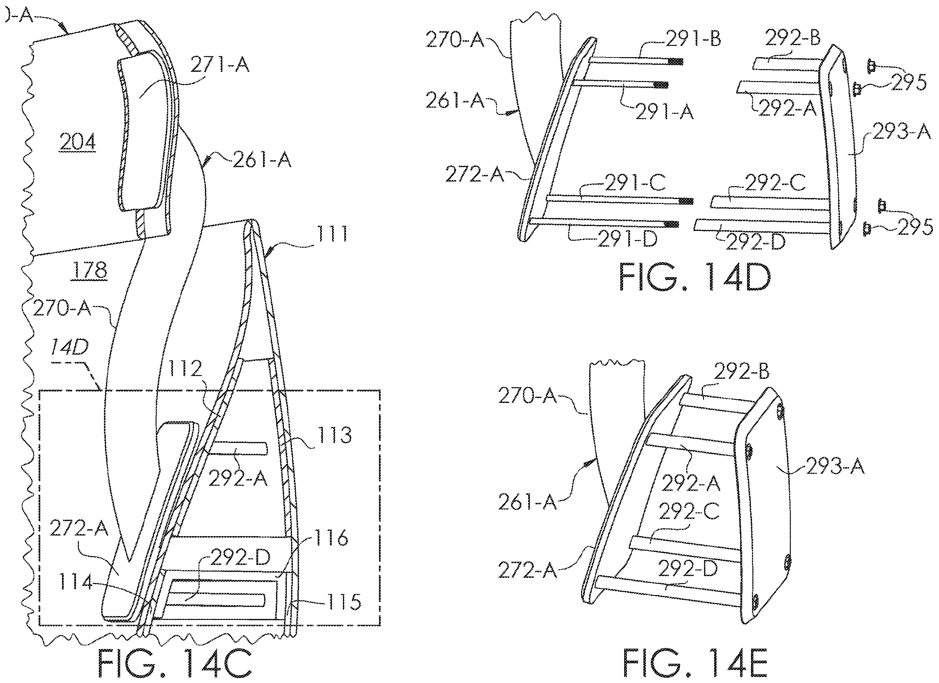

Referring now to FIG. **14C** and FIG. **14D****,** in an embodiment, connector assembly **261-A** comprises a tube **270-A,** with a fixedly linked deflector-end flange **271-A** and fixedly linked blade-end (pressure side) flange **272-A** and one or more studs **291-A, 291-B, 291-C** and **291-D** (collectively "flange studs") projecting from and fixedly linked to blade-end flange **272-A.**

Referring now to FIG. **14D** while still referring to FIG. **14C****,** connector **261-A** includes a suction side flange **293-A** and tubes **292-A, 292-B, 292-C,** and **292-D** (collectively "flange tubes") projecting from and fixedly linked to suction side flange **293-A.** The flange studs **291-A, 291-B, 291-C, 291-D** (i) penetrate pressure surface **178** of blade **111,** (ii) pass through the flange tubes **292-A, 292-B, 292-C, 292-D** (which penetrate suction surface **182** of the blade **111**) and suction side flange **293-A,** and (iii) are secured with fasteners **295** (e.g., nuts on threaded ends of flange studs **291-A, 291-B, 291-C, 291-D** projecting from the suction side flange **293-A)** or other suitable means for fixing the ends of the flange studs **291-A, 291-B, 291-C, 291-D** with respect to the suction side flange **293-A,** e.g., welding or the like.

Referring now to FIG. **14E** while still referring to FIG. **14C** and FIG. **14D****,** the geometry (contours) of pressure side blade-end flange **272-A** and suction side flange **293-A** conform to the respective blade pressure surface **178** and suction surface **182** (see FIG. **2B**) to which they mate. Each flange stud length and corresponding flange tube length may differ to accommodate the change in the spacing between the blade pressure surface and suction surface that mates with flange **272-A** and **293-A,** respectively, i.e., the flanges may taper and/or twist.

The lengths of the flange tubes **292-A, 292-B, 292-C, 292-D** may be undersized compared to the spacing between the blade pressure surface **178** and suction surface **182** (see FIG. **2C**) to achieve a compression fit between flanges **272-A** and **293-A** and blade **111** while simultaneously preventing the fasteners **295** from compressing the blade **111** beyond the designer's choice.

In addition, the mechanical attachment of the pressure side blade-end flange **272-A** and suction side flange **293-A** may be chemically bonded or otherwise adhered to the exterior of blade **111,** and the mechanical attachment of the flange tubes may be chemically bonded or otherwise adhered to structures interior to blade **111** through which the flange tubes **292-A, 292-B, 292-C, 292-D** pass.

Connector assemblies **261-A** conform to the twist of the deflector/blade assembly and the concavity and convexity of deflector **200-A,** and thus the twist and/or length or angle of connector assemblies **261-A** may vary over the deflector span **223** (see FIG. **9A**).

Connector tube **270-A** may embody all of the leading and trailing edge benefits and features of connector tube **270** as described in Section **6,** including, without limitation, two sets of leading and trailing edges. One set of leading and trailing edges works with respect to oncoming wind flow when the blade/deflector assembly is static, and the other set of leading and trailing edges works with rotational flow while the blade/deflector assembly is rotating.

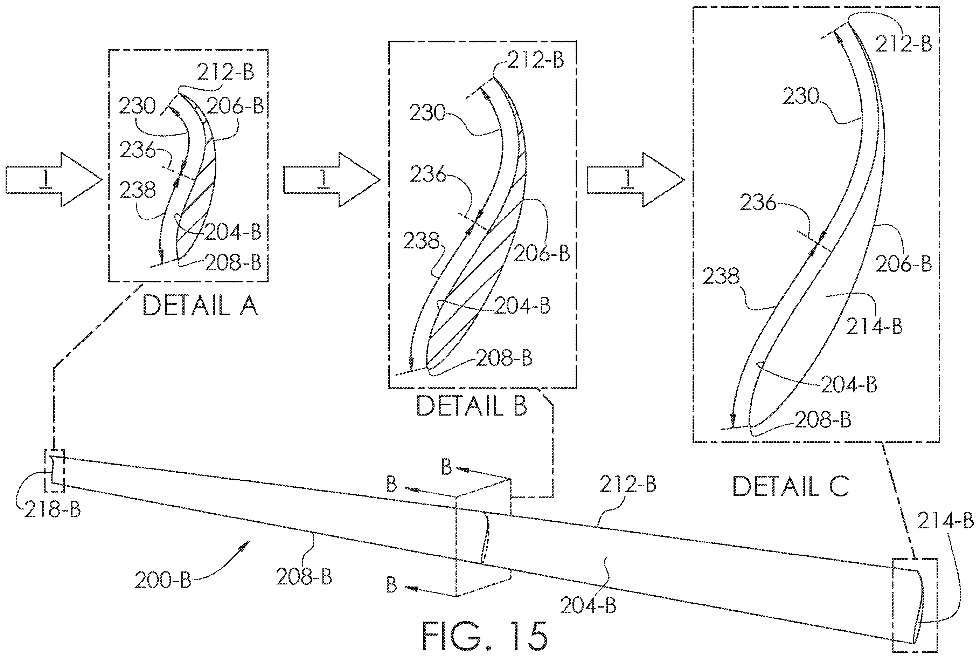

### 9.2 Non-Uniform Thickness Deflector - FIG. 15

Referring now to FIG. **15,** and FIG. **15** Detail **A** - Detail **C,** an embodiment of a deflector **200-B** includes a pressure surface **204-B** that can essentially mirror the pressure surface **204** of a deflector **200** of a similar overall shape, size and geometry (see FIG. **9A**), but deflector **200-B** is not of a uniform thickness. Deflector **200-B** differs from deflector **200** in that it has a more traditional airfoil shape than does deflector **200,** whereby deflector **200-B** is thicker between the pressure surface **204-B** and suction surface **206-B** near the leading edge **208-B** and thinner between the pressure surface **204-B** and suction surface **206-B** near the trailing edge **212-B** (the "suction side airfoil"). Deflector **200-B** has an airfoil shape profile that generates differential pressures on the upstream (pressure) surface **204-B** and downstream (suction) surface **206-B** due to relative fluid flow over the upstream and downstream surfaces. Pressure surface **204-B** of deflector **200-B** may have a concavity **230** and/or a convexity **238** similar to, or essentially the same as, the concavity **230** and/or convexity **238,** respectively, on pressure surface **204** of uniform thickness deflector **200** (see FIG. **9A**).

The suction side non-uniform thickness may be used to increase global torque by generating differential upstream/downstream pressure (lift) depending upon the (i) relative horizontal and vertical position of deflector **200-B** relative to the blade **111** to which it is fixedly linked or operably (adjustably) coupled, (ii) shape and size, (iii) angle of attack of the deflector **200-B,** and (iv) depth of convexity and concavity (see Sections **3, 5** and Subsection **8.1.**).

The thickness between the pressure surface **204-B** and suction surface **206-B** of a deflector **200-B** may vary from the tip end **218-B** of the deflector **200-B** to the hub end **214-B** of the deflector **200-B** at any point between the leading edge **208-B** and trailing edge **212-B.**

Deflector **200-B** may be used in lieu of deflector **200,** on the pressure side **178** or suction side **182** blade **111** (see FIG. **2A** and FIG. **2B** respectively), however, due to the thickened profile of deflector **200-B,** its suction side **206-B** has different flow characteristics than deflector **200.**

Deflector **200-B** may have an internal construction similar to blade **111** (see Section **1** and FIG. **2C**).

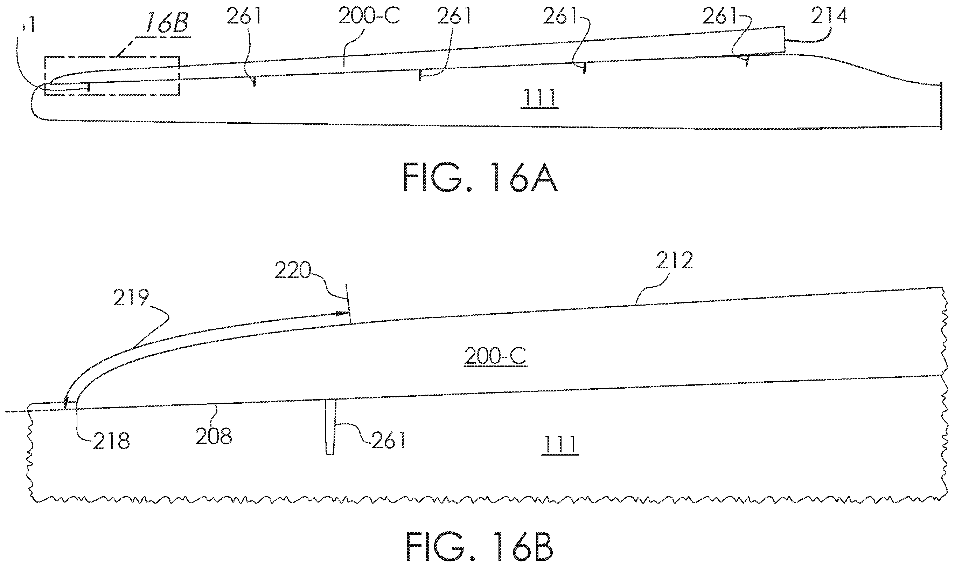

### 9.3 Curved Tip - FIG. 16A

Referring now to FIG. **16A** and Fig. **16B****,** an embodiment of deflector **200-C** includes a curved section **219** along a portion of the trailing edge **212** that increases global torque by reducing drag on the deflector **200-C.** The end trailing edge corner at tip **218** of the trapezoidal shaped deflector (see FIG. **9A**), generates negative torque. By removing this corner in the area of the deflector tip **218,** this negative torque may be reduced, resulting in a net gain in global torque even though the area of the deflector is reduced. The corner is removed - or at least reduced in size - by deviating the shape of the trailing edge **212** so that the deflector chord is shorter at the deflector tip end **218** than it would be if the trailing edge shape were not deviated. For example, the trailing edge corner can be removed by providing a curved trailing edge section **219** that begins at or near the deflector leading edge **208** at the deflector tip end **218** and ends at point **220** that may be located up to one third of the distance between the deflector tip end **218** and hub end **214.**

The curved section **219** may be optimized to increase global torque by changing the curvature and length of the curved section **219.** In addition, rather than a curved trailing edge section **219,** a straight trailing edge section can be provided that begins at or near the deflector leading edge **208** at the deflector tip end **218** and ends at point **220.**

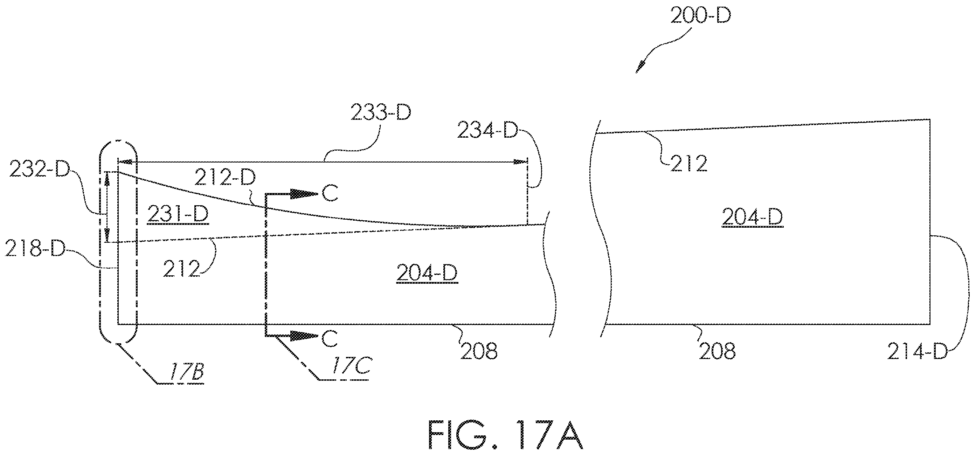

### 9.4 Arced Tip - FIG. 17A

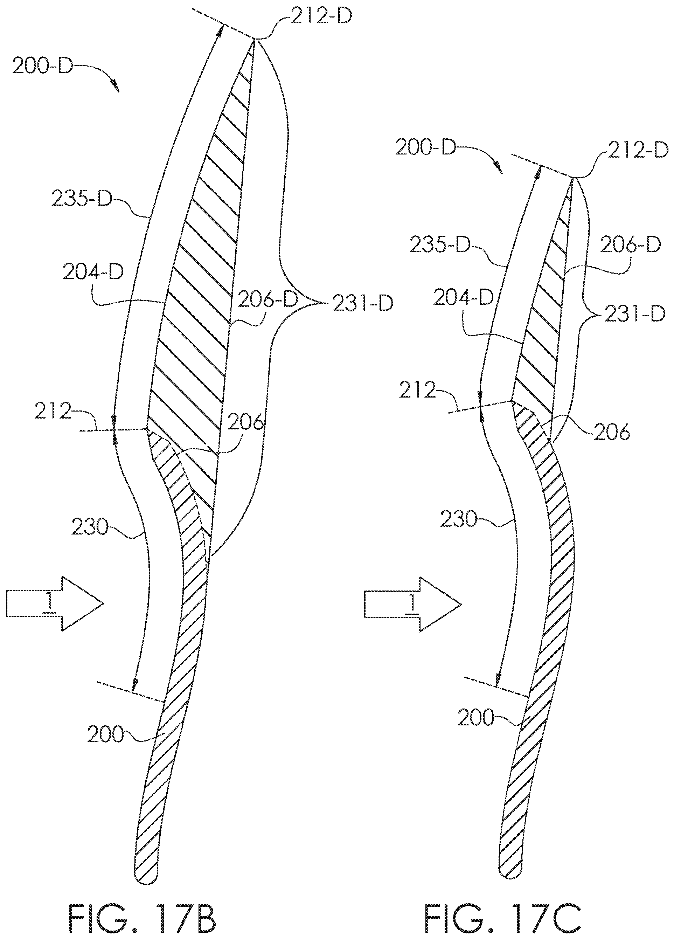

Referring now to FIG. **17A****,** an embodiment of deflector **200-D** includes an arced tip section **231-D** that increases global torque. Arced tip section **231-D** is provided by deviating the shape of the trailing edge **212-D** so that the deflector chord is longer at the deflector tip end **218-D** than it would be if the trailing edge shape were not deviated. In this subsection, to facilitate readability and understanding, deflector **200-D** has been superimposed over a deflector **200** of the same dimensions with the exception of the arced tip section **231-D** to show the un-deviated trailing edge **212** in dashed lines. Consequently, in this subsection, any part numbers that are not succeeded by a hyphen and letter refer to deflector **200** for comparison. In addition, for illustrative purposes, the end and cross-sectional detail views (FIG. **17** **B** and FIG. **17** **C,** respectively) have wide crosshatching to depict the extended arced area **231-D,** and narrow crosshatching to depict the portion of the deflector **200** that has been included to aid in understanding the extended arced tip area. The change in crosshatching direction has no significance with respect to the construction of deflector **200-D,** as the deflector **200-D** may comprise a unitary, integral structure, and is not intended to necessarily indicate that deflector **200-D** is formed from multiple components and/or different materials in the area of section **231-D.**

Arced section **231-D** extends from the trailing edge **212** of deflector **200** (see also FIG. **9A**) and has an arced (or curved) trailing edge **212-D** defining a progressively increasing chord between leading edge **208** and arced trailing edge **212-D** from intersection point **234-D** to tip end **218-D.** Arced tip section **231-D** includes a chord extension **232-D** from trailing edge **212** to the extended tip trailing edge **212-D,** and length **233-D** that extends from the deflector tip end **218-D** to the intersection point **234-D** where the arced section trailing edge **212-D** intersects with the trailing edge **212.** Intersection **234-D** may be located at any point along the span of deflector **200-D** up to the hub-end **214-D.**

Referring now to FIG. **17B** while still referring to FIG. **17A****,** arced tip section **231-D** includes a convexity **235-D** on pressure side **204-D** that extends between the trailing edge **212-D** and an extension of trailing edge **212** to 212-**D** (see dashed line in FIG. **17A**).

Referring now to FIG. **17C****,** while still referring to FIG. **17B** and FIG. **17A****,** beginning at the deflector tip end **218-D,** arced tip section **231-D** essentially fills a space, depicted with wide crosshatching, that is bounded by an extension of trailing edge **212** (dashed line in FIG. **17A**), a portion of suction surface **206** that is proximate to the extension of trailing edge **212,** arced tip suction surface **206-D,** arced tip pressure surface **204-D,** and arced section trailing edge **212-D.** The filled space can vary in width and curvature across the span of arced section **231-D** - and thus the chord can vary correspondingly. The arced tip section **231-D** is depicted as an extension of the superimposed deflector **200,** which is shown in narrow crosshatching.

In the embodiment shown, the cross-sectional area (thickness between pressure surface **204-D** and suction surface **206-D)** of arced tip section **231-D** decreases from the deflector tip end **218-D** to the intersection **234-D,** and follows the deflector twist between the tip end **218-D** and hub end **214-D.**

The curvature, length, and cross-sectional area of curved section **231-D** may be changed at the designer's choice to increase global torque.

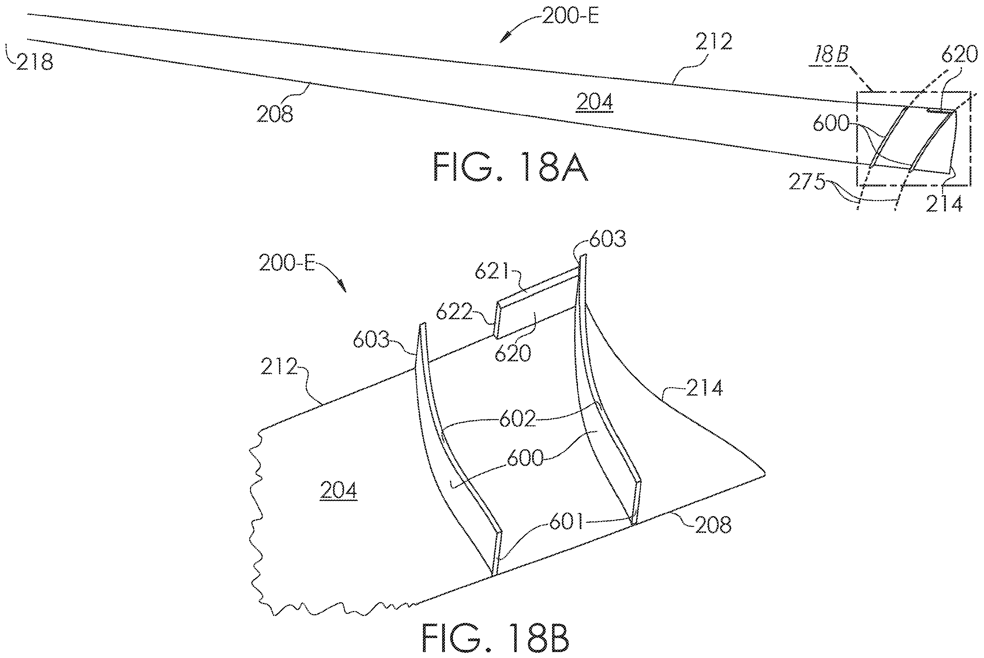

### 9.5 Fluid Walls - FIG. 18A - FIG. 18B

Referring now to FIG. **18A** and FIG. **18B****,** an embodiment of deflector **200-E** includes one or more walls **600** projecting from one or both surfaces of the deflector **200-E** (shown projecting from pressure surface **204** in FIGS. **18A****, 18B).** Each wall **600** may extend from the leading edge **208** to the trailing edge **212,** or any portion thereof, and may follow the respective rotational path of travel **275** about the rotor axis of rotation **123** (See FIG. **1A**) or be straight or curved along an arc other than rotational path of travel **275.** Deflector **200-E** may further include a transvers wall **620** extending from one or more wall(s) **600** along or near the trailing edge **212.** Wall(s) **600** and transverse wall (s) **620** are fixedly linked to deflector **200-E** and extend from the pressure surface **204** toward the oncoming fluid flow or from the suction surface **206** (see FIG. **9A** Detail **A, B** and **C** showing suction surface **206**) toward the downwind flow. Wall(s) **600, 620** may be perpendicular or otherwise oriented with respect to pressure surface **204** and/or suction surface **206.**

Wall **600** reduces the spillover of fluid moving from the deflector tip end **218** toward the hub end **214** causing the centroid (center of pressure) to move toward the tip end **218** of blade **111** thereby increasing global torque.

Wall **600** may have a uniform or non-uniform height from a leading end of the wall to a trailing end of the wall, and has a rotational flow leading edge **601,** oncoming fluid flow leading edge **602** and rotational flow trailing edge **603** (collectively "wall **600** edges"). Wall **600** edges may be straight, tapered, beveled, or curved to reduce drag or otherwise improve performance characteristics, including, without limitation, increasing global torque.

Transverse wall **620** reduces fluid spillover along trailing edge **212,** thereby increasing global torque. The height of transverse wall **620** may be the same or different from the height of wall **600.** Although, the configuration of transverse wall **620** may contribute to drag of the rotating blade/deflector assembly, flow simulation results show that the performance improvement from transverse wall **620** is greater than the drag it induces.

Transverse wall **620** edges may be straight, tapered, beveled, or curved to reduce drag or otherwise improve performance characteristics.

Two or more walls **600** of varying lengths and heights, may be configured on the pressure side **204** of a deflector **200-E** anywhere along the deflector span **223** (see FIG. **9A**).

One or more transverse walls **620** of varying lengths and heights may be configured along the deflector span **223** (see FIG. **9A**) near the trailing edge **212.**

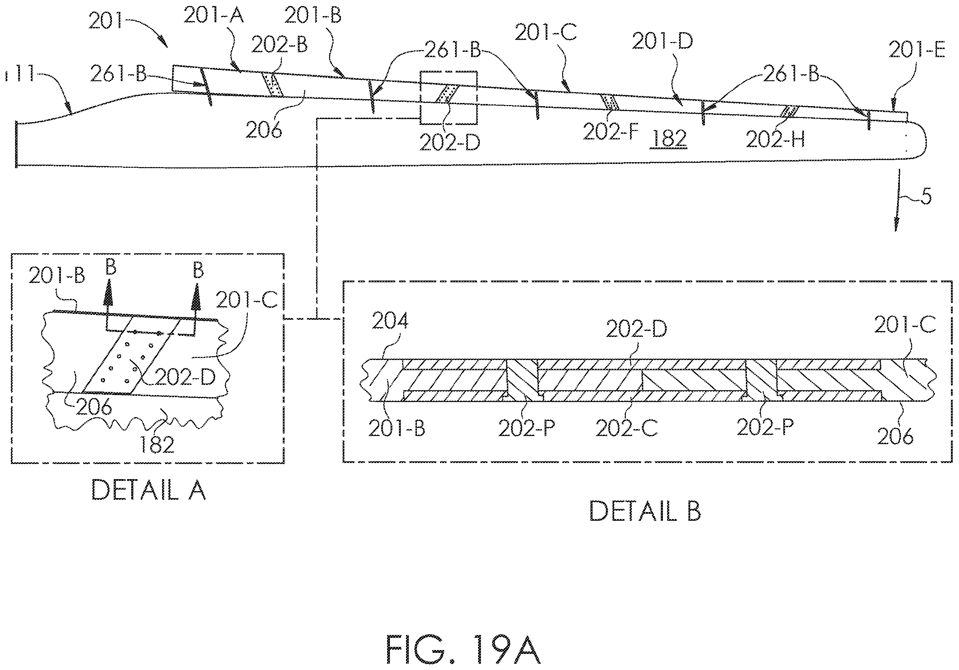

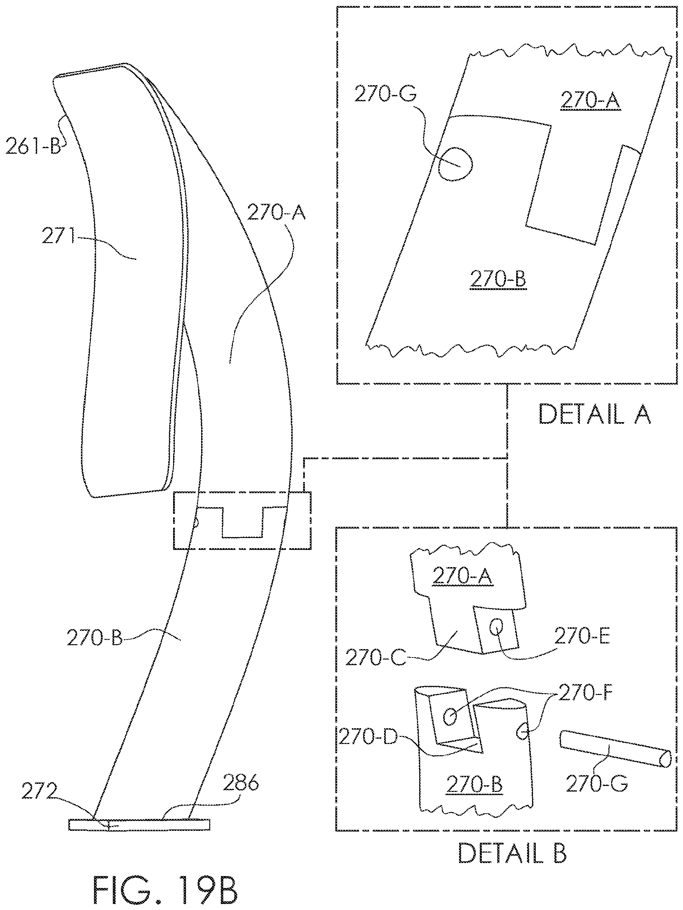

### 9.6 Multi-Part Deflector and Connector Assemblies- FIG. 19A and FIG. 19B

Deflectors and/or connector assemblies may be provided in multi-part arrangements. Multi-part deflector **201** (see FIG. **19A**) and multipart connector **261-B** (see FIG. **19B**), enables combinations that permit (i) installing or replacing an entire deflector by simply removing pins or other similar fasteners from multi-part connector **261-B** as further described below, (ii) installing a multipart deflector **201** (see FIG. **19A**) in sections as opposed to a monolithic deflector, thus reducing the time, expense and difficulty of transporting blade/deflector assemblies, and (iii) a simple swap out of a damaged deflector section, for example section **201-B** (see FIG. **19A**), in the event repairs to a portion of a deflector and/or connector assembly is required. This feature is particularly valuable since the connectors for deflectors designed to affect all or a large part of the airfoil section **164** of the blade **111** (see FIG. **2A**) may be fixedly linked to the internal structures within the blade at the time of their manufacture. Consequently, absent this feature, repairs to damaged deflectors would be more complicated and expensive. It is important to note that the illustrations in FIG. **19A** are of the suction side. Consequently its cropped cross-sectional view appears inverted.

As shown in FIG. **19A****,** a multi-part deflector **201** includes a plurality of adjoining sections **201-A - 201-E.** In the illustrated example, each section **201-A, 201-B, 201-C, 201-D,** and **201-E** is associated with and attached to at least one connector assembly **261-B,** though this is not a requirement. The geometry of a particular multi-part deflector **201,** when assembled, may be substantially identical in all respects to the geometry of the same design of single-piece deflector **200** (for example, as shown in FIG. **9A**).

Adjoining sections of the multi-part deflector **201,** e.g., sections **201-A** and **201-B,** sections **201-B** and **201-C,** sections **201-C** and **201-D,** and sections **201-D** and section **201-E,** may be connected to one another by connectors comprising parallel top and bottom plates connected to one another and between which abutting ends of the adjoining sections are sandwiched and held together. For example, as shown in FIG. **19A** **Detail B,** a connector for connecting sections **201-B** and **201-C** comprises a top plate **202-C** and a bottom plate **202-D,** and the ends of sections **201-B** and **201-C** abut one another and are sandwiched between the bottom plate **202-D** and top plate **202-C.** It is preferred that a relief is provided in the top and bottom surfaces of the abutting ends of adjoining sections so that the bottom plate and the top plate are substantially flush with the pressure surface **204** and the suction surface **206** of the deflector **201.**

FIG. **19A** shows the bottom plate **202-B** of a connector connecting adjoining sections **201-A** and **201-B,** the bottom plate **202-D** of a connector connecting adjoining sections **201-B** and **201-C,** the bottom plate **202-F** of a connector connecting adjoining sections **201-C** and **201-D,** and the bottom plate **202-H** of a connector connecting adjoining sections **201-D** and **201-E.** As shown in FIG. **19A** and **19A** Detail **A,** the connectors may be oriented at an angle relative to a line (e.g., a cord line) extending between the leading edge and trailing edge of the deflector **201-E.** Benefits of the angular connection include making the section joints (i) self-aligning with a positive stop, thus permitting faster and precise installation and assembly as compared to non-angular joints, and (ii) stronger due to the increased surface area gained by the increased length of each joint.

Also, as shown in FIG. **19A** and FIG. **19A** Detail **A,** a plurality of fasteners connect the top and bottom plates to thereby hold the adjoining sections sandwiched between the plates together. For example, as shown in FIG. **19A** Detail **B,** mechanical fasteners **202-P** (e.g., screws, bolts, rivets, or the like) connect the top plate **202-C** to the bottom plate **202-D.** One set of fasteners **202-P** connecting the top plate **202-C** to the bottom plate **202-D** extends through an end of section **201-B,** and another set of fasteners **202-P** connecting the top plate **202-C** to the bottom plate **202-D** extends through an end of section **201-C.** Adhesives may be used to secure top plate **202-C** and bottom plate **202-D** to the adjoining deflector sections (with or without fasteners **202-P),** although the use of adhesives may mean that the top plate **202-C** and bottom plate **202-D** cannot be removed from the deflector to replace a damaged deflector section (as described above) merely by removing the fastener **202-P.**

### 9.6.1 Multi-Part Connector

Referring now to FIG. **19B** while still referring to FIG. **19A****,** in some embodiments, the connector tube of connector assembly **261** may be separable in to two or more pieces. For example, as shown in FIG. **19B****,** multi-part connector assembly **261-B** may include a first (or upper) tube section **270-A** and a second (or lower) tube section **270-B** that is connectable to the first tube section **270-A.** In one example, as shown in Details **A** and **B** of FIG. **19B****,** first and second tube sections **270-A, 270-B** may be connected by a joint comprising a tongue **270-C** that is received within a mating groove **270-D.** Tongue **270-C** is retained within groove **270-D** a retainer pin **270-G** extending through holes **270-F** formed in end of the lower section **270-B** on opposite sides of the groove **270-D** and aligned with a hole **270-E** formed in the tongue **270-C.** In the illustrated embodiment, tongue **270-C** is formed on first tube section **270-A** and groove **270-D** is formed on second tube section **270-B,** but the components may be reversed with the tongue **270-C** formed on second tube section **270-B** and groove **270-D** formed on first tube section **270-A.**

A multipart deflector can be delivered to an installation site in an unassembled state, and the sections **201-A** - **201-E** can be attached to each other by placing adjoining sections with their ends abutting each other and the top plate **202-C** and bottom plate **202-D** of an associated connector assembly placed above and below the abutting ends. Holes aligned with the fastener holes formed in the top plate **202-C** and bottom plate **202-D** may be pre-formed in the abutting deflector sections or may be formed (e.g., drilled) on site, and fasteners **202-P** inserted through the aligned holes. A first section **270-A** of connector assembly **261-B** will be attached to each of at least some of the deflector sections and the mating second section **270-B** of each connector assembly **261-B** will be attached to the blade to which the deflector **201** is to be attached. The first sections **270-A** are connected to the second sections -e.g., by the tongue **270-C,** groove **270-D,** and retainer pin **270-G** described above.

To replace one or more sections of the multi-part deflector **201,** the fastener **202-P** of the connector assembly holding the section(s) to be replaced are removed and, if any section to be replaced is connected to a connector assembly **261-B,** the retainer pin **270-G** is removed to permit the upper section **270-A** to be separated from the lower section **270-B.** The replacement sections are then put in place, with the ends disposed between top plate **202-C** and bottom plate **202-D** of the connector assembly and abutting the ends of the adjoining section(s) of the deflector and the tongue **270-C** is placed into groove **270-D.** Fasteners **202-P** are placed into the top plate **202-C** and bottom plate **202-D** through the end of the replacement section and retainer pin **270-G** is inserted into aligned holes **270-F** and **270-E** of the tube sections **270-A** and **270-B.** Retainer pins are one method of connecting the first section of **270-A** connector assembly and the second section **270-B** of connector assembly. However, other methods could be used by persons of ordinary skill including clevis pins, detent clevis pins, safety pins, nuts and bolts.

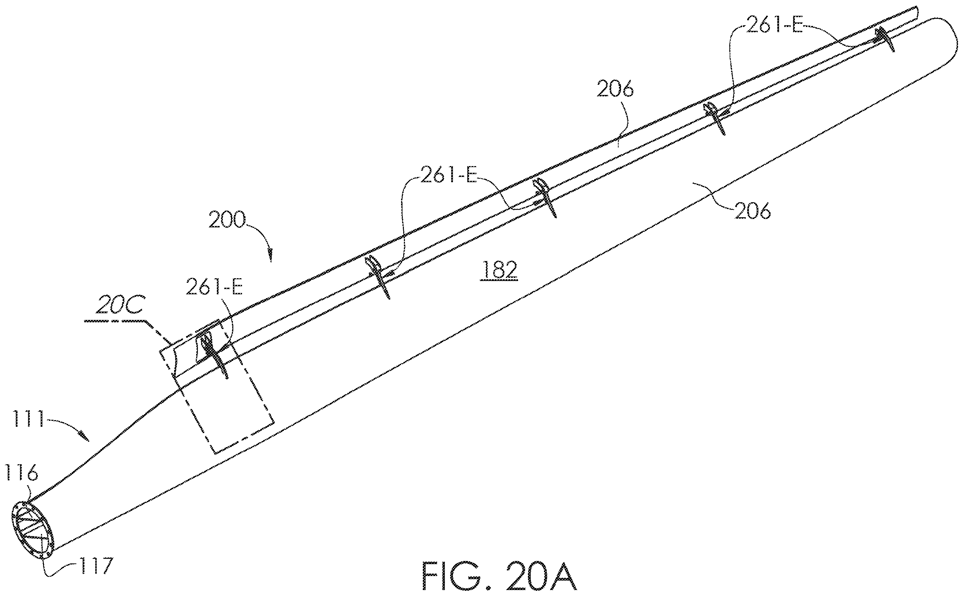

### 9.7 Variable Angle Connector Assembly - FIG. 20A - FIG. 20I

Referring now to FIG. **20A****,** one deflector embodiment includes powered variable angle connector assemblies (VAC assemblies) capable of changing the deflector angle of attack. This embodiment is capable of (i) controlling and/or improving the deflector/blade assembly performance over the fluid velocity range in which the assembly is operating, (ii) causing the blade benefited by a deflector to begin to rotate and covert kinetic energy even sooner than flow simulations and physical tests show it otherwise does, and (iii) functioning as a braking device.

Still referring FIG. **20A****,** in an embodiment, VAC assemblies **261-E,** visible on suction side **206** of deflector **200** and suction side **182** of blade **111,** are fixedly linked within blade **111** and are fixedly linked to deflector **200.** Connector assemblies **261-E** conform to the twist of the deflector/blade assembly and the concavity and convexity of deflector **200,** thus the twist and/or length or angle of connector assemblies **261-E** may vary over the deflector span **223** (see FIG. **9A**).

VAC assemblies **261-E** connect the deflector **200** to the blade **111** and are configured, as will be described, to enable and effect powered adjustment of the deflector angle of attack. Such powered adjustment may be automated and computer-controlled.

As described in Subsection **8.1,** changing the angle of attack of the deflector **200** is one variable factor that affects the deflector's impact on the blade **111** and thus the overall performance of the deflector/blade assembly and rotor.

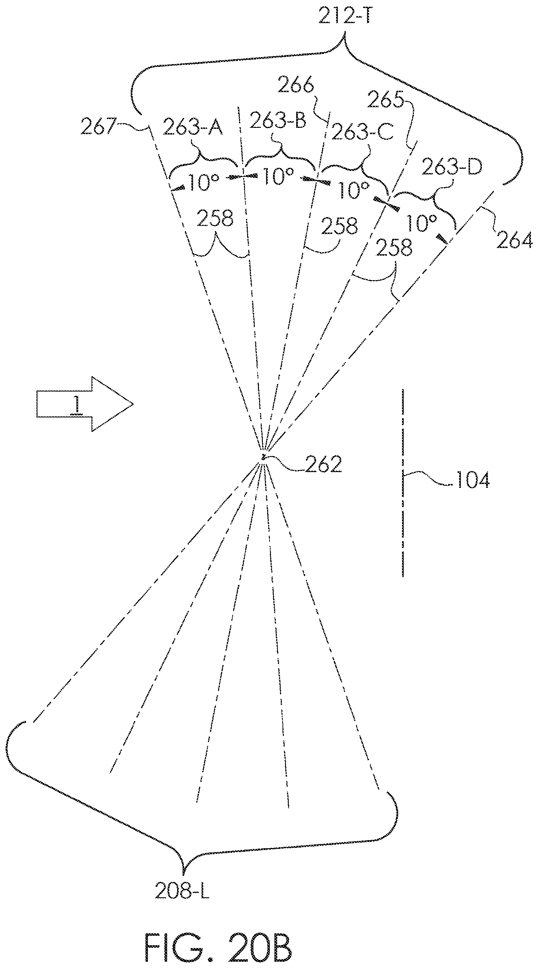

### 9.7.1 Optimization Positions - FIG. 20B

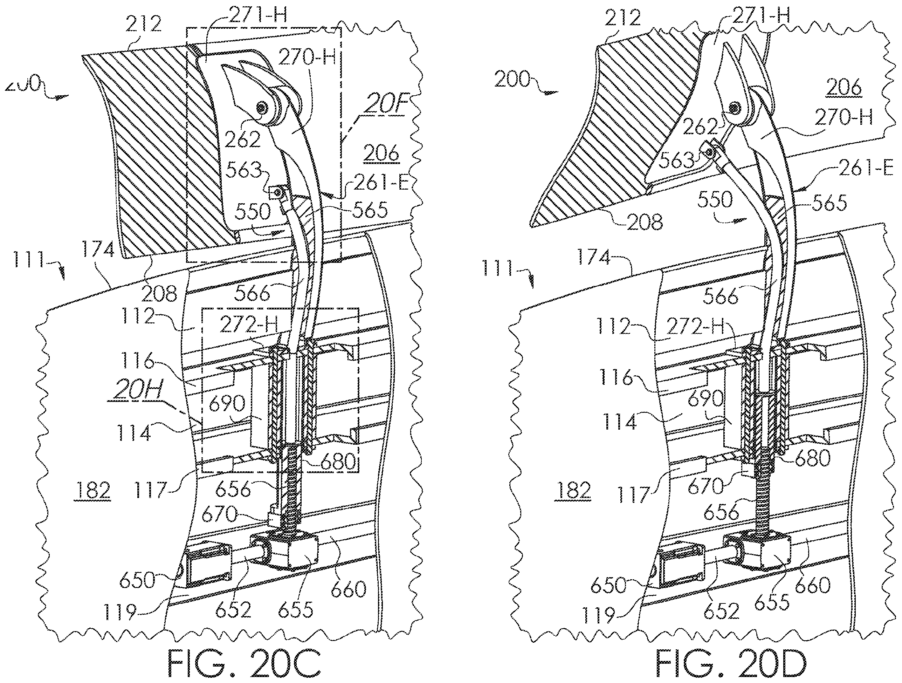

Referring now to FIG. **20B****,** while still referring to FIG. **20A****,** deflector chord line **258** is depicted in five positions relative to the rotor plane of rotation **104** represented as 10° angle ranges **263-A, 263-B, 263-C,** and **263-D.** To increase clarity of the illustration in FIG. **20B****,** profiles of deflector **200** are not shown. The deflector trailing edges would be located in the area of **212-T,** located near the top of FIG. **20B****,** and the deflector leading edges would be located in the area of **208-L,** located near the lower portion of FIG. **20B****.** In this embodiment, the deflector **200** articulates about point **262** (see also FIG. **20C****)** and has performance characteristics associated with deflector angle of attack ("AoA"), and positions as follows:

| **AoA Range or Position** | **Performance Characteristics** |
|---|---|
| 263-A | Induces drag; acts as brake |
| 263-B | Increases performance |
| 263-C | Increases performance |
| 263-D | Induces drag, acts as brake |
| 264 | Fully extended position; acts as brake |
| 265 | Optimal position to enable the start of rotation |
| 266 | Optimal position for 13 m/s |
| 267 | Fully retracted position; acts as brake |

In addition to the blade performance improvements detailed in Section **7,** additional blade performance improvements may be achieved by changing the deflector angle of attack throughout a speed range. For example, in physical tests, at wind speed that is insufficient to cause a blade without the deflector to begin to rotate, a blade benefited with a deflector begins to rotate sooner in the same wind speed e.g. at less than 1.12 m/s as compared to nearly 2.25 m/s for a blade without the benefit of a deflector, and outperforms the blade without the benefit of the deflector throughout the speed range. However, if the deflector angle of attack is moved to position **265** in conditions where the oncoming fluid flow 1 speed was 0.0 - 0.9 m/s, the rotor would begin to rotate at 0.67 m/s, and, by adjusting the deflector angle of attack from position **265** to position **266** as the oncoming fluid flow **1** speed increased, additional global torque would be obtained due to the deflector **200** having an optimal angle of attack throughout the blade **111** speed range.

### 9.7.2 Actuation Detail Overview- FIG. 20 C and FIG. 20D

Referring now to FIGS. **20C** and **20D****,** while still referring to FIG. **20B**, broken-out sections reveal motorized components and deflector-to-VAC connector connections. FIG. **20C** shows the deflector in the fully extended position **264** (representing one end of the deflector angle of attack range), and FIG. **20D** shows the deflector in the fully retracted position **267** (representing an opposite end of the deflector angle of attack range). It should be noted that, that the term "fully extended" refers to the position of the deflector relative to the plane of rotation **104** (see FIG. **20B**)**.** Consequently, in the embodiment shown, when the deflector **200** is in its fully extended position, the flexible shaft assembly **550** is in its fully retracted position, and likewise, when the deflector **200** is in its fully retracted position, the flexible shaft assembly **550** is in its fully extended position.

Connector assembly **261-E** includes a pivot spar **270-H** having a flange **272-H** at one end that is connected (e.g., by mechanical fasteners or the like) to U-shaped web **116** within blade **111.** Pivot spar **270-H** projects through an opening in the blade **111** at or near the blade's trailing edge **174** and extends to a location spaced aft of the blade trailing edge **174.** A deflector end flange **271-H** is attached to deflector **200** and includes a pivoting connection **262** at which an end of spar **270-H** is pivotably connected to flange **271-H.** Details of this connection are described in Subsection **9.7.4.**

In the illustrated embodiment, spar **270-H** is connected to the flange **271-H** (and thus to the deflector **200**) closer to the deflector trailing edge **212** than to the deflector leading edge **208.** A flexible shaft assembly **550** is connected to the flange **271-H** closer to the deflector leading edge **208** than to the deflector trailing edge **212** and is configured to cause the deflector **200** to pivot about the end of the pivot spar **270-H** at pivot connection **262** to thereby selectively alter the angle of attack of the deflector **200.**

In the illustrated embodiment, motor **650** rotates a shaft **652** which drives a right-angle drive **655,** which causes drive screw **656** to rotate, thereby causing corresponding axial movement of collar **670** along the length of drive screw **656,** which causes corresponding axial movement of male guide tube **680** (see also Subsection **9.7.6),** which causes flexible shaft assembly **550** to extend and retract to alter the angle of attack of the deflector **200.** In this embodiment, motor **650** is located nearest the hub-end of blade **111,** however, the motor **650** may alternatively be located anywhere along the blade span **154** (see FIG. **2A****)** or within the hub **121** (see FIG. **1A****).**

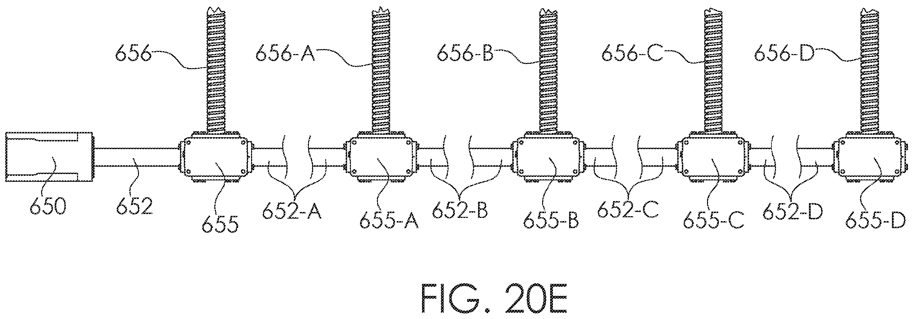

The VAC connector 40-degree range of motion (see FIG. **20B****)** may be extended in numerous methods including by (i) moving pivot point **262** closer to pivot point **563,** or (ii) lengthening screw **656** and locating motor **650,** shaft **652,** right angle drive **655,** shaft **660,** and the balance of related shafts and right angle drives (see FIG. **20E****),** under support **119,** and increasing the curvature of spar **270-H,** thus increasing the distance of travel between trailing edge **208** and pivot spar **270-H,** or (iii) swapping the locations of pivot points **262** and **563,** or (iv) any combination of methods (i) - (iii).

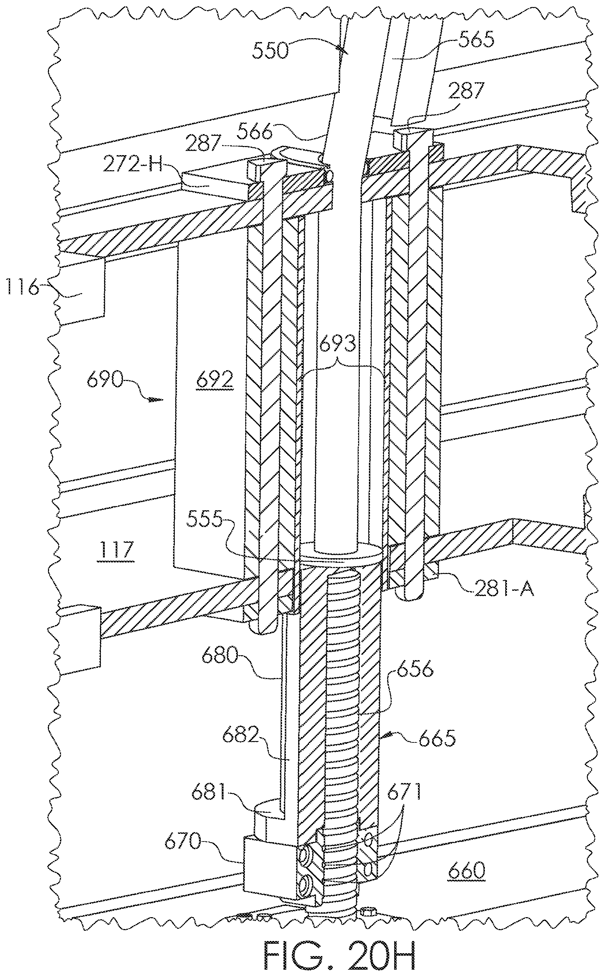

A flexible shaft assembly **550** includes a flexible shaft **566** pivotably connected at one end to the flange **271-H** and anchored at an opposite end within the blade **111.** Flexible shaft **566** extends through a flexible shaft guide tube **565,** which, in the illustrated embodiment, is part of the pivot spar **270-H.** The end of flexible shaft **566** anchored within the blade **111** is coupled to a drive screw assembly **665** configured (see **FIG. 20H****),** as will be described, to effect powered (e.g., motorized) axial movement of the flexible shaft **566** to vary the amount by which the flexible shaft **566** extends from the blade **111** to thus cause the deflector **200** to which the flexible shaft **566** is attached to pivot about pivot connection **262** and alter the angle of attack of the deflector **200.**

### 9.7.3 Major Drivetrain Components - FIG. 20E

Referring now to FIG. **20E** while still referring to FIG. **20C****,** if the deflector/blade assembly includes multiple VAC connector assemblies **261-E,** right-angle drive **655** may also rotate shaft **660,** which is connected to a subsequent right-angle drive for an adjacent VAC connector assembly **261-E,** so that a single motor **650** can simultaneously actuate all VAC connector assemblies **261-E.**

The right-angle drive and related drive shaft configuration illustrated may be repeated along the length of the deflector span **223** (see FIG. **9A**) and drives each subsequent VAC connector assembly **261-E** thereafter. In this embodiment, motor **650** drives shaft **652,** which drives right angle drive **655,** screw **656,** and shaft **652-A** which drives right angle drive **655-A,** screw **656-A,** and shaft **652-B,** which drives right angle drive **655-B,** screw **656-B,** and shaft **652-C,** which drives right angle drive **655-C,** screw **656-C,** and shaft **652-D,** which drives right angle drive **655-D** and screw **656-D.**

Other embodiments of the VAC connectors could include one or more motors similar to motor **650** located anywhere along blade span **154** (see FIG. **2A**), e.g., near the middle of the blade span **154,** or within hub **121** (see FIG. **1A**) not shown. Likewise, a computer that controls motor **650** may be located anywhere within the turbine **100** (see FIG. **1A**).

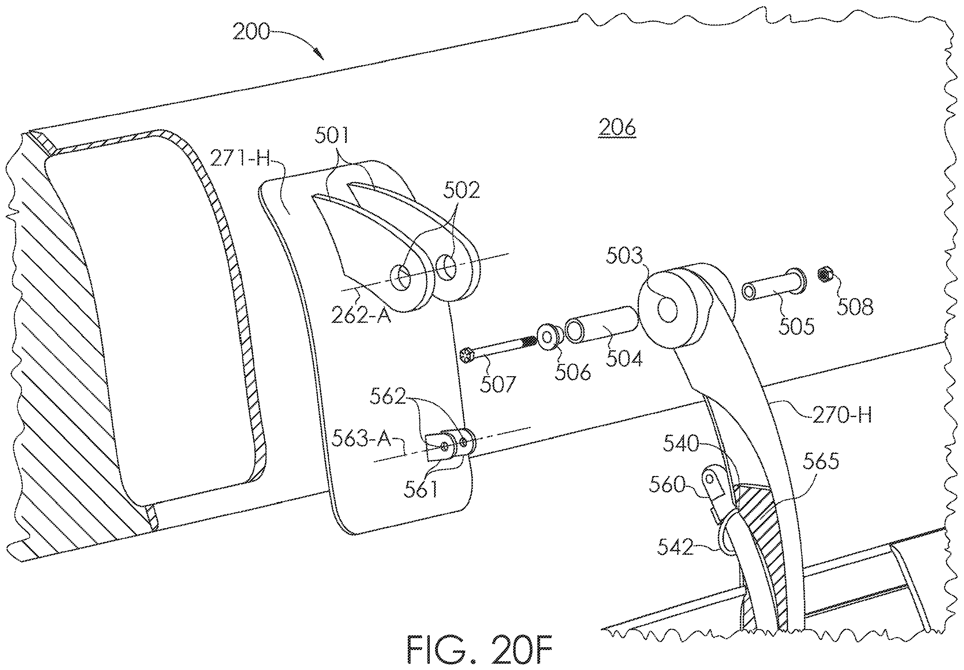

### 9.7.4 VAC Pivot Point Detail - FIG. 20F

Referring to FIG. **20F****,** pivot spar **270-H** pivots at pivot point **262** about pivot axis **262-A.** In one example, pivot point **262** (see FIGS. **20C** and **20D**), which is colinear with pivot axis **262**-A**,** may comprise spaced-apart spar brackets **501** projecting from flange **271-H.** A bushing **504** is press fit into a hole **503** formed in the end of the spar **270-H,** and the end of spar **270-H** is received between the spar brackets **501** with bushing **504** and hole **503** aligned with holes **502** formed in the spar brackets **501.** A bushing **505** (which may be a self-lubricating bushing) is inserted through one hole **502** into one end of bushing **504,** and a top hat bushing **506** is inserted through an opposite hole **502** into an opposite end of the bushing **504** and preferably contacts the bushing **505** within the bushing **504.** A bolt **507** is inserted through holes **502** and bushings **506** and **505** and is secured at an end by a nut **508.** Bolts and nuts are one method of attachment that can be used at pivot points **262** and **563** (see FIG. **20C** and FIG. **20D**). However, other methods could be used by persons of ordinary skill including clevis pins, detent clevis pins, and safety pins.

### 9.7.5 Flexible Shaft Pivot Point and Shaft Detail - FIG. 20F - 20G

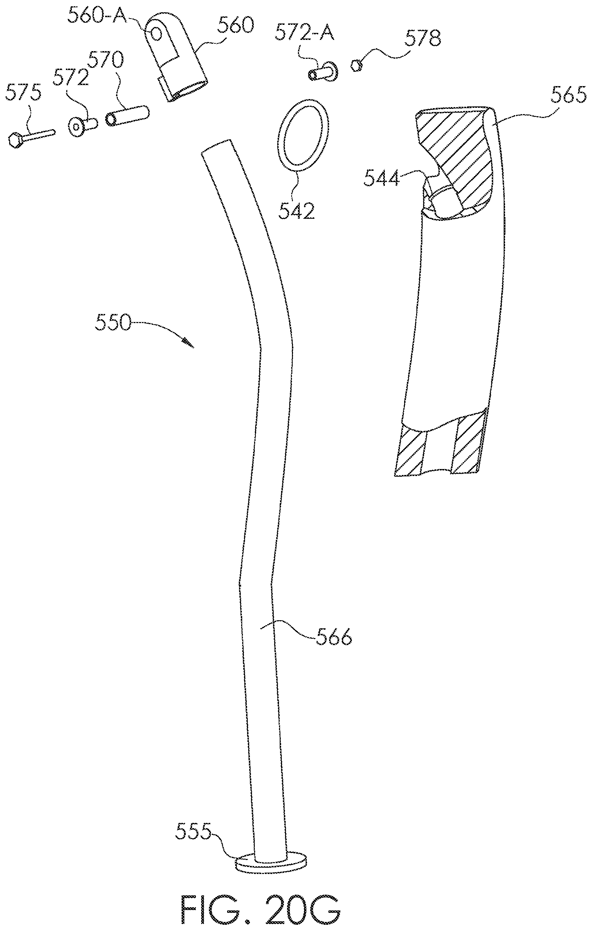

Referring now to FIG. **20G** while still referring to FIG. **20F** in one example, flexible shaft **566** is pivotably attached to flange **271-H** at a pivot point **563** (see FIG. **20C**) to pivot about pivot axis **563-A** at a pivot connector that is spaced apart in a deflector chordwise direction toward the deflector leading edge **208** from the pivot connector **262** (see FIG. **20C**), connecting the spar **270-H** to the deflector at pivot point **262** (see FIG. **20C**). Pivot point **563** (see FIG. **20C**) may comprise spaced-apart flexible shaft brackets **561** projecting from flange **271-H.** A bushing **570** is press fit into a hole **560-A** formed through a connector cap **560** disposed at an end of flexible shaft **566,** and the connector **560** is received between the flexible shaft brackets **561** with bushing **570** and hole **560-A** aligned with holes **562** formed in the flexible shaft brackets **561.** A first bushing **572** (which may be a self-lubricating bushing) is inserted through one hole **562** into one end of bushing **570,** and a second bushing **572-A** is inserted through an opposite hole **562** into an opposite end of the bushing **570** and preferably contacts the first bushing **572** within the bushing **570.** A bolt **575** is inserted through holes **562** and bushings **572** and **572-A** and is secured at an end by a nut **578.**

One or more seals or other means may be provided to prevent infiltration of moisture or debris along the flexible shaft **566** into the flexible shaft guide tube **565.** As shown in FIGS. **20F** and **20G****,** an O-ring **542** surrounding the flexible shaft **566** and positioned in an O-ring seat **544** may be provided. O-ring **542** is one design to prevent fluid from entering flexible shaft guide tube **565,** however, multiple types and numbers of seals could be used for this purpose by anyone of ordinary skill.

### 9.7.6 Guide Tube Assembly Detail - FIG. 20H - FIG. 20I

Referring to FIG. **20H****,** an end of flexible shaft assembly **550** is mounted within blade **111** (see FIGS. **20C** and **20D****)** for limited axial movement in the guide tube assembly **690.** Guide tube assembly **690,** which includes a guide tube housing **692,** may be secured between webs **116** and **117** by bolts **287** extending through flange **271-H,** web **116,** through holes **688** formed in housing **692,** web **117,** and lower flange **281-A.** Bolts **287** may be secured by nuts (not shown) or lower flange **281-A** may be threaded.

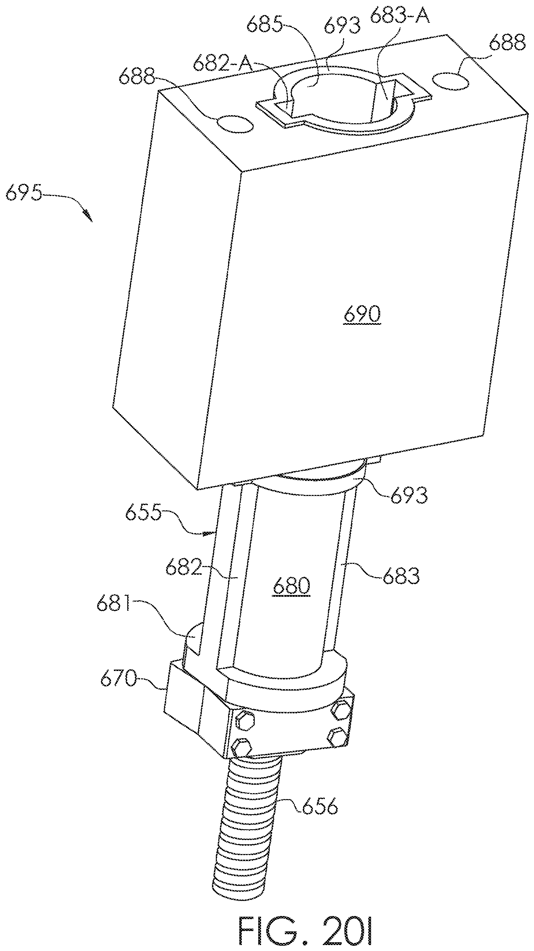

Flexible shaft **566** is disposed within a guide tube hole **685** (see FIG. **20I**) in guide tube housing **692.** A stop at **555** fixedly attached at an end of the flexible shaft **566** has a diameter slightly smaller than the diameter of the hole **685** to enable axial movement of the stop **555** and flexible shaft **566** within the hole **685,** but larger than the diameter of holes formed in web **116** and flange **272-H** (which diameters are slightly larger than the diameter of the flexible shaft **566**). Stop **555** contacts web **116** to prevent the flexible shaft **566** from being pulled out of the guide tube housing **692** in tandem with stop **681** described below.

A flexible shaft actuator is coupled to flexible shaft **566** to effect selective, powered (e.g., motorized) axial movement of flexible shaft **566** within the guide hole **685.** In the illustrated embodiment, a flexible shaft actuator comprises a drive screw assembly **665.** Drive screw assembly **665** comprises a male guide tube **680** disposed for axial movement within the guide tube hole **685.**

Drive assembly **665** further comprises a drive screw **656** extended into an axial, blind hole formed in the male guide tube **680.** A collar of **670** with ball screw bearing **671** is operably coupled to drive screw **656** so that rotation of the drive screw **656** causes a corresponding axial movement of the collar **670** along the length of the drive screw **656.** Collar **670** abuts stop **681** of male guide tube **680** and may be connected thereto so that axial movement of the collar **670** along the drive screw **656** causes corresponding axial movement of the male guide tube **680.** An end of the male guide tube **680** opposite the stop **681** abuts with, and may be connected to, stop **555** of the flexible shaft **566** so that axial movement of the male guide tube **680** causes a corresponding axial movement of the flexible shaft **566** within the guide tube hole **685.** When flexible shaft **550** is fully extended, stop **681** contacts flange **281-A** thus limiting its travel in tandem with stop **555** as described above. Guide tube housing **692** may be split longitudinally and fastened together (not shown) to facilitate assembly of flexible shaft assembly **550** and drive screw assembly **665.**

Referring now to FIG. **20I**, keys **682, 683** received within key slots **682-A, 683-A,** respectively, prevent the male guide tube **680** from rotating within the guide tube hole **685.** A stop **681** at a lower end of the male guide tube **680** contacts the bottom of a female guide tube **693** disposed within housing **692** so as to limit the travel of the male guide tube **680** within the hole **685,** and consequently, limit the travel of the flexible shaft assembly **550** (see FIG. **20G**). Male guide tube **680** and female guide tube **693** may be constructed of or comprise materials at the designer's choice, including low-friction high strength metals and plastics, e.g. oil impregnated sintered bronze and acetal homopolymer such as Delrin^{®}.

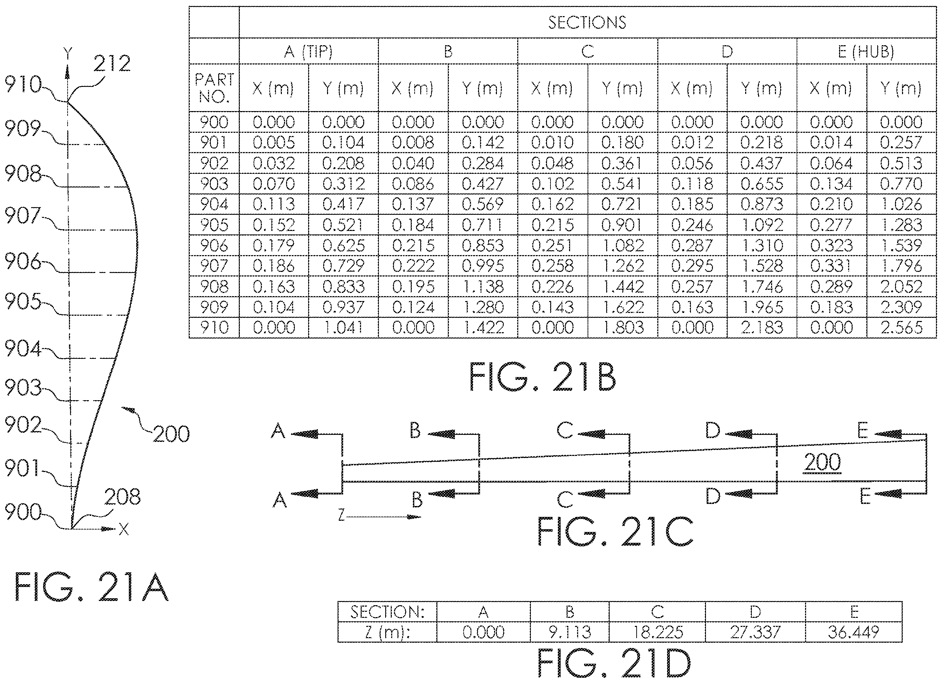

### 10. Blade and Deflector - Geometry as Simulated - FIG. 21A - 21D

Deflector **111** CAD dimensional data, and the position of deflector **200** relative to the blade **111,** as it underwent flow simulation as described in Section **7,** is included in the following Subsections.

### 10.1 Deflector Dimensional Data - FIG. 21A - 21D

Referring now to FIG. **21A****,** a side profile schematic of an embodiment of deflector **200** showing **11** reference points **900** - **910** along a chord, beginning with point **900** at the leading edge **208** and point **910** at the trailing edge **212,** are shown.

Referring now to FIG. **21B****,** while still referring to FIG. **21A****,** this table provides profile dimensional data for a deflector that was modeled for flow analysis in **X** and **Y** coordinates for profiles **A, B, C, D,** and **E** (where leading edge **208** is the origin (0, 0) of the coordinate system).

Referring now to FIG. **21C** while still referring to Fig. **21A** and FIG. **21B****,** a front view of deflector **200** shows the intersections from which the profile measurements in the table in FIG. **21B** were taken. Sections **A-A, B-B, C-C, D-D,** and **E-E** in FIG. **21C** correspond, respectively, to table columns **A, B, C, D,** and **E** in FIG. **21B****.**

FIG. **21D** shows a table of offset dimensions in the **Z** (spanwise) direction from the tip of the blade (profile **A** corresponding to section **A-A** in FIG. **21C** to profiles **B, C, D,** and **E,** corresponding, respectively, to sections **B-B, C-C, D-D,** and **E-E** in FIG. **21C**.

Referring now to FIG. **21A** - FIG. **21D****,** geometric dimensional data for deflector **200** may be obtained at reference points **900** - **910** in FIG. **21A** at each of profiles **A** through **E** corresponding, respectively, to sections **A-A, B-B, C-C, D-D,** and **E-E** in FIG. **21C****.** For example, from FIGS. **21****B** and **21D**, reference point **901** on profile **B** has (**X, Y, Z**) coordinates (dimensional data) relative to leading edge **208** at the tip end of deflector **200** (i.e., profile **A**) of (0.142m, 0.008m, 9.113m).

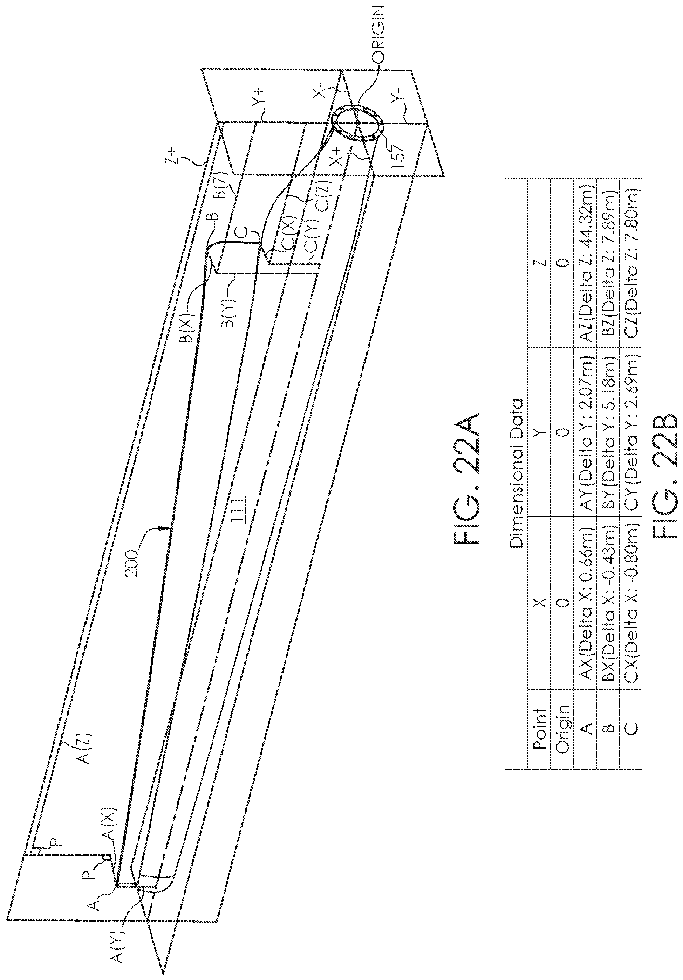

### 10.2 Deflector Position Relative to the Blade - FIG. 22A - 22B

Referring now to FIG. **22A****,** blade **111** and deflector **200,** the dimensional data for which is obtained from Subsection **10.1,** are positioned within planes **X, Y** and **Z** originating from the center of connecting structure (hub mounting flange) **157.** Deflector **200** is constrained by corner **A** (trailing edge of deflector **200** at the tip end of the deflector), corner **B** (trailing edge of deflector **200** at the hub end of the deflector), and corner **C** (leading edge of deflector **200** at the hub end of the deflector), thus defining each corner in **X, Y, Z** coordinates and consequently fully defining deflector **200** in 3-dimensional space necessary for obtaining dimensional data.

FIG. **22B** provides **X, Y, Z** coordinates (dimensional data), relative to the coordinate system origin centered at the hub flange **157,** for corners **A, B,** and **C. X, Y, Z** coordinates (dimensional data) for corner **A** are (0.66m, 2.07m, 44.32m), for corner **B** are (-0.43m, 5.18m, 7.89m), and for corner **C are** (-0.80m, 2.69m, 7.80m).

For positioning profiles **A** through **E** of a deflector **200** in three-dimensional space, a geometric path of the blade trailing edge **174** in three-dimensional space can be followed as a guide for the leading edge **208** of deflector **200.** Sections **A-A, B-B, C-C, D-D,** and **E-E** in FIG. **21C** can be spaced along the three-dimensional geometric path at the **Z** intervals specified in FIG. **21D**. Additionally, a profile twist progressively away from the oncoming flow, totaling 1°, occurs between profiles **A** and **E.** For example, twist for profile **A** = 0.0°, **B** = 0.25°, **C** = 0.5°, **D** = 0.75°, **E** = 1.0°.

Deflector **200** vertical and horizontal skew distances between the blade trailing edge **174** and the deflector leading edge **208,** as described in Subsections **8.2** - **8.3** and shown in FIGS. **13C** and**13D****,** are **229-A** -0.043m, **229-E** 0.151m, **228-A** 0.562m, and **228-B** 0.252m.

### COMBINATIONS OF ELEMENTS AND COMPONENTS

All possible combinations of elements and components described in the specification and/or recited in the claims are contemplated and considered to be part of this disclosure. It should be appreciated that all combinations of the concepts and additional concepts discussed in greater detail herein (provided such concepts are not mutually inconsistent) are contemplated as being part of the subject matter described herein.

## Claims

1. A fluid flow turbine blade assembly comprising:
a rotor blade (111) comprising a root section (160) at which the rotor blade is attached to a hub (121) of a fluid flow turbine and a working section, wherein the working section has a leading edge (168) and a trailing edge (174) and wherein the working section is configured and oriented to form a pressure surface (178) facing oncoming fluid flow (1) impinging on the rotor blade and a suction surface (182); and
a deflector (200) coupled to the rotor blade and extending spanwise along at least a portion of the working section of the rotor blade, wherein the deflector has a leading edge (208), a trailing edge (212), an upstream surface (204) facing the oncoming fluid flow, and a downstream surface (206) facing away from the oncoming fluid flow, wherein at least a portion of a chord extending between the leading edge of the deflector and the trailing edge of the deflector is disposed outside a profile of the deflector defined between the upstream surface of the deflector and the downstream surface of the deflector, wherein at least a portion of the upstream surface along at least a portion of a span (223) of the deflector has a concave shape (230) in a chordwise direction, wherein the trailing edge of the deflector is situated aft of the trailing edge of the working section relative to a direction of travel of the turbine blade assembly, and wherein a spacing (228) between the deflector and the rotor blade varies across at least a portion of the span of the deflector.

2. The fluid flow turbine blade assembly of claim 1, wherein the working section of the blade is an airfoil section (164) or a hydrofoil section (364).

3. The fluid flow turbine blade assembly of claim 1 or 2, wherein at least a portion of the upstream surface has a convex shape (238) in a chordwise direction.

4. The fluid flow turbine blade assembly of claim 3, wherein the portion of the upstream surface having a concave shape extends to the trailing edge of the deflector; or
wherein the portion of the upstream surface having a convex shape extends to the leading edge of the deflector.

5. The fluid flow turbine blade assembly of any one of claims 1 to 4, wherein, along at least a portion of the span of the deflector, the leading edge of the deflector is closer to the oncoming fluid flow than the trailing edge of the rotor blade; preferably,
wherein, along at least a portion of the span of the deflector, the trailing edge of the deflector is closer to the oncoming fluid flow than the trailing edge of the rotor blade.

6. The fluid flow turbine blade assembly of any one of claims 1 to 4, wherein, along at least a portion of the span of the deflector, the leading edge of the deflector is further from the oncoming fluid flow than the trailing edge of the rotor blade; preferably,
wherein, along at least a portion of the span of the deflector, the trailing edge of the deflector is further from the oncoming fluid flow than the trailing edge of the rotor blade.

7. The fluid flow turbine blade assembly of any one of claims 1 to 6, wherein the leading edge of the deflector is situated aft of the trailing edge of the working section relative to the direction of travel of the turbine blade assembly.

8. The fluid flow turbine blade assembly of any one of claims 1 to 7, wherein, at least 25 - 90% of the chord extending between the leading edge of the deflector and the trailing edge of the deflector is disposed outside the profile of the deflector defined between the upstream surface of the deflector and the downstream surface of the deflector.

9. The fluid flow turbine blade assembly of claim 1, wherein, at least 25 - 80% of the chord extending between the leading edge of the deflector and the trailing edge of the deflector is disposed outside the profile of the deflector defined between the upstream surface of the deflector and the downstream surface of the deflector at a tip end of the deflector, and at least 65 - 90% of the chord extending between the leading edge of the deflector and the trailing edge of the deflector is disposed outside the profile of the deflector defined between the upstream surface of the deflector and the downstream surface of the deflector at a hub end of the deflector.

10. The fluid flow turbine blade assembly of any one of claims 1 to 9, wherein a span-wise curvature of the leading edge of the deflector follows a span-wise curvature of the trailing edge of the blade.

11. The fluid flow turbine blade assembly of any one of claims 1 to 10, further comprising one or more walls (600) projecting from at least one of the upstream surface and the downstream surface of the deflector, wherein each wall extends at least partially from the leading edge of the deflector to the trailing edge of the deflector; preferably,
further comprising a transverse wall (620) extending from at least one of the one or more wall, wherein the transverse wall extends along or near the trailing edge of the deflector.

12. The fluid flow turbine blade assembly of any one of claims 1 to 11, wherein the deflector comprises two or more sections (201-A, 201-B, 201-C, 201-D, 201-E), wherein each section is connected to an adjoining section by a connector comprising a top plate (202-C) and a bottom plate (202-B, 202-D, 202-F) overlapping abutting ends of the section and the adjoining section and fasteners (202-P) extending through the top and bottom plates and portions of the section and the adjoining section overlapped by the top and bottom plates; and/or
wherein the deflector has a reflexed mean camber line (226) such that a center of curvature of a first portion of the reflexed mean camber line is located on a downstream side of the deflector and a center of curvature of a second portion of the reflexed mean camber line is located on an upstream side of the deflector.

13. The fluid flow turbine blade assembly of any one of claims 1 to 12, wherein along at least a portion of a span of the deflector extending to a tip end (218) of the deflector, both the leading edge of the deflector and the trailing edge of the deflector are closer to the oncoming flow than both the leading edge of the blade and the trailing edge of the blade; preferably,
wherein at a hub end (214) of the deflector at least one of the leading edge of the deflector and the trailing edge of the deflector is not closer to the oncoming flow than at least one of the leading edge of the blade and the trailing edge of the blade; preferably,
wherein a distance by which the deflector is closer to the oncoming flow than the blade increases continuously from the hub end of the deflector to the tip end of the deflector.

14. The fluid flow turbine blade assembly of any one of claims 1 to 13, further comprising a connector assembly (261) connecting the deflector to the rotor blade.

15. The fluid flow turbine blade assembly of claim 14, wherein the connector assembly comprises:
a tube (270);
a deflector-end flange (271) fixedly linked to one end of the tube and to the deflector; and
a blade-end flange (272) fixedly linked to an opposite end of the tube and to the rotor blade; preferably,
wherein the turbine blade assembly is attached to a hub (121) of a rotor (110) that is rotatable about a rotor axis of rotation (123), the turbine blade assembly is oriented axially with respect to the rotor axis of rotation, and at least a portion of the oncoming fluid flow (1) is parallel to the rotor axis of rotation, wherein a first section of the tube defines an aerodynamic shape that is tapered toward a first leading edge (273) of the first section and is tapered toward a first trailing edge (274) of the first section with respect to the oncoming fluid flow and a second section of the tube defines an aerodynamic shape that is tapered toward a second leading edge (276) of the second section and is tapered toward a second trailing edge (278) of the second section with respect to fluid flow resulting from rotation of the rotor; preferably,
wherein the first section is symmetrical about a line bisecting the first section between the first leading edge and the first trailing edge, and the second section is symmetrical about a line bisecting the second section between the second leading edge and the second trailing edge.

16. The fluid flow turbine blade assembly of claim 15, comprising two or more connector assemblies, each disposed at a different span-wise position along the turbine blade assembly, and wherein the tube of each connector assembly is shaped between its opposed ends to conform to an arc centered on an axis of rotation of the fluid flow turbine and having a radius corresponding to the spanwise position of the connector assembly.

17. The fluid flow turbine blade assembly of any one of claims 1 to 16, wherein at least one of a radius of curvature and an arc-length of the portion of the upstream surface having the concave shape varies along at least a portion of the span of the deflector.

18. The fluid flow turbine blade assembly of any one of claims 14 to 16, wherein the connector assembly connects the deflector to the rotor blade such that an angle of attack of the deflector with respect to a rotor plane of rotation is fixed or such that the angle of attack of the deflector with respect to the rotor plane of rotation is variable.

19. The fluid flow turbine blade assembly of claim 14, wherein the connector assembly comprises a variable angle connector assembly (261-E) which connects the deflector to the rotor blade such that an angle of attack of the deflector with respect to a rotor plane of rotation is variable, and wherein the variable angle connector assembly comprises:
a spar (270-H) having a first end fixed to an internal structure within the rotor blade and a second end pivotably connected to the deflector;
a flexible shaft (566) having a first end supported internally of the rotor blade for axial movement with respect to a longitudinal axis of the flexible shaft and a second end pivotably connected to the deflector at a position (563) that is spaced apart from a position (262) at which the second end of the spar is pivotably connected to the deflector; and
a flexible shaft actuator coupled to the first end of the flexible shaft for effecting axial movement of the flexible shaft; preferably,
wherein the flexible shaft actuator comprises:
a guide tube assembly (690) disposed within the rotor blade, the guide tube assembly comprising a guide tube housing (692) having a guide hole (685) within which the first end of the flexible shaft is supported and a guide tube (680) that is movable within the guide hole, wherein the first end of the flexible shaft is coupled to an end of the guide tube;
a drive screw (656, 656-A, 656-B, 656-C, 656-D) extending into a hole formed in the guide tube;
a threaded collar (670) coupled to the drive screw so that rotation of the drive screw causes a corresponding axial movement of the collar along a length of the drive screw, wherein the collar is coupled to the guide tube so that the axial movement of the collar is transmitted to the guide tube to cause axial movement of the guide tube within the guide hole which causes corresponding axial movement of the flexible shaft; and
a motor (650) coupled to the drive screw for effecting powered rotation of the drive screw; preferably,
wherein the motor is coupled to the drive screw by a right angled drive (655, 655-A, 655-B, 655-C, 655-D) that transmits a shaft (652) rotation generated by the motor in a first direction to rotate the drive screw and in a second direction to rotate a drive shaft (660, 652-A, 652-B, 652-C, 652-D,) to transmit rotation to a flexible shaft actuator of an adjacent variable angle connector assembly.

20. The fluid flow turbine blade assembly of any one of claims 1 to 19, wherein the deflector extends spanwise along an entire span of the rotor blade, including the root section and the working section; and/or
wherein, from the leading edge of the deflector to the trailing edge of the deflector, the deflector has a non-uniform thickness between the upstream surface and the downstream surface; and/or
wherein at least a portion of the trailing edge of the deflector includes a curved section (219) of decreasing chord length between the leading edge of the deflector and the trailing edge of the deflector, wherein the curved section extends to a tip of the deflector; or
wherein at least a portion of the trailing edge of the deflector includes an arced section (231-0) of increasing chord length between the leading edge of the deflector and the trailing edge of the deflector extending to a tip of the deflector, wherein the arced section extends to a tip of the deflector.

21. A fluid flow turbine comprising:
a hub (121); and
a rotor (110) comprising two or more of the turbine blade assembly of any one of claims 1 to 20 connected to the hub, wherein the rotor is rotatable about a rotor axis of rotation and each turbine blade assembly extends axially with respect to the rotor axis of rotation.

22. The fluid flow turbine of claim 21, wherein the rotor axis of rotation is oriented vertically or horizontally; and/or
comprising at least three of the turbine blade assemblies connected to the hub; and/or
comprising:
a nacelle (138), wherein the hub is supported by or within the nacelle; and
a tower (124) supporting the nacelle; preferably,
further comprising at least one of a gearbox (126) and a generator (128) within the nacelle and operatively coupled to the rotor.

23. The fluid flow turbine of claim 21, wherein at least a portion of the oncoming fluid flow is generally parallel to the rotor axis of rotation.

24. A hydro driven turbine (300) assembly comprising the fluid flow turbine of any one of claims 21 to 23; or
a wind driven turbine (100) assembly comprising the fluid flow turbine of any one of claims 21 to 23.

## Patentansprüche

1. Fluidflussturbinenschaufelbaugruppe, umfassend:
eine Rotorschaufel (111), umfassend einen Fußabschnitt (160), an dem die Rotorschaufel an einer Nabe (121) einer Fluidflussturbine angebracht ist, und einen Arbeitsabschnitt, wobei der Arbeitsabschnitt eine Anströmkante (168) und eine Abströmkante (174) aufweist und wobei der Arbeitsabschnitt dazu konfiguriert und ausgerichtet ist, eine Druckfläche (178), die einem ankommendem Fluidfluss (1), der auf die Rotorschaufel auftrifft, zugewandt ist, und eine Ansaugfläche (182) auszubilden; und
einen Deflektor (200), der mit der Rotorschaufel gekoppelt ist und sich spannweitig entlang mindestens einem Teil des Arbeitsabschnitts der Rotorschaufel erstreckt, wobei der Deflektor eine Anströmkante (208), eine Abströmkante (212), eine stromaufwärtige Fläche (204), die dem ankommenden Fluidfluss zugewandt ist, und eine stromabwärtige Fläche (206), die von dem ankommenden Fluidfluss abgewandt ist, aufweist, wobei mindestens ein Teil einer Sehne, die sich zwischen der Anströmkante des Deflektors und der Abströmkante des Deflektors erstreckt, außerhalb eines Profils des Deflektors angeordnet ist, das zwischen der stromaufwärtigen Fläche des Deflektors und der stromabwärtigen Fläche des Deflektors definiert ist, wobei mindestens ein Teil der stromaufwärtigen Fläche entlang mindestens einem Teil einer Spannweite (223) des Deflektors eine konkave Form (230) in einer Sehnenrichtung aufweist, wobei die Abströmkante des Deflektors sich hinten an der Abströmkante des Arbeitsabschnitts relativ zu einer Laufrichtung der Turbinenschaufelbaugruppe befindet, und wobei ein Abstand (228) zwischen dem Deflektor und der Rotorschaufel über mindestens einen Teil der Spannweite des Deflektors variiert.

2. Fluidflussturbinenschaufelbaugruppe nach Anspruch 1, wobei der Arbeitsabschnitt der Schaufel ein Luftleitprofilabschnitt (164) oder ein Hydro-Leitprofilabschnitt (364) ist.

3. Fluidflussturbinenschaufelbaugruppe nach Anspruch 1 oder 2, wobei mindestens ein Teil der stromaufwärtigen Fläche eine konvexe Form (238) in einer Sehnenrichtung aufweist.

4. Fluidflussturbinenschaufelbaugruppe nach Anspruch 3, wobei der Teil der stromaufwärtigen Fläche, der eine konkave Form aufweist, sich zu der Abströmkante des Deflektors erstreckt; oder
wobei der Teil der stromaufwärtigen Fläche, der eine konvexe Form aufweist, sich zu der Anströmkante des Deflektors erstreckt.

5. Fluidflussturbinenschaufelbaugruppe nach einem der Ansprüche 1 bis 4, wobei entlang mindestens einem Teil der Spannweite des Deflektors die Anströmkante des Deflektors näher zu dem ankommenden Fluidfluss ist als die Abströmkante der Rotorschaufel;
wobei bevorzugt entlang mindestens einem Teil der Spannweite des Deflektors die Abströmkante des Deflektors näher zu dem ankommenden Fluidfluss ist als die Abströmkante der Rotorschaufel.

6. Fluidflussturbinenschaufelbaugruppe nach einem der Ansprüche 1 bis 4, wobei entlang mindestens einem Teil der Spannweite des Deflektors die Anströmkante des Deflektors weiter weg von dem ankommenden Fluidfluss ist als die Abströmkante der Rotorschaufel;
wobei bevorzugt entlang mindestens einem Teil der Spannweite des Deflektors die Abströmkante des Deflektors weiter weg von dem ankommenden Fluidfluss ist als die Abströmkante der Rotorschaufel.

7. Fluidflussturbinenschaufelbaugruppe nach einem der Ansprüche 1 bis 6, wobei die Anströmkante des Deflektors sich hinten an der Abströmkante des Arbeitsabschnitts relativ zu der Laufrichtung der Turbinenschaufelbaugruppe befindet.

8. Fluidflussturbinenschaufelbaugruppe nach einem der Ansprüche 1 bis 7, wobei mindestens 25-90 % der Sehne, die sich zwischen der Anströmkante des Deflektors und der Abströmkante des Deflektors erstreckt, außerhalb des Profils des Deflektors angeordnet sind, das zwischen der stromaufwärtigen Fläche des Deflektors und der stromabwärtigen Fläche des Deflektors definiert ist.

9. Fluidflussturbinenschaufelbaugruppe nach Anspruch 1, wobei mindestens 25-80 % der Sehne, die sich zwischen der Anströmkante des Deflektors und der Abströmkante des Deflektors erstreckt, außerhalb des Profils des Deflektors angeordnet sind, das zwischen der stromaufwärtigen Fläche des Deflektors und der stromabwärtigen Fläche des Deflektors an einem Spitzenende des Deflektors definiert ist, und mindestens 65-90 % der Sehne, die sich zwischen der Anströmkante des Deflektors und der Abströmkante des Deflektors erstreckt, außerhalb des Profils des Deflektors angeordnet sind, das zwischen der stromaufwärtigen Fläche des Deflektors und der stromabwärtigen Fläche des Deflektors an einem Nabenende des Deflektors definiert ist.

10. Fluidflussturbinenschaufelbaugruppe nach einem der Ansprüche 1 bis 9, wobei eine spannweitige Krümmung der Anströmkante des Deflektors, einer spannweitigen Krümmung der Abströmkante der Schaufel folgt.

11. Fluidflussturbinenschaufelbaugruppe nach einem der Ansprüche 1 bis 10, ferner umfassend eine oder mehrere Wände (600), die von mindestens einer von der stromaufwärtigen Fläche und der stromabwärtigen Fläche des Deflektors vorstehen, wobei jede Wand sich mindestens teilweise von der Anströmkante des Deflektors zu der Abströmkante des Deflektors erstreckt; bevorzugt
ferner umfassend eine Querwand (620), die sich von mindestens einer der einen oder der mehreren Wände erstreckt, wobei die Querwand sich entlang oder nahe der Abströmkante des Deflektors erstreckt.

12. Fluidflussturbinenschaufelbaugruppe nach einem der Ansprüche 1 bis 11, wobei der Deflektor Folgendes umfasst: zwei oder mehrere Abschnitte (201-A, 201-B, 201-C, 201-D, 201-E), wobei jeder Abschnitt mit einem angrenzenden Abschnitt durch einen Verbinder verbunden ist, der eine obere Platte (202-C) und eine untere Platte (202-B, 202-D, 202-F) umfasst, die benachbarte Enden des Abschnitts und des angrenzenden Abschnitts überlappen, und Befestigungselemente (202-P), die sich durch die obere und die untere Platte und Teile des Abschnitts und des angrenzenden Abschnitts erstrecken, die von der oberen und unteren Platte überlappt werden; und/oder
wobei der Deflektor eine zurückgebogene Profilmittellinie (226) aufweist, sodass ein Krümmungsmittelpunkt eines ersten Teils der zurückgebogenen Profilmittellinie sich auf einer stromabwärtigen Seite des Deflektors befindet und ein Krümmungsmittelpunkt eines zweiten Teils der zurückgebogenen Profilmittellinie sich auf einer stromaufwärtigen Seite des Deflektors befindet.

13. Fluidflussturbinenschaufelbaugruppe nach einem der Ansprüche 1 bis 12, wobei entlang mindestens einem Teil einer Spannweite des Deflektors, der sich zu einem Spitzenende (218) des Deflektors erstreckt, sowohl die Anströmkante des Deflektors als auch die Abströmkante des Deflektors näher zu dem ankommenden Fluss sind als sowohl die Anströmkante der Schaufel als auch die Abströmkante der Schaufel;
wobei bevorzugt an einem Nabenende (214) des Deflektors mindestens eine von der Anströmkante des Deflektors und der Abströmkante des Deflektors nicht näher zu dem ankommenden Fluss ist als mindestens eine von der Anströmkante der Schaufel und der Abströmkante der Schaufel;
wobei bevorzugt eine Distanz, um die der Deflektor näher an dem ankommenden Fluss ist als die Schaufel, von dem Nabenende des Deflektors zu dem Spitzenende des Deflektors kontinuierlich zunimmt.

14. Fluidflussturbinenschaufelbaugruppe nach einem der Ansprüche 1 bis 13, ferner umfassend eine Verbinderbaugruppe (261), die den Deflektor mit der Rotorschaufel verbindet.

15. Fluidflussturbinenschaufelbaugruppe nach Anspruch 14, wobei die Verbinderbaugruppe Folgendes umfasst:
ein Rohr (270);
einen Deflektorendflansch (271), der fest mit einem Ende des Rohrs und mit dem Deflektor verknüpft ist; und
einen Schaufelendflansch (272), der fest mit einem gegenüberliegenden Ende des Rohrs und mit der Rotorschaufel verknüpft ist;
wobei bevorzugt die Turbinenschaufelbaugruppe an einer Nabe (121) eines Rotors (110) angebracht ist, der um eine Rotordrehachse (123) drehbar ist, die Turbinenschaufelbaugruppe axial in Bezug auf die Rotordrehachse ausgerichtet ist und mindestens ein Teil des ankommenden Fluidflusses (1) parallel zu der Rotordrehachse ist, wobei ein erster Abschnitt des Rohrs eine aerodynamische Form definiert, die sich zu einer ersten Anströmkante (273) des ersten Abschnitts hin verjüngt und sich zu einer ersten Abströmkante (274) des ersten Abschnitts hin in Bezug auf den ankommenden Fluidfluss verjüngt, und ein zweiter Abschnitt des Rohrs eine aerodynamische Form definiert, die sich zu einer zweiten Anströmkante (276) des zweiten Abschnitts hin verjüngt und sich zu einer zweiten Abströmkante (278) des zweiten Abschnitts hin in Bezug auf den Fluidfluss verjüngt, der sich aus der Drehung des Rotors ergibt;
wobei bevorzugt der erste Abschnitt symmetrisch um eine Linie ist, die den ersten Abschnitt zwischen der ersten Anströmkante und der ersten Abströmkante halbiert, und der zweite Abschnitt symmetrisch um eine Linie ist, die den zweiten Abschnitt zwischen der zweiten Anströmkante und der zweiten Abströmkante halbiert.

16. Fluidflussturbinenschaufelbaugruppe nach Anspruch 15, umfassend zwei oder mehrere Verbinderbaugruppen, die jeweils an einer unterschiedlichen spannweitigen Position entlang der Turbinenschaufelbaugruppe angeordnet sind, und wobei das Rohr jeder Verbinderbaugruppe zwischen seinen gegenüberliegenden Enden so geformt ist, dass es an einen Bogen angepasst ist, der auf eine Drehachse der Fluidflussturbine zentriert ist und einen Radius aufweist, der der spannweitigen Position der Verbinderbaugruppe entspricht.

17. Fluidflussturbinenschaufelbaugruppe nach einem der Ansprüche 1 bis 16, wobei mindestens eines von einem Krümmungsradius und einer Bogenlänge des Teils der stromaufwärtigen Fläche, die die konkave Form aufweist, entlang mindestens einem Teil der Spannweite des Deflektors variiert.

18. Fluidflussturbinenschaufelbaugruppe nach einem der Ansprüche 14 bis 16, wobei die Verbinderbaugruppe den Deflektor mit der Rotorschaufel so verbindet, dass ein Angriffswinkel des Deflektors in Bezug auf eine Rotordrehebene fest ist oder so, dass der Angriffswinkel des Deflektors in Bezug auf die Rotordrehebene variabel ist.

19. Fluidflussturbinenschaufelbaugruppe nach Anspruch 14, wobei die Verbinderbaugruppe eine Verbinderbaugruppe mit variablem Winkel (261-E) umfasst, die den Deflektor mit der Rotorschaufel so verbindet, dass ein Angriffswinkel des Deflektors in Bezug auf die Rotordrehebene variabel ist, und wobei die Verbinderbaugruppe mit variablem Winkel Folgendes umfasst:
einen Holm (270-H), der ein erstes Ende, das an einer inneren Struktur innerhalb der Rotorschaufel befestigt ist, und ein zweites Ende, das schwenkbar mit dem Deflektor verbunden ist, aufweist;
eine flexible Welle (566), die Folgendes aufweist: ein erstes Ende, das im Inneren der Rotorschaufel zur axialen Bewegung in Bezug auf die Längsachse der flexiblen Welle getragen wird, und ein zweites Ende, das schwenkbar mit dem Deflektor in einer Position (563) verbunden ist, die von einer Position (262) beabstandet ist, in der das zweite Ende des Holms schwenkbar mit dem Deflektor verbunden ist; und
ein flexibles Wellenstellglied, das mit dem ersten Ende der flexiblen Welle dazu gekoppelt ist, eine axiale Bewegung der flexiblen Welle zu bewirken;
wobei bevorzugt das flexible Wellenstellglied Folgendes umfasst:
eine Führungsrohrbaugruppe (690), die innerhalb der Rotorschaufel angeordnet ist, die Führungsrohrbaugruppe umfassend ein Führungsrohrgehäuse (692), das ein Führungsloch (685) aufweist, innerhalb dem das erste Ende der flexiblen Welle getragen wird, und ein Führungsrohr (680), das innerhalb des Führungslochs bewegbar ist, wobei das erste Ende der flexiblen Welle mit einem Ende des Führungsrohrs gekoppelt ist;
eine Antriebsschraube (656, 656-A, 656-B, 656-C, 656-D), die sich in ein in dem Führungsrohr ausgebildetes Loch erstreckt;
eine Gewindemuffe (670), die mit der Antriebsschraube gekoppelt ist, sodass eine Drehung der Antriebsschraube eine entsprechende axiale Bewegung der Muffe entlang einer Länge der Antriebsschraube veranlasst, wobei die Muffe mit dem Führungsrohr gekoppelt ist, sodass die axiale Bewegung der Muffe an das Führungsrohr übertragen wird, um eine axiale Bewegung des Führungsrohrs innerhalb des Führungslochs zu veranlassen, was eine entsprechende axiale Bewegung der flexiblen Welle veranlasst; und
einen Motor (650), der mit der Antriebsschraube dazu gekoppelt ist, eine angetriebene Drehung der Antriebsschraube zu bewirken;
wobei bevorzugt der Motor mit der Antriebsschraube durch einen rechtwinkligen Antrieb (655, 655-A, 655-B, 655-C, 655-D) gekoppelt ist, der eine von dem Motor erzeugte Wellen-(652)drehung in eine erste Richtung überträgt, um die Antriebsschraube zu drehen, und in eine zweite Richtung überträgt, um eine Antriebswelle (660, 652-A, 652-B, 652-C, 652-D) zu drehen, um eine Drehung auf ein flexibles Wellenstellglied einer anschließenden Verbinderbaugruppe mit variablem Winkel zu übertragen.

20. Fluidflussturbinenschaufelbaugruppe nach einem der Ansprüche 1 bis 19, wobei der Deflektor sich spannweitig entlang einer gesamten Spannweite der Rotorschaufel erstreckt, die den Fußabschnitt und den Arbeitsabschnitt beinhaltet; und/oder
wobei der Deflektor von der Anströmkante des Deflektors zu der Abströmkante des Deflektors eine nicht einheitliche Dicke zwischen der stromaufwärtigen Fläche und der stromabwärtigen Fläche aufweist; und/oder
wobei mindestens ein Teil der Abströmkante des Deflektors einen gekrümmten Abschnitt (219) mit abnehmender Sehnenlänge zwischen der Anströmkante des Deflektors und der Abströmkante des Deflektors beinhaltet, wobei der gekrümmte Abschnitt sich zu einer Spitze des Deflektors erstreckt; oder
wobei mindestens ein Teil der Abströmkante des Deflektors einen bogenförmigen Abschnitt (231-D) mit zunehmender Sehnenlänge zwischen der Anströmkante des Deflektors und der Abströmkante des Deflektors beinhaltet, der sich zu einer Spitze des Deflektors erstreckt; wobei sich der bogenförmige Abschnitt zu einer Spitze des Deflektors erstreckt.

21. Fluidflussturbine, umfassend:
eine Nabe (121); und
einen Rotor (110), umfassend zwei oder mehrere der Turbinenschaufelbaugruppen nach einem der Ansprüche 1 bis 20, die mit der Nabe verbunden sind, wobei der Rotor um eine Rotordrehachse drehbar ist und jede Turbinenschaufelbaugruppe sich axial in Bezug auf die Rotordrehachse erstreckt.

22. Fluidflussturbine nach Anspruch 21, wobei die Rotordrehachse vertikal oder horizontal ausgerichtet ist; und/oder
umfassend mindestens drei der Turbinenschaufelbaugruppen, die mit der Nabe verbunden sind; und/oder
umfassend:
eine Gondel (138), wobei die Nabe durch die oder innerhalb der Gondel getragen wird; und
einen Turm (124), der die Gondel trägt; bevorzugt
ferner umfassend mindestens eines von einem Getriebe (126) und einem Generator (128) innerhalb der Gondel und betriebsfähig mit dem Rotor gekoppelt.

23. Fluidflussturbine nach Anspruch 21, wobei mindestens ein Teil des ankommenden Fluidflusses im Allgemeinen parallel zu der Rotordrehachse ist.

24. Hydroangetriebene Turbinen-(300)baugruppe, umfassend die Fluidflussturbine nach einem der Ansprüche 21 bis 23; oder
eine windangetriebene Turbinen-(100)baugruppe, umfassend die Fluidflussturbine nach einem der Ansprüche 21 bis 23.

## Revendications

1. Ensemble pale de turbine à écoulement de fluide comprenant :
une pale de rotor (111) comprenant une section d'emplanture (160) au niveau de laquelle la pale de rotor est fixée à un moyeu (121) d'une turbine à écoulement de fluide et une section active, dans lequel la section active présente un bord d'attaque (168) et un bord de fuite (174) et dans lequel la section active est configurée et orientée pour former une surface de pression (178) faisant face à l'écoulement de fluide entrant (1) incident sur la pale de rotor et une surface d'aspiration (182) ; et
un déflecteur (200) couplé à la pale de rotor et s'étendant dans le sens de l'envergure le long d'au moins une partie de la section active de la pale de rotor, dans lequel le déflecteur présente un bord d'attaque (208), un bord de fuite (212), une surface amont (204) faisant face à l'écoulement de fluide entrant, et une surface aval (206) orientée à l'opposé de l'écoulement de fluide entrant, dans lequel au moins une partie d'une corde s'étendant entre le bord d'attaque du déflecteur et le bord de fuite du déflecteur est disposée à l'extérieur d'un profil du déflecteur défini entre la surface amont du déflecteur et la surface aval du déflecteur, dans lequel au moins une partie de la surface amont le long d'au moins une partie d'une étendue (223) du déflecteur a une forme concave (230) dans une direction du sens de la corde, dans lequel le bord de fuite du déflecteur est situé à l'arrière du bord de fuite de la section active par rapport à une direction de déplacement de l'ensemble pale de turbine, et dans lequel un espacement (228) entre le déflecteur et la pale de rotor varie sur au moins une partie de l'envergure du déflecteur.

2. Ensemble pale de turbine à écoulement de fluide selon la revendication 1, dans lequel la section active de la pale est une section de profil aérodynamique (164) ou une section de profil hydrodynamique (364).

3. Ensemble pale de turbine à écoulement de fluide selon la revendication 1 ou 2, dans lequel au moins une partie de la surface amont a une forme convexe (238) dans une direction de la corde.

4. Ensemble pale de turbine à écoulement de fluide selon la revendication 3, dans lequel la partie de la surface amont ayant une forme concave s'étend jusqu'au bord de fuite du déflecteur ; ou
dans lequel la partie de la surface amont ayant une forme convexe s'étend jusqu'au bord d'attaque du déflecteur.

5. Ensemble pale de turbine à écoulement de fluide selon l'une quelconque des revendications 1 à 4, dans lequel, le long d'au moins une partie de l'envergure du déflecteur, le bord d'attaque du déflecteur est plus près de l'écoulement de fluide entrant que le bord de fuite de la pale de rotor ; de préférence,
dans lequel, le long d'au moins une partie de l'envergure du déflecteur, le bord de fuite du déflecteur est plus près de l'écoulement de fluide entrant que le bord de fuite de la pale de rotor.

6. Ensemble pale de turbine à écoulement de fluide selon l'une quelconque des revendications 1 à 4, dans lequel, le long d'au moins une partie de l'envergure du déflecteur, le bord d'attaque du déflecteur est plus éloigné de l'écoulement de fluide entrant que le bord de fuite de la pale de rotor ; de préférence,
dans lequel, le long d'au moins une partie de l'envergure du déflecteur, le bord de fuite du déflecteur est plus éloigné de l'écoulement de fluide entrant que le bord de fuite de la pale de rotor.

7. Ensemble pale de turbine à écoulement de fluide selon l'une quelconque des revendications 1 à 6, dans lequel le bord d'attaque du déflecteur est situé à l'arrière du bord de fuite de la section active par rapport à la direction de déplacement de l'ensemble pale de turbine.

8. Ensemble pale de turbine à écoulement de fluide selon l'une quelconque des revendications 1 à 7, dans lequel, au moins 25 à 90 % de la corde s'étendant entre le bord d'attaque du déflecteur et le bord de fuite du déflecteur sont disposés à l'extérieur du profil du déflecteur défini entre la surface amont du déflecteur et la surface aval du déflecteur.

9. Ensemble pale de turbine à écoulement de fluide selon la revendication 1, dans lequel, au moins 25 à 80 % de la corde s'étendant entre le bord d'attaque du déflecteur et le bord de fuite du déflecteur sont disposés à l'extérieur du profil du déflecteur défini entre la surface amont du déflecteur et la surface aval du déflecteur à une extrémité de pointe du déflecteur, et au moins 65 à 90 % de la corde s'étendant entre le bord d'attaque du déflecteur et le bord de fuite du déflecteur sont disposés à l'extérieur du profil du déflecteur défini entre la surface amont du déflecteur et la surface aval du déflecteur au niveau d'une extrémité de moyeu du déflecteur.

10. Ensemble pale de turbine à écoulement de fluide selon l'une quelconque des revendications 1 à 9, dans lequel une courbure dans le sens de l'envergure du bord d'attaque du déflecteur suit une courbure dans le sens de l'envergure du bord de fuite de la pale.

11. Ensemble pale de turbine à écoulement de fluide selon l'une quelconque des revendications 1 à 10, comprenant en outre une ou plusieurs parois (600) faisant saillie à partir d'au moins l'une de la surface amont et de la surface aval du déflecteur, dans lequel chaque paroi s'étend au moins partiellement du bord d'attaque du déflecteur au bord de fuite du déflecteur ; de préférence,
comprenant en outre une paroi transversale (620) s'étendant à partir d'au moins l'une des une ou plusieurs parois, dans lequel la paroi transversale s'étend le long du bord de fuite du déflecteur ou près de celui-ci.

12. Ensemble pale de turbine à écoulement de fluide selon l'une quelconque des revendications 1 à 11, dans lequel le déflecteur comprend deux sections ou plus (201-A, 201-B, 201-C, 201-D, 201-E), dans lequel chaque section est reliée à une section voisine par un connecteur comprenant une plaque supérieure (202-C) et une plaque inférieure (202-B, 202-D, 202-F) chevauchant des extrémités contiguës de la section et la section voisine et des fixations (202-P) s'étendant à travers les plaques supérieure et inférieure et les parties de la section et de la section voisine recouvertes par les plaques supérieure et inférieure ; et/ou
dans lequel le déflecteur présente une ligne de cambrure moyenne réflexe (226) de telle sorte qu'un centre de courbure d'une première partie de la ligne de cambrure moyenne réflexe est situé sur un côté aval du déflecteur et qu'un centre de courbure d'une deuxième partie de la ligne de cambrure moyenne réflexe est situé sur un côté amont du déflecteur.

13. Ensemble pale de turbine à écoulement de fluide selon l'une quelconque des revendications 1 à 12, dans lequel le long d'au moins une partie d'une envergure du déflecteur s'étendant jusqu'à une extrémité de pointe (218) du déflecteur, le bord d'attaque du déflecteur et le bord de fuite du déflecteur sont tous deux plus près de l'écoulement entrant que le bord d'attaque de la pale et le bord de fuite de la pale à la fois ; de préférence,
dans lequel au niveau d'une extrémité de moyeu (214) du déflecteur, au moins l'un du bord d'attaque du déflecteur et du bord de fuite du déflecteur n'est pas plus près du flux entrant qu'au moins l'un du bord d'attaque de la pale et du bord de fuite de la pale ; de préférence,
dans lequel une distance de laquelle le déflecteur est plus près de l'écoulement entrant que la pale augmente en continu de l'extrémité de moyeu du déflecteur jusqu'à l'extrémité de pointe du déflecteur.

14. Ensemble pale de turbine à écoulement de fluide selon l'une quelconque des revendications 1 à 13, comprenant en outre un ensemble connecteur (261) reliant le déflecteur à la pale de rotor.

15. Ensemble pale de turbine à écoulement de fluide selon la revendication 14, dans lequel l'ensemble connecteur comprend :
un tube (270) ;
une bride d'extrémité de déflecteur (271) liée de manière fixe à une extrémité du tube et au déflecteur ; et
une bride d'extrémité de pale (272) liée de manière fixe à une extrémité opposée du tube et à la pale de rotor ; de préférence,
dans lequel l'ensemble pale de turbine est fixé à un moyeu (121) d'un rotor (110) qui peut tourner autour d'un axe de rotation de rotor (123), l'ensemble pale de turbine est orienté de manière axiale par rapport à l'axe de rotation du rotor, et au moins une partie de l'écoulement de fluide entrant (1) est parallèle à l'axe de rotation du rotor, dans lequel une première section du tube définit une forme aérodynamique qui est effilée vers un premier bord d'attaque (273) de la première section et est effilée vers un premier bord de fuite (274) de la première section par rapport à l'écoulement de fluide entrant et une deuxième section du tube définit une forme aérodynamique qui est effilée vers un deuxième bord d'attaque (276) de la deuxième section et est effilée vers un deuxième bord de fuite (278) de la deuxième section par rapport à l'écoulement de fluide résultant de la rotation du rotor ; de préférence,
dans lequel la première section est symétrique autour d'une ligne divisant en deux la première section entre le premier bord d'attaque et le premier bord de fuite, et la deuxième section est symétrique autour d'une ligne divisant en deux la deuxième section entre le deuxième bord d'attaque et le deuxième bord de fuite.

16. Ensemble pale de turbine à écoulement de fluide selon la revendication 15, comprenant deux ensembles connecteur ou plus, chacun disposé dans une position différente dans le sens de l'envergure le long de l'ensemble pale de turbine, et dans lequel le tube de chaque ensemble connecteur est façonné entre ses extrémités opposées pour se conformer à un arc centré sur un axe de rotation de la turbine à écoulement de fluide et ayant un rayon correspondant à la position dans le sens de l'envergure de l'ensemble connecteur.

17. Ensemble pale de turbine à écoulement de fluide selon l'une quelconque des revendications 1 à 16, dans lequel au moins l'un d'un rayon de courbure et d'une longueur d'arc de la partie de la surface amont ayant la forme concave varie le long d'au moins une partie de l'envergure du déflecteur.

18. Ensemble pale de turbine à écoulement de fluide selon l'une quelconque des revendications 14 à 16, dans lequel l'ensemble connecteur relie le déflecteur à la pale de rotor de telle sorte qu'un angle d'attaque du déflecteur par rapport à un plan de rotation du rotor soit fixe ou de telle sorte que l'angle d'attaque du déflecteur par rapport au plan de rotation du rotor soit variable.

19. Ensemble pale de turbine à écoulement de fluide selon la revendication 14, dans lequel l'ensemble connecteur comprend un ensemble connecteur à angle variable (261-E) qui relie le déflecteur à la pale de rotor de telle sorte qu'un angle d'attaque du déflecteur par rapport à un plan de rotation du rotor soit variable, et dans lequel l'ensemble connecteur à angle variable comprend :
un longeron (270-H) ayant une première extrémité fixée à une structure interne à l'intérieur de la pale de rotor et une deuxième extrémité reliée de manière pivotante au déflecteur ;
un arbre flexible (566) ayant une première extrémité supportée depuis l'intérieur de la pale de rotor pour un mouvement axial par rapport à un axe longitudinal de l'arbre flexible et une deuxième extrémité reliée de manière pivotante au déflecteur dans une position (563) qui est espacée d'une position (262) dans laquelle la deuxième extrémité du longeron est reliée de manière pivotante au déflecteur ; et
un actionneur d'arbre flexible couplé à la première extrémité de l'arbre flexible pour effectuer un mouvement axial de l'arbre flexible ; de préférence,
dans lequel l'actionneur d'arbre flexible comprend :
un ensemble tube de guidage (690) disposé à l'intérieur de la pale de rotor, l'ensemble tube de guidage comprenant un logement de tube de guidage (692) ayant un trou de guidage (685) à l'intérieur duquel la première extrémité de l'arbre flexible est supportée et un tube de guidage (680) qui est mobile à l'intérieur du trou de guidage, dans lequel la première extrémité de l'arbre flexible est couplée à une extrémité du tube de guidage ;
une vis d'entraînement (656, 656-A, 656-B, 656-C, 656-D) s'étendant dans un trou formé dans le tube de guidage ;
un collier fileté (670) couplé à la vis d'entraînement de telle sorte que la rotation de la vis d'entraînement provoque un mouvement axial correspondant du collier le long d'une longueur de la vis d'entraînement, dans lequel le collier est couplé au tube de guidage de telle sorte que le mouvement axial du collier soit transmis au tube de guidage pour provoquer un mouvement axial du tube de guidage à l'intérieur du trou de guidage qui provoque un mouvement axial correspondant de l'arbre flexible ; et
un moteur (650) couplé à la vis d'entraînement pour effectuer une rotation motorisée de la vis d'entraînement ; de préférence,
dans lequel le moteur est couplé à la vis d'entraînement par un entraînement à renvoi d'angle (655, 655-A, 655-B, 655-C, 655-D) qui transmet à un arbre (652) la rotation générée par le moteur dans une première direction pour faire tourner la vis d'entraînement et dans une deuxième direction pour faire tourner un arbre d'entraînement (660, 652-A, 652-B, 652-C, 652-D) pour transmettre la rotation à un actionneur d'arbre flexible d'un ensemble connecteur à angle variable adjacent.

20. Ensemble pale de turbine à écoulement de fluide selon l'une quelconque des revendications 1 à 19, dans lequel le déflecteur s'étend dans le sens de l'envergure le long d'une envergure totale de la pale de rotor, incluant la section d'emplanture et la section active ; et/ou
dans lequel, du bord d'attaque du déflecteur au bord de fuite du déflecteur, le déflecteur présente une épaisseur non uniforme entre la surface amont et la surface aval ; et/ou
dans lequel au moins une partie du bord de fuite du déflecteur inclut une section incurvée (219) de longueur de corde décroissante entre le bord d'attaque du déflecteur et le bord de fuite du déflecteur, dans lequel la section incurvée s'étend jusqu'à une pointe du déflecteur ; ou
dans lequel au moins une partie du bord de fuite du déflecteur inclut une section en arc (231-D) de longueur de corde croissante entre le bord d'attaque du déflecteur et le bord de fuite du déflecteur s'étendant jusqu'à une pointe du déflecteur, dans lequel la section en arc s'étend jusqu'à une pointe du déflecteur.

21. Turbine à écoulement de fluide comprenant :
un moyeu (121) ; et
un rotor (110) comprenant deux ensembles pale de turbine ou plus selon l'une quelconque des revendications 1 à 20 reliés au moyeu, dans laquelle le rotor peut tourner autour d'un axe de rotation du rotor et chaque ensemble pale de turbine s'étend axialement par rapport à l'axe de rotation du rotor.

22. Turbine à écoulement de fluide selon la revendication 21, dans laquelle l'axe de rotation du rotor est orienté verticalement ou horizontalement ; et/ou
comprenant au moins trois des ensembles pale de turbine reliés au moyeu ; et/ou
comprenant :
une nacelle (138), dans laquelle le moyeu est supporté par la nacelle ou à l'intérieur de celle-ci ; et
une tour (124) supportant la nacelle ; de préférence,
comprenant en outre au moins l'un d'un multiplicateur (126) et d'un générateur (128) à l'intérieur de la nacelle et couplé fonctionnellement au rotor.

23. Turbine à écoulement de fluide selon la revendication 21, dans laquelle au moins une partie de l'écoulement de fluide entrant est généralement parallèle à l'axe de rotation du rotor.

24. Ensemble turbine hydraulique (300) comprenant la turbine à écoulement de fluide selon l'une quelconque des revendications 21 à 23 ; ou
un ensemble turbine éolienne (100) comprenant la turbine à écoulement de fluide selon l'une quelconque des revendications 21 à 23.
